(19) **Europäisches Patentamt / European Patent Office / Office européen des brevets**

(11) **EP 1 798 870 B1**

(12) # EUROPÄISCHE PATENTSCHRIFT

(45) Veröffentlichungstag und Bekanntmachung des Hinweises auf die Patenterteilung:
**09.03.2016 Patentblatt 2016/10**

(51) Int Cl.:
**H04B 7/08** (2006.01)

(21) Anmeldenummer: **06025580.9**

(22) Anmeldetag: **11.12.2006**

(54) **Empfangsanlage mit Gleichphasung von Antennensignalen**

Reception installation with phase alignment of antenna signals

Dispositif de réception avec mise en phase des signaux d'antenne

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.12.2005 DE 102005060060**
**06.12.2006 DE 102006057520**

(43) Veröffentlichungstag der Anmeldung:
**20.06.2007 Patentblatt 2007/25**

(73) Patentinhaber: **Delphi Delco Electronics Europe GmbH**
**42119 Wuppertal (DE)**

(72) Erfinder:
• **Lindenmeier, Stefan**
**82131 Gauting-Buchendorf (DE)**

• **Lindenmeier, Heinz**
**82152 Planegg (DE)**

(74) Vertreter: **Manitz, Finsterwald & Partner GbR**
**Postfach 31 02 20**
**80102 München (DE)**

(56) Entgegenhaltungen:
EP-A1- 1 274 210   EP-A2- 1 045 472
EP-A2- 1 126 631   US-A1- 2003 186 660

• Peter O'shea: "Phase Measurement", CRC Press LLC, 19 April 2006 (2006-04-19), XP055122488, Retrieved from the Internet: URL:http://etc.unitbv.ro/~olteanu/Tehnici de masurare in tc/Phase Measurement.pdf [retrieved on 2014-06-10]

EP 1 798 870 B1

**Beschreibung**

Die Erfindung betrifft eine Empfangsanlage für in der Frequenz modulierte, bzw. in der Phase modulierte Hochfrequenzsignale für Fahrzeuge mit einer Mehrantennenanlage 1 mit mindestens zwei Antennen Ant1, Ant2...AN, einer Schaltvorrichtung S1, S2, ...S4 für die Antennenauswahl, jeweils einem, im Empfangspfad der entsprechenden Antenne befindlichen, individuell einstellbaren Phasendrehglied Φ1, Φ2,.. ΦN und einer nach geschalteten Empfängerschaltung 2 zur Durchführung eines Verfahrens nach einem der unabhängigen Ansprüche.

Antennendiversityanlagen dieser Art werden bevorzugt für den UKW-Rundfunkempfang eingesetzt und sind z.B. aus der US 5,517,686, der US 4079318 sowie aus der DE 43 26 843 bekannt. Diese Diversitysysteme zielen darauf ab, durch gleichphasige Überlagerung zweier oder auch mehrerer Antennensignale ein größere Nutzsignal zu erzielen als mit einer Einzelantenne, um so im Gebiet mit Mehrwegeausbreitung die Wahrscheinlichkeit von Pegeleinbrüchen zu reduzieren. Damit ergibt sich im Summensignal ein in Bezug auf das Empfängerrauschen im Mittel günstigeres Signalrauschverhältnis.

In der US 5,517,686 wird die Gleichphasung von zwei Antennensignalen z.B. durch Verwendung einer Hilfsmodulation erzeugt. Hierzu wird eines der beiden Antennensignale in der Amplitude moduliert. Im Empfangspfad einer der beiden Antennen in der US 5,517,686 befindet sich ein steuerbares Phasendrehglied. Bei Überlagerung der beiden Signale im Empfänger verschwindet die durch die Hilfsmodulation erzeugte Frequenzmodulation im Summensignal nur dann, wenn die beiden Empfangsignale gleiche Phasen besitzen. Sind die beiden Phasen der überlagerten Antennensignale nicht gleich, dann ist das Summensignal zusätzlich in der Frequenz mit dem Ton der Hilfsmodulation moduliert. Mit Hilfe einer Regeleinrichtung wird der Ton der Hilfsmodulation im Frequenzdemodulator erfasst und das Phasendrehglied durch die Regelungen derart eingestellt, dass der Ton der Hilfsmodulation im Summensignal verschwindet und damit die beiden Antennensignale mit gleicher Phase überlagert werden. Dieses Verfahren nach dem Stand der Technik besitzt jedoch den wesentlichen Nachteil, dass den zu empfangenden Signalen ein Zusatzsignal in Form einer Hilfsmodulation aufgeprägt werden muss, um die Gleichphasung herbeizuführen. Aus Gründen der einfacheren Realisierbarkeit wird die Gleichphasung häufig in der Zwischenfrequenzebene des Empfängers durchgeführt. Nachteilig ist dabei der erhöhte technische Aufwand, welcher für jede Antenne einen gesonderten Antennentuner erzwingt. Ein Problem solcher Systeme besteht beim mobilen Empfang im Fahrzeug darin, dass bei einer Fahrt durch das Rayleigh-Empfangsfeld der Phasenregelkreis den sich ergebenden Phasenänderungen zur gleichphasigen Überlagerung der Signale im Summationsglied nicht mehr folgen kann und in der Folge davon das Signal der Hilfsmodulation als unerwünschte Signal im Summensignal Störungen hervorrufen kann. Insbesondere bei solchen Systemen, welche in Bezug auf unerwünschte Fremdsignale im Hinblick auf eine treue Wiedergabe der Basisbandsignale im Empfänger empfindlich sind, kann deshalb eine Hilfsmodulation nicht eingesetzt werden. Dies trifft insbesondere auch auf mobile Systeme mit digital modulierten Signalen nach dem MPSK-Verfahren zu, wie z.B. auf moderne Rundfunk-Satelliten-Empfangs-Systeme.

Aus der EP 1 045 472 A2 und der EP 1 126 631 A2 ist eine Empfangsanlage für frequenzmodulierte bzw. in der Phase modulierte Hochfrequenzsignale für Fahrzeuge mit einer Mehrantennenanlage mit mindestens zwei Antennen bekannt, mit jeweils einem, im Empfangspfad der entsprechenden Antenne befindlichen, individuell einstellbaren Phasendrehglied und einer nachgeschalteten Empfängerschaltung, wobei im Empfangspfad jeder Antenne ein individuell einstellbares Schaltelement zur Durchschaltung bzw. Unterbrechung des Signalflusses vorhanden ist und die über die Phasendrehglieder und die einstellbaren Schaltelemente geleiteten Empfangssignale einer linearen Kombinationsschaltung zugeführt sind.

Die US 2003/186660 A1 offenbart einen Diversityempfänger, der einen einzustellenden Phasenunterschied mit Hilfe eines Phasendetektors ermittelt.

Die EP 1 274 210 A1 offenbart einen Diversityempfänger mit einem Algorithmus, der einen einzustellenden Phasenunterschied mittels zeitlich aufeinander folgender unterschiedlich definierter Einstellungen der Phasendrehglieder und die gemessenen Pegelverhältnisse berechnet.

Der Erfindung liegt die Aufgabe zugrunde, Verfahren und eine Vorrichtung zur Durchführung der Verfahren zu schaffen, mit denen mit einfachen Mitteln auf schnelle Art und Weise eine Gleichphasung von Mehrantennensignalen erreicht werden kann.

Die Lösung dieser Aufgabe erfolgt durch die Merkmale der unabhängigen Verfahrensansprüche sowie durch eine Vorrichtung nach Anspruch 4.

Mit Hilfe der erfindungsgemäßen Empfangsanlage ergeben sich u. a. die folgenden Vorteile:

- Es wird für die Diversityfunktion für jeden Funkkanal nur ein Tuner im Empfänger benötigt. Das Verfahren zeichnet sich durch besondere Wirtschaftlichkeit aus.
- Datenverluste, welche durch Änderung der Phasenstellungen an den Einzelantennen insbesondere in BPSK-, QPSK-, MPSK- und FM-Systemen und anderen Übertragungssystemen mit Signalübertragung über Frequenz- bzw. Phasenauswertung entstehen könnten, werden durch die hier vorgeschlagene Form der Phasenregelung verhindert.

- Für das vorgeschlagene Diversityverfahren ist eine Übertragung von Signalen mit einer Referenzphase nicht nötig.
- Bei digitaler Modulation wie zum Beispiel nach dem BPSK-, QPSK-, MPSK-verfahren ist eine Synchronisation der Steuerung des Vorgangs zur Gleichphasung mit der Datenstruktur nicht nötig. Viel mehr genügt es, aus dem Empfänger eine aktuelle Pegelinformation zu entnehmen oder die Pegelinformation nahe den Antennen aus den Antennensignalen zu erzeugen. Die oft komplizierte Bereitstellung des Symboltakts beziehungsweise des Datenrahmensignals aus dem Basisband-Signalprozessor kann dabei entfallen. D.h. es entsteht kein Entwicklungsaufwand für die Bereitstellung von Empfängern, welche mit der erfindungsgemäßen Diversityschaltung ausgestattet werden können. Somit muss kein Taktsignal vom Empfänger zur Diversityschaltung oder in umgekehrter Richtung gesendet werden, die Diversityschaltung kann mit geringem Hardware-Aufwand realisiert werden und der Steueralgorithmus kann rückkopplungsfrei gehalten werden.
- Bei mehreren Funkkanälen kann für jeden Funkkanal getrennt der Empfangspegel durch phasenrichtige Überlagerung der Antennensignale maximiert werden.

Diversity-Empfangsanlagen für ein Satelliten-Empfangs-System sind bekannt aus der DE 10206385. Dort wird die Umschaltung der Antennen mit dem Takt der Datensignale synchronisiert, wodurch die Aktualisierung der Referenzphase stets gegeben ist. Bei einer Empfangsanlage gemäß der vorliegenden Erfindung sind diese Taktsignale für die Steuerung des Diversity-Prozesses in vorteilhaft wirtschaftlicher Weise nicht notwendig.

Die Erfindung wird im Folgenden anhand der Figuren näher beschrieben. Es zeigen:

Fig. 1:
Erfindungsgemäße Empfangsanlage mit einer Mehrantennenanlage 1 mit Antennen Ant1, Ant2,..Ant4, Schaltelementen S1, S2.., Phasendrehglieder Φ1, Φ2.., einer Kombinationsschaltung 5 zur Summation der Empfangssignale E1, E2... und einer nach geschalteten Empfängerschaltung 2 mit HF-ZF-Teil 12 und Pegelindikator 6 zur Anzeige des Pegels des Empfangssignals 14. In der Rechnereinrichtung 7 werden die Phasenstellsignale 9 an Hand der Pegel 4 in der Weise aktualisiert, dass im kombinierten Signal 14 die Empfangssignale E1,..E4 mit gleicher Phase überlagert sind.

Fig. 2:

a) oben: Verlauf der Phasen der Empfangs-Signale in 45 Grad-Schritten von zwei auf einem Fahrzeug montierten Antennen Ant1 und Ant2 in Abhängigkeit von der zurückgelegten Wegstrecke im Mehrwegeausbreitungs-Empfangsfeld, bezogen auf die Wellenlänge $\lambda$.

b) unten: Verlauf der Amplituden der Empfangssignale der Antennen Ant1 und Ant2 in Fig. a) sowie der Verlauf des zu jedem Zeitpunkt größeren dieser Signale (Div), ausgewählt nach einem einfachen Pegel-Kriterium zur Veranschaulichung der Pegelschwankungen über kurze Fahrstrecken. Das angegebene Raster von $\lambda/20$ zeigt die Konstanz der Pegelverhältnisse über die kurzen, zwischen den Rastermarkierungen liegenden Wegstrecken.

Fig. 3:

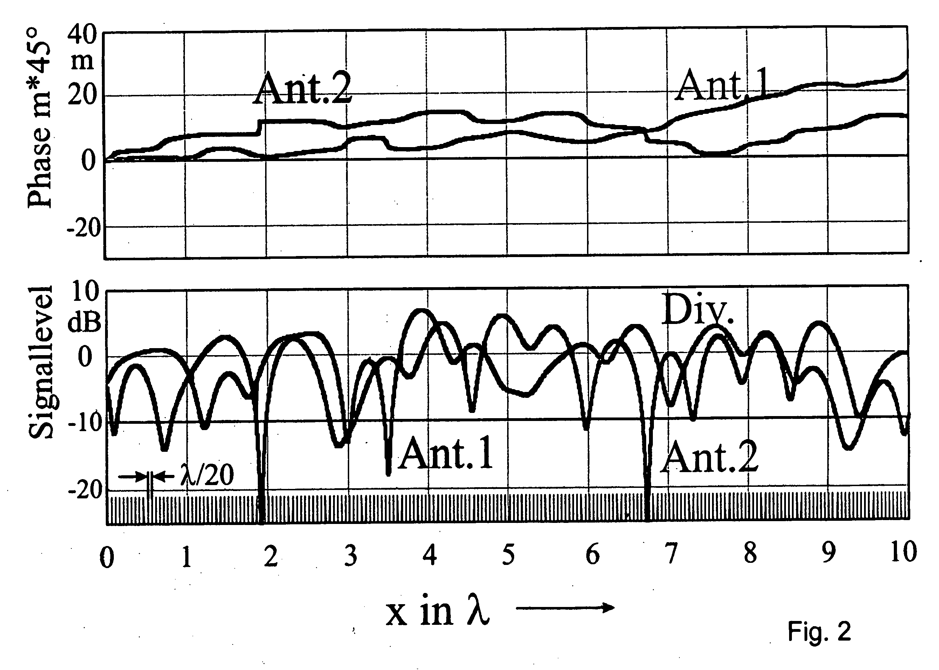

a) Darstellung des Verlaufs der komplexen Amplitude des Empfangssignals E1 der Antenne Ant1 in Fig. 2 in der komplexen Ebene in Abhängigkeit von der zurückgelegten Wegstrecke im Rayleigh-Empfangsfeld bei senderseitiger Ausstrahlung eines Hochfrequenzträgers mit konstanter Phase.

b) Entsprechender Verlauf der komplexen Amplitude des Empfangssignals E2 der Antenne Ant2 auf demselben Fahrzeug wie unter a) entsprechend Fig. 2.

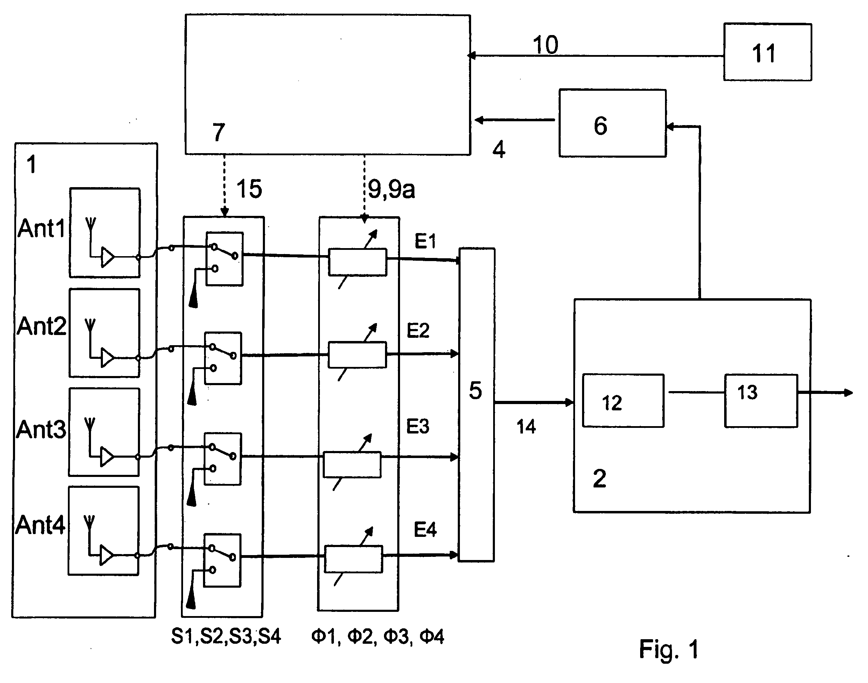

Fig. 4:
Kombinierte Empfangsanlage ähnlich wie in Fig. 1, jedoch für das Beispiel des koordinierten Empfangs von drei gleichzeitig ausgestrahlten, digital modulierten Satellitenfunksignalen nach dem Q-PSK-Verfahren in benachbarten Hochfrequenzbändern der gleichen HF-Kanalbandbreite B jeweils desselben, aber ggf. durch Laufzeit versetzten Signalinhalts.

Fig. 5:

a) Empfangsanlage wie in Fig. 1, jedoch mit einer durch einen serienmäßig hergestellten Empfänger gebildeten Empfängerschaltung 2 und einer davon getrennten Diversityeinheit 26 mit einem darin befindlichen gesonderten HF-ZF-Teil 12 für das zu empfangende Funksignal, dem Pegelindikator 6, der Rechnereinrichtung 7 sowie den Schaltelementen S1, S2.. und den Phasendrehgliedern Φ1, Φ2.. mit Kombinationsschaltung 5.

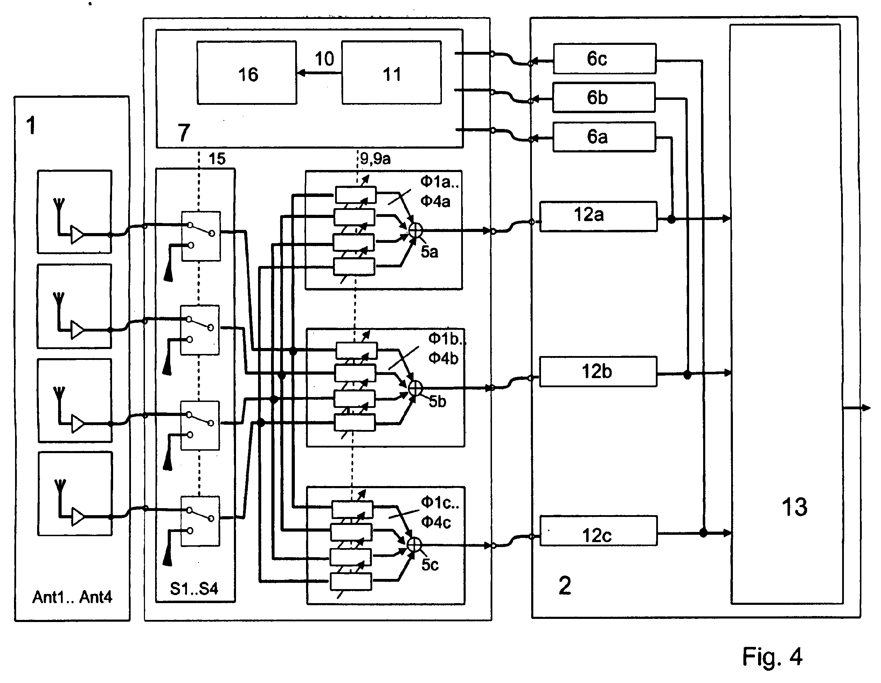

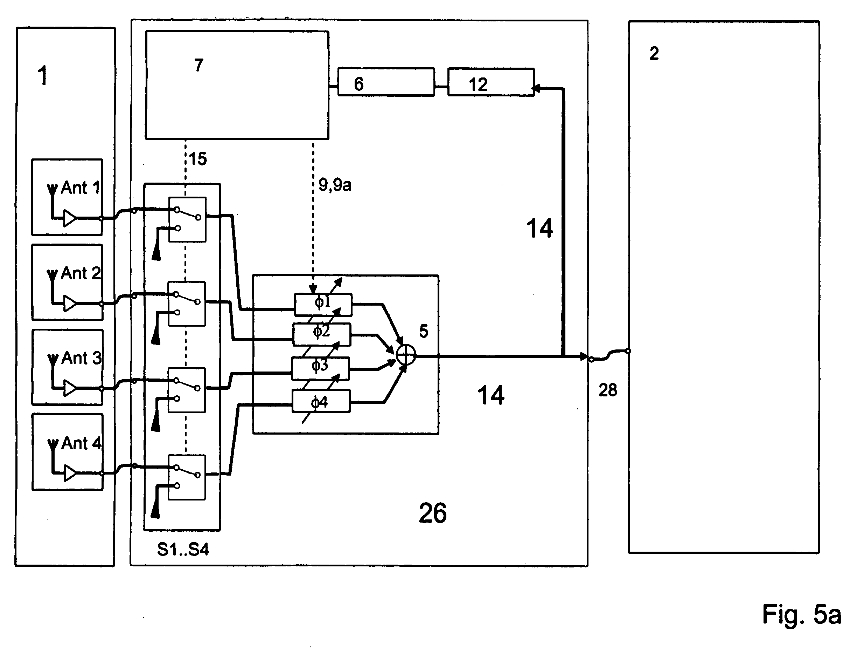

b) Kombinierte Empfangsanlage wie in Fig. 4, jedoch mit einer wie in Fig. 5a von der Empfängerschaltung 2 getrennten Diversityeinheit 26 mit darin befindlichen gesonderten HF-ZF-Teilen 12 a,b für die beiden Satelliten Funksignale, den Pegelindikatoren 6 a,b, der Rechnereinrichtung 7 sowie der Schaltelemente S1, S2.. und den Phasendrehgliedern Φ1, Φ2.. mit Kombinationsschaltung 5 und serienmäßiger Empfängerschaltung 2.

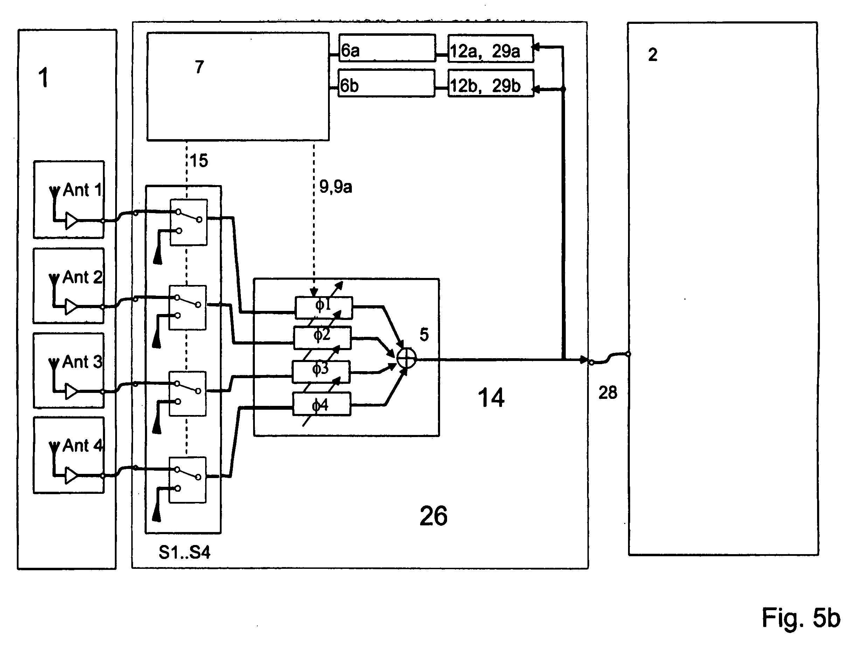

Fig. 6:
Kombinierte Empfangsanlage wie in Fig. 5b, jedoch mit einem Mehrkanal-Frequenzumsetzer 22 zur gemeinsamen Frequenzumsetzung der beiden Satelliten Signale in eine niedrige Frequenzebene mit nachgeschalteten Bandpässen 23a,b zur Trennung dieser Signale und getrennten Pegelindikatoren 6a, b

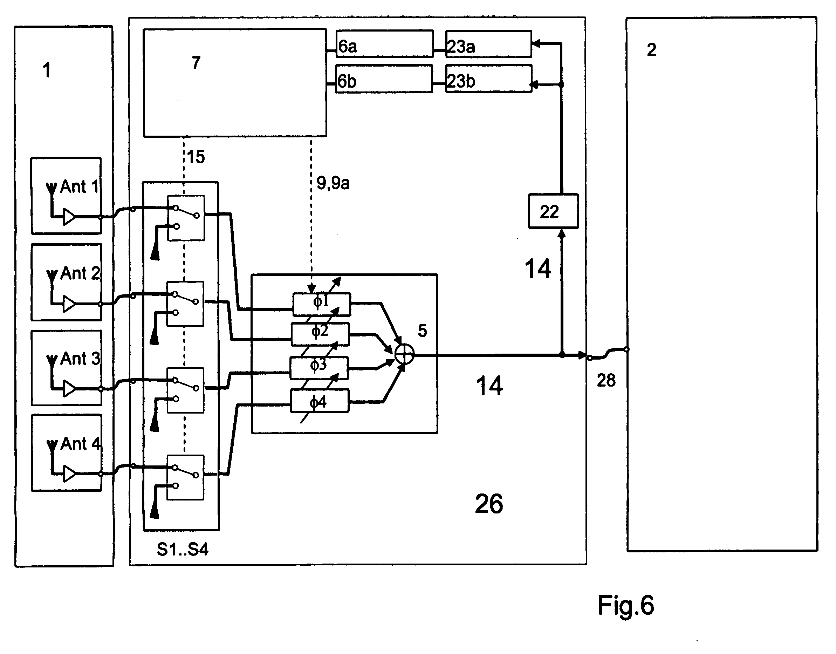

Fig. 7:
Kombinierte Empfangsanlage wie in Fig. 6, jedoch mit einem steuerbaren Monokanal-Frequenzumsetzer 24 zur alternativen Einstellung auf die Frequenz jeweils eines der primärseitig vorhandenen Satelliten Empfangssignale und Umsetzung in die niedrige Frequenzebene des Bandpasses 23 mit der Hilfe der in der Rechnereinrichtung 7 erzeugten Kanalwahlsignale 25a bzw. 25b

Fig. 8:
Kombinierte Empfangsanlage wie in Fig. 5b, jedoch mit einer modifizierten serienmäßigen Empfängerschaltung 2 mit einem Mikroprozessor 18 zur Erzeugung von Taktsignal 27 und Steuerung eines getakteten Pegelprüfumschalters 17 zur gesonderten Feststellung des betreffenden Pegels mit dem Pegelindikator 6. Der Mikroprozessor 18 übernimmt Teilaufgaben der Rechnereinrichtung 7 und sendet Digitalsignale 19 über die Frequenzweichen 21 und die Empfängerleitung 28 an eine in der getrennten Diversityeinheit 26 befindlichen einfachen Schaltlogik 20 zur Erzeugung der Phaseneinstellsignale 9 und der Schalterstellsignale 15.

Fig. 9:
Symboltakt eines MPSK-Datenstrom für das Beispiel eines Funkkanals mit der Bandbreite B = 4MHz und einer Symboldauer $T_{sp}$, der eine Pegelprüfzeit $T_p \leq 1/B$ entspricht. Der Aktualisierung der Gleichphasung nach jeweils $\lambda/20$ bei einer Fahrgeschwindigkeit von etwa 100 km/h entspricht ein Pegelprüfzyklus-Zeitabstand $T_z$ von etwa 250 μs bei einer HF-Trägerfrequenz von 2,3 GHz.

Fig. 10:

a) Zusammenhang zwischen dem Phasenunterschied $\alpha_i$ und den Phasenunterschieden zwischen den Antennensignalen

b) Zusammenhang zwischen dem Phasenunterschied $\alpha_i$ und $A_i$, der Amplitude des Antennensignals $E_i$, $A_s$, der Amplitude des Summensignals $E_s$ aller übrigen Antennensignale und $A_{norm}$, der Amplitude des Summensignals $E_{norm}$ aller Antennensignale.

Fig.11:

a) Teststellung 1; b) Teststellung 2; c) Teststellung 3

Fig. 12:
Zusammenhang zwischen den Phasenunterschieden $\alpha_i$ und $\varphi_{is}$ sowie $A_i$, der Amplitude des Antennensignals $E_i$, $A_s$, der Amplitude des Summensignals $E_s$ aller übrigen Antennensignale und $A_{norm}$ , der Amplitude des Summensignals $E_{norm}$ aller Antennensignale.

Fig.13:
Empfangsanlage wie Fig. 5a, jedoch mit Vorauswahl kombinierbarer Antennen mit dem Ziel der Einsparung von Phasendrehgliedern Φ1, Φ2.., wobei nur das Summensignal aus den Antennensignalen mit den größten Empfangspegeln jeweils aus den Paaren 1-2 und 3-4 gebildet wird.

Fig.14:
Empfangsanlage wie Fig. 5a, jedoch mit Reduzierung des Aufwands auf 2 Phasendrehglieder Φ1, Φ2 mit Schaltern zur Ermöglichung der Bildung aller möglichen Kombinationen aus den vorhandenen Antennensignalen und anschließender Auswahl der beiden Antennensignale mit den größten Empfangspegeln zur Gleichphasung und Summation.

Fig.15:
Empfangsanlage wie Fig. 5b, jedoch mit Kanalwahl-Schalter 30 zur Einsparung von Pegeldetektoren 6

Fig.16:
Empfangsanlage wie in Fig. 6, jedoch mit Kanalwahl-Schalter 30 zur Einsparung von Pegeldetektoren 6

Fig.17:
Empfangsanlage wie in Fig. 6, jedoch mit einer digitalen Rechnereinrichtung 7 mit eingangsseitigem AD-Wandler zur digitalen ZF-Signalverarbeitung und Pegelbewertung

Fig. 18:
Vergleich des Verlaufs der Amplituden der QPSK-Empfangssignale am Empfängereingang über der Fahrstrecke mit einer Rasterung von λ bei Verwendung von zwei Antennen in verschiedenen Szenarien.

Kurve 1): Empfangsanlage nach der Erfindung bei Verwendung von Phasendrehgliedern Φ1, Φ2.. mit diskreten Phasendrehwinkeln von 90° (Auflösung A=1).

Kurve 2): Empfangsanlage nach der Erfindung bei Verwendung von Phasendrehgliedern Φ1, Φ2.. mit diskreten Phasendrehwinkeln von 45° (Auflösung A=2).

Kurve 3): Empfangsanlage nach der Erfindung bei idealer Gleichphasung der beiden Antennensignale (A = unendlich).

Kurve 4): Empfangsanlage nach der Erfindung bei Auswahl des jeweils aktuell größeren der beiden Antennensignale, das heißt ohne Summenbildung. Gleich dem Pegelverlauf im Fall von Schaltdiversity.

Kurven 5): getrennte Darstellungen der Pegel der beiden Antennensignale.

Fig. 19:

Verlauf der Abweichung von der Sollphase der QPSK-Empfangssignale am Empfängereingang über der Fahrstrecke mit einer Rasterung von λ/200 bei Verwendung von zwei Antennen bei unterschiedlichen Auflösungen A der Phasenwinkel

a) Phasendrehglieder Φ1, Φ2.. mit 90° Phasenauflösung (A =1)

b) Phasendrehglieder Φ1, Φ2.. mit 45° Phasenauflösung (A = 2)

Fig. 20:

Grundprinzip zur eindeutigen Ermittlung des für die Gleichphasung benötigten Phasenwinkels $\alpha i$ aus den Amplituden $A_{t1}$.. $A_{t4}$ der Empfangssignale bei verschiedenen Teststellungen t1..t4:

a) Ermittlung des Phasenwinkels $\alpha i$ der Größe nach $A_{t1}$ = komplexe Summe aus $A_i$ und $A_s$, $A_{t2} = A_i$, $A_{t3} = A_s$. Zwei Fallmöglichkeiten bei gleichgroßem Betrag des Winkels $\alpha i$

b) Drehung der Phase des Signals $A_i$ um + 90° und Bildung der Summe aus diesem Signal mit $A_s$, ermöglicht die Bestimmung des Vorzeichens des Winkels $\alpha_i$ aus der sich ergebenden Amplitude $A_{t4}$ des Summensignals.

In Fig. 1 ist eine Empfangsanlage nach der Erfindung mit einer Mehrantennenanlage 1 mit Antennen Ant1, Ant2.. dargestellt. Der Grundgedanke der vorliegenden Erfindung ist die rechnerische Ermittlung von Phasenunterschieden zwischen aktuellen komplexen Amplituden der Hochfrequenzträger der unterschiedlichen Empfangssignale E1, E2.. der Antennen. Dies setzt voraus, dass sich der Funkübertragungskanal während des Vorgangs der Gleichphasung hinreichend wenig ändert, so dass die Amplituden der Hochfrequenzträger in den Empfangssignalen während des Abgleichs der Gleichphasung ausreichend konstant sind. Somit scheiden auch solche Modulationsverfahren für die Anwendung der gegenwärtigen Erfindung aus, bei welchen aufgrund der Modulation rasche Amplitudenänderungen auftreten, so dass während des Abgleichs der Gleichphasung die Amplitude des übertragenen Hochfrequenzträgers nicht hinreichend konstant bleibt. Nach Kenntnis der Phasenunterschiede werden Phasendrehglieder Φ1, Φ2.. in der Weise eingestellt, dass die entsprechenden Signale mit gleicher Phase überlagert werden.

Die Empfangssignale werden über Schaltelemente S1, S2.. jeweils über entsprechende Phasendrehglieder Φ1, Φ2.., einer Kombinationsschaltung 5 zur Summation der Empfangssignale E1, E2... zugeführt. Die Schaltelemente S1, S2.. sind in der Weise gestaltet, dass sie das entsprechende Signal entweder zum entsprechenden Phasendrehglied Φ1, Φ2.., durch schalten oder es jeweils vollkommen wegschalten. Der Grundgedanke der vorliegenden Erfindung besteht in der rechnerischen Ermittlung von Phasenunterschieden zwischen unterschiedlichen Hochfrequenzsignalen nur aus deren Amplitudenbeträgen und der anschließenden Gleichphasung und positiven Überlagerung der Antennensignale. In einer einfachen Grundform des angewandten Algorithmus werden zur Gleichphasung von zwei Empfangssignalen E1, E2 durch kurze Pegelmessproben 8 mit dem Pegelindikator 6 die zugehörigen momentanen Amplituden A1 und A2 der Empfangssignale E1, E2 nacheinander festgestellt. Bei diesem Vorgang ist jeweils nur das entsprechende Schaltelement S1 bzw. S2 auf Durchlass geschaltet. Alle übrigen Schaltelemente sind geöffnet. Die gemessenen Empfangspegel werden in der Rechereinrichtung 7 zunächst gespeichert. Anschließend wird durch eine ebenfalls kurze Pegelmessprobe 8 das kombinierte Signal 14 als Überlagerung der beiden Empfangssignale E1, E2 am Ausgang der Kombinationsschaltung 5 erfasst und ebenfalls in der Rechereinrichtung 7 abgelegt. Aus den drei gemessenen Werten wird der Phasenunterschied zwischen den beiden Empfangssignalen, wie nachfolgend beschrieben, bis auf das Vorzeichen rechnerisch ermittelt. Durch Einstellung der Phasendrehglieder Φ1 und Φ2 durch ein entsprechendes, in der Rechnereinrichtung 7 erzeugtes Phaseneinstellsignal 9a und bei Einstellung der Schaltelemente S1 und S2 auf Durchlass durch entsprechende Schalterstellsignale 15 werden die Empfangssignale E1 und E2 in der Kombinationsschaltung 5 dann mit gleicher Phase überlagert, wenn das richtige Vorzeichen des Phasenunterschieds gewählt wurde. Die Gegenprobe mit umgekehrten Vorzeichen des Phasenunterschieds und der Vergleich der dabei im kombinierte Signal 14 festgestellten Amplituden, führt zur richtigen Einstellung der Phasendrehglieder für gleichphasige Überlagerung der Empfangssignale E1 und E2, so dass der Empfängerschaltung 2 nach Ablauf des Gleichphasungs-Vorgangs die maximale Amplitude der Überlagerung der beiden Empfangssignale E1 und E2 zugeführt ist. Die Gleichphasung eines weiteren Empfangssignals E3 kann auf analoge Weise erfolgen, indem zunächst der Pegel des kombinierten Signals festgestellt und in der Rechnereinrichtung 7 abgelegt wird. Durch Öffnen der Schaltelemente S1 und S2 und durch Schließen des Schaltelements S3 wird an Hand einer kurzen Pegelmessprobe 8 zunächst die Amplitude A3 ermittelt und im Speicher der Rechnereinrichtung 7 abgelegt, um anschließend bei geschlossenen Schaltelementen S1 und S2 und S3 den Pegel des dabei auftretenden neu kombinierten Signals 14 festzustellen. An Hand des Pegels des vorangegangenen kombinierten Signals 14, des Empfangssignals E3 sowie des neuen kombinierten Signals 14 wird dann auf analoge Weise die Gleichphasung des Empfangssignals E3 mit den beiden bereits gleich gephasten Empfangssignalen E1 und E2 herbeigeführt. Dieses Verfahren lässt sich analog zur Gleichphasung beliebig vieler N weiterer Empfangssignale EN von N Antennen AntN anwenden.

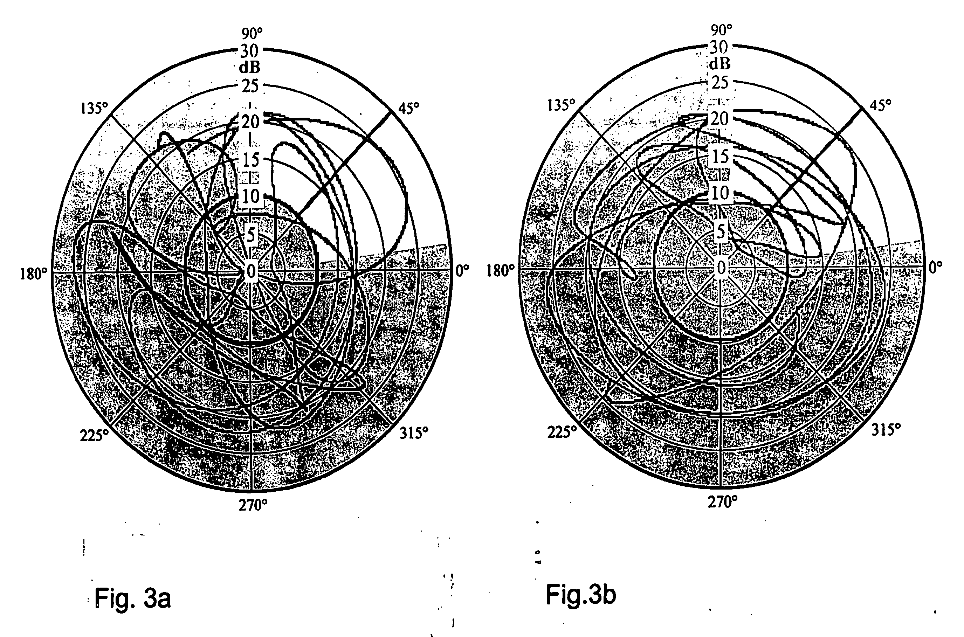

Es ist bekannt, dass der Datenstrom jeder digitalen Signalübertragung zur Synchronisation der Übertragung auch als "Burst-Signale" oder als "Rahmendaten" bezeichnete Signale enthält, welche gemäß dem entsprechenden Standard festgelegt sind und wiederholend im zeitlichen Abstand der Rahmenperiode TR gesendet werden. Im Burst-Signal sind Symbole enthalten, welche die Referenzphase zur empfängerseitigen Phasensynchronisation des Systems enthalten. Insbesondere um die sichere Synchronisation auf den Symboltakt auch bei hohen Geschwindigkeiten sicher zu stellen, ist sowohl die Rahmenfrequenz als auch die zeitliche Dauer TB des Burst-Signals angemessen groß gewählt. Die empfängerseitige Detektion der in den gesendeten Nutzsymbolen enthaltenen Trägerphasen kann nur dann gesichert stattfinden, wenn das Nutz-Störverhältnis hinreichend groß ist und das System durch die Burst-Signale auf den Symboltakt synchronisiert und die Referenzphase eingestellt ist. Ein grundsätzliches Problem ergibt sich jedoch aus dem Sachverhalt, dass sowohl die Amplitude als auch die Trägerphase des Empfangssignals in einem durch Mehrwegeausbreitung gestörten Empfangsfeld über der Fahrstrecke sehr stark schwankt. Diese Schwankungen führen zu Fehldetektionen der Symbole führen, wenn z. B. bei einem 4PSK-System der Fehlphasenhub nicht kleiner ist als $\pm\,\pi/4$. In Fig. 2a ist der Phasenverlauf der Empfangssignale in Vielfachen von $\pi/4$ von zwei Antennen Ant1 und Ant2 über der Wegstrecke in ($\lambda/20$)-Schritten aufgetragen. Zum Vergleich hierzu sind in Fig. 2b die zugehörigen Pegelverläufe dargestellt. Werden permanent Symbole mit gleich bleibender Phase - z.B. im Phasenzustand $\pi/4$ - aneinander, gereiht ausgesendet, dann ergibt sich empfängerseitig jeweils ein Hochfrequenzträger mit dem in den Polardiagrammen beispielhaft in den Fig.en 3a bzw. 3b dargestellten stochastischen Phasen- und Amplitudenverlauf bei Verwendung jeweils einer der beiden Antennen Ant1 und Ant2 im bewegten Fahrzeug. Damit ist gezeigt, dass sich die beiden dargestellten Phasen- und Amplitudenverläufe des Empfangssignals E1 in Fig 3a bzw. E2 in Fig. 3b in Abhängigkeit von der im bewegten Fahrzeug im Rayleigh-Empfangsfeld zurückgelegten Wegstrecke stochastisch völlig voneinander unterscheiden. Beim Empfang mit nur jeweils einer der beiden Antennen erhält der Empfänger mit den Burst-Signalen in Zeitabständen TR die Referenzphase zur richtigen Detektion der darauf folgenden Symbole mitgeteilt. Ein solches, auf nur ein Antennensignal angewiesenes System ist jedoch störungsanfällig und verliert beim Durchfahren eines Gebiets mit Pegelschwund im Rayleigh-Empfangsfeld solange die richtige Referenzphase, bis wieder ein Burst-Signal mit Referenzphase empfangen wird, welches nicht dem Pegelschwund unterliegt. Besonders nachteilig ist es dabei, dass bei daraus resultierender zu hoher Bitfehlerrate die Redundanz des Systems oft nicht ausreicht, das System desynchronisiert und selbst bei Nachlassen des Pegelschwunds ein längerer Resynchronisationsvorgang mit Datenverlust im Empfänger stattfindet. Für die Vermeidung solcher Situationen ist es deshalb entscheidend, den Pegelschwund in dem zur Detektion im Empfänger gelangenden Empfangssignal zu vermeiden.

Erfindungsgemäß werden deshalb mehrere diversitätsmäßig unterschiedliche Empfangssignale E1, E2..EN überlagert, so dass das kombinierte Signal dem Pegelschwund mit entsprechender Wahrscheinlichkeit nicht unterliegt. Die Überlagerung erfolgt dabei durch Summation der gleichphasig eingestellten Empfangssignale mit dem Vorteil des maximal möglichen Signal-Rauschabstands im Empfänger. Die Pegelprüfdauer Tp zur Feststellung einer Pegelmessprobe 8 kann in der Regel kleiner sein als es dem Reziprokwert der Kanalbandbreite B des Systems entspricht. Das folgende Beispiel zeigt für eine Bandbreite B = 4 MHz und einem Pegelprüfzyklus- Zeitabstand Tz = 250 $\mu$s und für eine Frequenz von 2,3 GHz und einer maximal angenommene Fahrgeschwindigkeit von 100 km/h, dass durch die Vorgänge der Pegelprüfung zwar einige Symbole gestört übertragen werden, der Verlust dieser Symbole jedoch in einem vernachlässigbarem Verhältnis steht zur Anzahl der Symbole, die aufgrund des Pegelschwunds in schwierigen Empfangsgebieten nicht richtig erkannt werden. Dies geht anschaulich aus Fig. 2b hervor, wenn man voraussetzt, dass alle Symbole über jene Fahrstrecken verloren gehen, innerhalb deren die Amplitude der zur Detektion gelangenden Empfangssignale den minimal geforderten Wert für richtige Symbolerkennung unterschreitet bzw. die durch das Rayleigh-Empfangsfeld hervorgerufene Phasenuntreue so erheblich ist, dass eine richtige Symbolerkennung im Empfänger nicht mehr möglich ist. Die Unterschiedlichkeit der Empfangssignale bezüglich Amplitude und Phase ist in den Figuren 3a und 3b für die beiden Antennen in Fig. 2 dargestellt, für den Fall, dass permanent Symbole mit gleich bleibender Phase - z.B. im Phasenzustand $\pi/4$ - aneinander, gereiht ausgesendet werden. In diesem Fall ergeben sich ohne Gleichphasung der beiden Antennensignale empfängerseitig die dargestellten stochastischen Phasen- und Amplitudenverläufe der Empfangssignals E1 in Fig 3a bzw. E2 in Fig. 3b jeweils in Abhängigkeit von der im bewegten Fahrzeug im Rayleigh-Empfangsfeld zurückgelegten Wegstrecke. Erfindungsgemäß werden deshalb zur Vermeidung von Pegeleinbrüchen im kombinierten Signal die Empfangssignale E1 , E2..EN in hinreichend kleinen Prüfzyklus-Zeitabständen $T_z$ aufeinander folgend bezüglich ihrer Gleichphasigkeit aktualisiert und in der Kombinationsschaltung 5 gleichphasig überlagert. Der Prüfzyklus-Zeitabstand $T_z$ ist erfindungsgemäß derart zu wählen, dass die Gleichphasigkeit während der Bewegung des Fahrzeugs als technisch gegeben angesehen werden kann. Die Empfängerschaltung 2 erhält dann wieder die Referenzphase - ähnlich wie beim Betrieb mit nur einer Antenne - durch die Burst-Signale, welche aufgrund des erfindungsgemäß maximierten kombinierten Signals 14 mit hoher Wahrscheinlichkeit sicher in der Empfängerschaltung 2 detektiert werden.

In Fig. 4 ist die erfindungsgemäße Empfangsanlage in Fig. 1 um zwei weitere Zweige ergänzt. Die einander entsprechenden Komponenten der verschiedenen Zweige sind mit a, b, c gekennzeichnet. In dieser vorteilhaften Weiterbildung einer Diversity-Empfangsanlage nach der Erfindung werden die Mehrantennenanlage 1 und die Schaltelemente S1, S2.. für den gleich gephasten Empfang mehrerer unterschiedlicher Frequenzbänder a, b, c eingesetzt, welche mit mehreren, auf diese Frequenzbänder a, b, c abgestimmten HF-ZF-Teile 12a, 12b, 12c.. , wie in Fig. 4 dargestellt, empfangen werden. Hierfür werden die Ausgangssignale der Schaltelemente S1, S2..S4 jeweils einer - den Frequenzbändern entsprechenden - Vielzahl von Phasendrehgliedern $\Phi$1a, $\Phi$2a, $\Phi$3a, $\Phi$4a, bzw. $\Phi$1b, $\Phi$2b, $\Phi$3b, $\Phi$4b, bzw. $\Phi$1c, $\Phi$2c $\Phi$3c, $\Phi$4c zugeführt, wobei deren, den jeweiligen Frequenzbändern a, b, c zugeordnete Empfangssignale E1a, E2a, E3a, E4a bzw. E1b, E2b, E3b, E4b bzw. E1c, E2c, E3c, E4c in der jeweils zugeordneten Kombinationsschaltung 5a, 5b, 5c zu einem kombinierten Signal 14a, 14b, 14c zusammengefasst und dem entsprechenden HF-ZF-Teil 12a, 12b, 12c zugeführt sind. Die Gleichphasigkeit der in den Kombinationsschaltungen (5a, 5b, 5c) überlagerten Empfangssignale (E1a, E2a, E3a, E4a bzw. E1b, E2b, E3b, E4b bzw. E1c, E2c, E3c, E4c) wird erfindungsgemäß für alle Frequenzbänder a, b, c in Pegelprüfzyklus- Zeitabständen (Tz) aktualisiert.

Die verschiedenen Zweige in Fig. 4 ermöglichen zum Beispiel den koordinierten Empfang von z.B. drei nach dem QPSK-Verfahren digital modulierten Satellitenfunksignalen, welche zur Unterstützung der Übertragungssicherheit z.B. von verschiedenen Satelliten in benachbarten Hochfrequenzbändern der gleichen HF-Kanalbandbreite B jeweils desselben, aber durch Laufzeit versetzten Signalinhalts gleichzeitig ausgestrahlt werden. Alle empfangenen Signale werden im Empfänger 13 koordiniert und ausgewertet, so dass sich durch die Antennendiversity-Funktion in Verbindung mit drei Satellitenübertragungswegen (oder auch zwei Satelliten-Übertragungswegen und einem terrestrischen Übertragungspfad) eine bestmögliche Sicherheit der Datenübertragung ergibt.

In einer weiteren vorteilhaften Ausgestaltung der Erfindung zeigt Fig. 5b eine kombinierte Empfangsanlage, wie sie in Fig. 4 beschrieben ist, jedoch mit einer von der Empfängerschaltung 2 getrennten Diversityeinheit 26. Eine für den Empfang von Satellitensignalen serienmäßig hergestellte Empfangsanlage ohne Antennen-Diversity - das heißt mit nur einer Antenne - wird erfindungsgemäß durch Einbringung der Diversityeinheit 26 zu einer Empfangsanlage ergänzt. Der serienmäßig hergestellte Empfänger ist als Empfängerschaltung 2 über die Empfängerleitung 28 mit der Diversityeinheit 26 verbunden, in welcher sich gesonderte HF-ZF-Teile 12 a,b für die beiden Satelliten Funksignale, die Pegelindikatoren 6 a,b, die Rechnereinrichtung 7 sowie die Schaltelemente S1, S2.. und die Phasendrehgliedern $\Phi$1, $\Phi$2.. mit der nach geschalteten Kombinationsschaltung 5 befinden. Das kombinierte Signal 14 wird somit sowohl den in der Diversityeinheit 26 befindlichen HF-ZF-Teilen 12 a,b als auch der Empfängerschaltung 2 über die Empfängerleitung 28 zugeführt. Der Vorteil dieser Anordnung liegt darin, dass ein einfaches Empfangs System mit nur einer Antenne auf einfache Weise zu einer Empfangsanlage mit mehreren Antennen ergänzt werden kann. Naturgemäß kann zu jedem Zeitpunkt die Gleichphasung nur für eines der beiden Satelliten Funksignale herbeigeführt werden. In der Rechnereinrichtung 7 wird deshalb ein geeigneter Algorithmus abgelegt, nach welchem zunächst geprüft wird, ob die bestehende Einstellung der Schaltelemente S1, S2.. und der Phasendrehglieder $\Phi$1, $\Phi$2.. für beide Satellitensignale einen hinreichend großen Empfangspegel lieferte, so dass die empfangenen Symbole der beiden Signale im Empfänger richtig detektiert werden. Wird für eines der beiden Satellitensignale ein Pegelschwund festgestellt, so wird die Gleichphasung für dieses Satellitensignal herbeigeführt. Nach darauf folgender Prüfung der Pegel der beiden Satellitensignale wird bei ausreichendem Pegel beider Signale die Einstellung der Schaltelemente S1, S2.. und der Phasendrehglieder $\Phi$1, $\Phi$2.. beibehalten. Unterliegen beide Satellitensignale gleichzeitig einem Pegelschwund, so ist es sinnvoll, für das stärkere der beiden Signale die Gleichphasung herbeizuführen, damit sichergestellt ist, dass der Informationsfluss von den Satelliten zum Empfänger über eines der beiden Signale sicher erfolgt. Durch fortlaufende Prüfung in den beschriebenen Pegelprüfzyklus- Zeitabständen $T_z$ wird somit erreicht, dass im Rayleigh-Empfangsfeld der simultane Empfang beider Satellitensignale mit hoher Wahrscheinlichkeit stets gegeben ist.

Ist die Empfangsanlage für den Empfang nur eines Funkkanals vorzusehen, so kann in einer zu Fig. 5b analogen Weise eine entsprechend gestaltete getrennte Diversityeinheit 26 zur Anwendung kommen, wie es aus Fig. 5a hervorgeht. An Stelle der vielfältigen HF-ZF-Teile 12 a,b und der vielfältigen Pegelindikator 6a,b kommt somit nur jeweils ein HF-ZF-Teil 12 und ein Pegelindikator 6 zur Anwendung.

In einer vorteilhaft wirtschaftlichen Weiterbildung der Erfindung in Fig. 5b wird in der kombinierten Empfangsanlage in Fig. 6 an Stelle der getrennten HF-ZF-Teile 12a,b ein Mehrkanal-Frequenzumsetzer 22 zur gemeinsamen Frequenzumsetzung der beiden Satellitensignale in voneinander verschiedene Frequenzen in einer niedrigen Frequenzebene (Zwischenfrequenzebene) eingesetzt. Mit nach geschalteten, diesen beiden Frequenzen entsprechenden Bandpässen 23a,b zur Trennung dieser Signale am Ausgang des Mehrkanal-Frequenzumsetzers 22 und mit getrennten Pegelindikatoren 6a, b werden die Pegel der beiden Satellitensignale gesondert festgestellt.

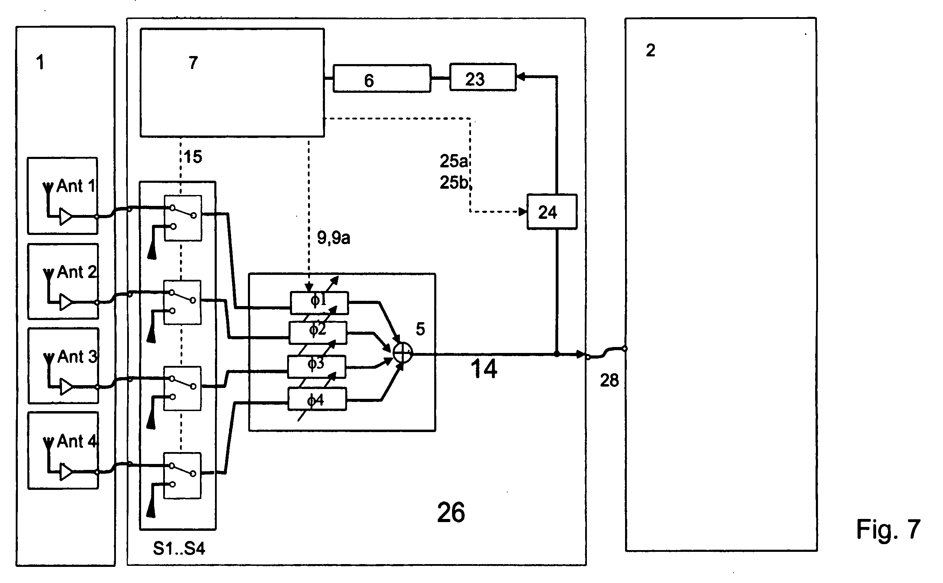

Zur Weiterbildung der Wirtschaftlichkeit der Empfangsanlage in Fig.6 wird in der Anordnung in Fig. 7 an Stelle des Mehrkanal-Frequenzumsetzers 22 ein steuerbarer Monokanal-Frequenzumsetzer 24 zur alternativen Einstellung auf die Frequenz des jeweils primärseitig vorhandenen Satelliten Empfangssignals in der Weise eingesetzt, dass an seinem Ausgang ein Signal in der niedrigen Frequenzebene entsteht, welches über den Bandpass 23 dem einzigen Pegelindikator 6 zugeführt ist. In der Rechnereinrichtung 7 werden Kanalwahlsignale 25a bzw. 25b erzeugt, welche sowohl den Takt als auch die Auswahl des zu prüfenden Signals der beiden Satellitenkanäle vorgegeben.

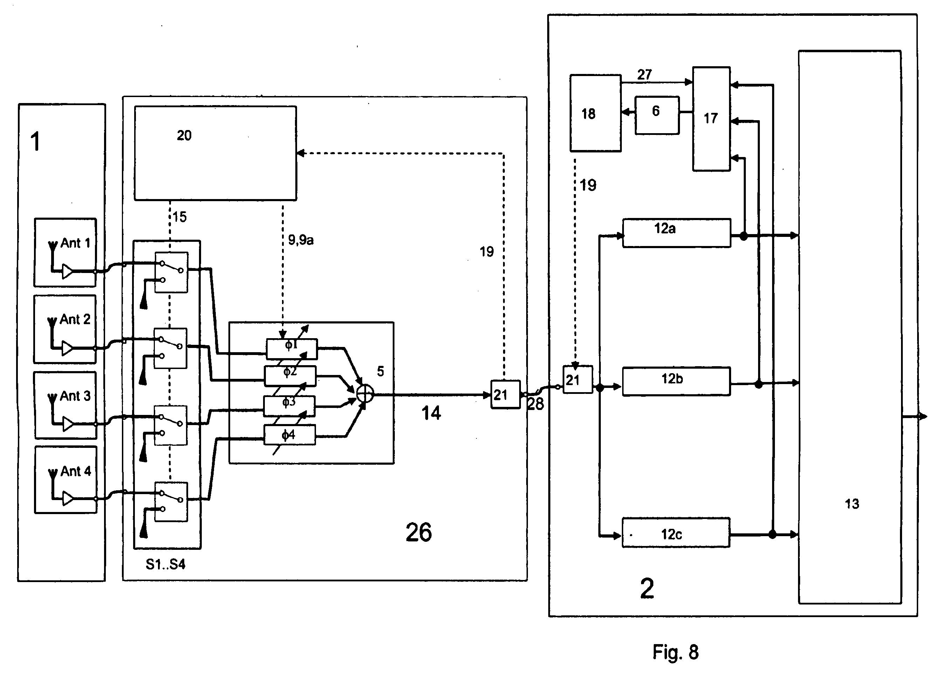

In einer weiteren vorteilhaften Ausgestaltung der Erfindung sollen zur Vereinfachung der getrennten Diversityeinheit 26 die HF-ZF-Teil 12a,b dort entfallen. Dafür sollen die in dem als Empfängerschaltung 2 gebildeten, serienmäßig hergestellten Empfänger befindlichen HF-ZF-Teile 12a,b in Verbindung mit einer Vorrüstung zur nachträglichen Erweiterung der Empfangsanlage gemäß der Erfindung benützt werden, wie es in Fig. 8 dargestellt ist. Hierfür ist in der Empfängerschaltung 2 ein Mikroprozessor 18 vorgesehen. Im Interesse einer wirtschaftlichen Gestaltung der Pegelprüfungen wird weiterhin in der Empfängerschaltung 2 ein getakteter Pegelprüfumschalter 17 eingesetzt, welcher die in ihrem Pegel zu prüfenden Empfangssignale alternativ zum einzigen Pegelindikator 6 durchschaltet und welcher vom Mikroprozessor 18 über Taktsignale 27 zur Erzeugung der Prüfzyklen angesteuert wird. Die vom Pegelindikator 6 an den Mikroprozessor 18 abgegebenen Signale werden dort verarbeitet und in Form von Digitalsignalen 19 über die Frequenzweichen 21 und die Empfängerleitung 28 einer in der getrennten Diversityeinheit 26 befindlichen einfachen Schaltlogik 20 zugeführt, in welcher die Phaseneinstellsignale 9 zur Einstellung der Phasendrehglieder Φ1, Φ2..und die Schalterstellsignale 15 zur Einstellung der Schaltelemente S1, S2.. erzeugt werden.

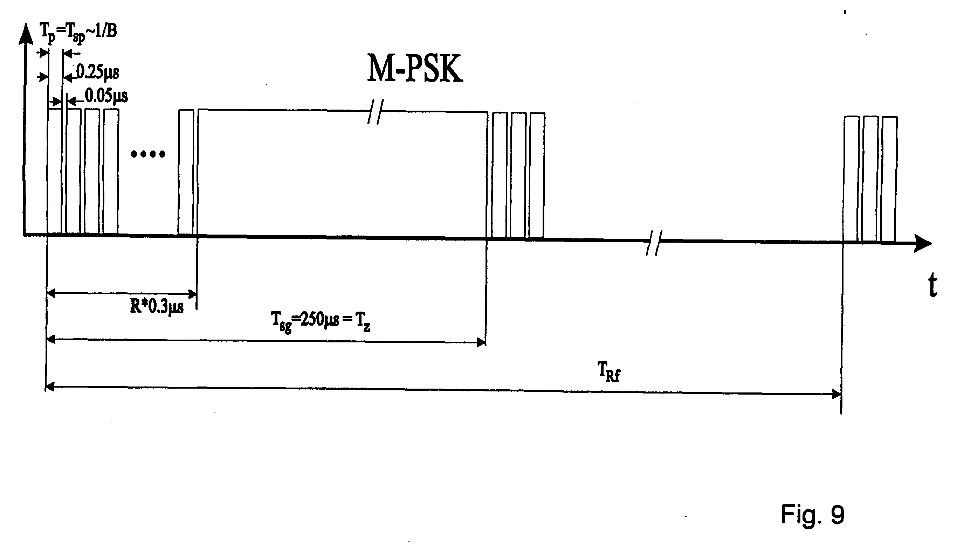

Bei einer QPSK-Symboldauer $T_{sp}$ = 1/(4 MHz) = 0,25 µs ergibt sich für R Pegelprüfungen eine relative Anzahl von lediglich $R \cdot (T_{sp}/T_z)$ = R/1000 von Symbolen, welche zwar nicht mit einem optimal verfügbaren Empfangssignal empfangen werden, die richtige Symbolidentifikation jedoch bei der überwiegenden Mehrzahl dieser Symbole aufgrund der Statistik des Empfangsfeldes auch dann noch wahrscheinlich ist. Die wenigen Symbole, welche dabei einer Fehlidentifikation unterliegen können, werden durch die bei jedem digitalen Kommunikationssystem gegebene Redundanz mit Fehlerkorrektur korrigiert. Die übrigen, während des Prüfzyklus-Zeitabstands $T_z$ gesendeten Symbole, werden dagegen mit der vollen Diversitätswirkung der verfügbaren Empfangssignale empfangen. Damit wird bei geeigneter Ausgestaltung von Antennen in der Mehrantennenanlage 1 eine hohe Diversityeffizienz erreicht, welche die starke Reduzierung der Bitfehlerrate über eine Fahrstrecke bewirkt und die Wahrscheinlichkeit des Abbrechens der Funkverbindung mit den Schwierigkeiten der Neusynchronisation stark vermindert. In Fig. 9 ist die QPSK-Symboldauer $T_{sp}$ = 1/B vorausgesetzt. Im ungünstigen Fall ist die Pegelprüfdauer $T_p$ so lange andauernd wie einige wenige Symbole, so dass diese während der Prüfzeit verloren gehen können. Ferner ist der Zeitablauf für R Pegelprüfvorgänge sowie einen erfindungsgemäß gewählten Prüfzyklus-Zeitabstand $T_z$ dargestellt. In einer vorteilhaften Ausgestaltung der Erfindung ist es vorgesehen, dass die Pegelprüfungen zur Gleichphasung nur dann durchgeführt werden, wenn das Signal-Rauschverhältnis einen Wert unterschreitet, welcher weit über der Schranke liegt, bei welcher eine vollkommen sichere Symbolerkennung nicht mehr gewährleistet ist, um unnötige Pegelprüfungen zu vermeiden.

Im Folgenden werden Verfahren beschrieben, mit deren Hilfe die Gleichphasung von N Empfangsantennen anhand der Pegelsignale 4 herbeigeführt werden kann. Hierbei bleibt offen, ob im Pegelindikator 6 direkt die entsprechenden Leistungen der Empfangssignale gemessen werden, oder ob aus den entsprechenden Amplituden der Signale die Quadrate dieser Werte in der Rechnereinrichtung 7 ermittelt werden.

Nach den Phasendrehgliedern Φ1, Φ2,.. ΦN liegt hinter den Antennen und deren Schaltelementen S1,S2,...SN. z.B. für Antenne i das jeweilige Antennensignal $E_i$ mit der komplexen Amplitude $\underline{A}_i$ und dem Amplitudenbetrag $A_i$ an:

$$\underline{A}_i = A_i e^{j(\omega t + \phi_i + \phi_c(t))} \qquad \text{mit} \quad i=1,2,...N \qquad (1a)$$

Dabei ist der Phasenbeitrag $\phi_i$ die Phase der jeweils betrachteten Einzelantenne i, welche aufgrund der Gangunterschiede zwischen den Einzelantennen variiert, während der Phasenbeitrag $\phi_c$ für die Informationsübertragung des betrachteten Funkkanals verwendet wird und zwar eine zeitlich variable Größe darstellt, die aber dennoch allen Einzelantennen gemein ist.

Im normalen Empfangsbetrieb werden die Antennensignale $E_i$ aufsummiert (überlagert) und es entsteht das Überlagerungssignal $E_{norm}$ mit der komplexen Amplitude $\underline{A}_{norm}$ und dem Amplitudenbetrag $A_{norm}$:

$$\underline{A}_{norm} = \sum_{i=1}^{N} A_i e^{j(\omega t + \phi_i + \phi_c(t))} = A_{norm} e^{j(\omega t + \phi_{norm} + \phi_c(t))} \qquad (1b)$$

Aus dem gewichteten Mittel der Phasen $\phi_i$ der Einzelantennen ergibt sich ein Phasenschwerpunkt als Phase $\phi_{norm}$ des Überlagerungssignals $E_{norm}$ aus der Überlagerung aller n Antennen. Die Gewichtungen ergeben sich aus den Amplitudenwerten der Einzelantennen. Diese Phase $\phi_{norm}$ liegt also im normalen Empfangsbetrieb an und dieser Phase sind die Phasen $\phi_i$ der Einzelantennen mit dem erfindungsgemäßen Verfahren nachzuführen.

Im Sinne der Phasen-Nachführung der Antennensignale wird nun in regelmäßigen zeitlichen Abständen durch mehrere Tests nachgeprüft, inwieweit sich die Phasen $\phi_i$ der Einzelantennensignale $E_i$ von der Phase $\phi_{norm}$ des Überlagerungssignals unterscheiden. Dazu finden nacheinander verschiedene Testphasen mit der jeweiligen Pegelprüfdauer $T_p$ statt, in denen jeweils mit Hilfe der Schalter S1, S2,... eine andere Kombination von Einzelantennen ausgewählt wird. Die Leistungen $P_ü$ bzw. die Amplituden $A_ü$ der so entstandenen Überlagerungssignale $E_ü$ der verschiedenen Antennenkombinationen können dann gemessen werden. Aus den Pegeln $A_ü$ der in den verschiedenen Testphasen gebildeten Überlagerungssignale kann anschließend auf die Phasendifferenz zwischen den Phasen $\phi_i$ der Einzelantennen und der Phase $\phi_{norm}$ geschlossen werden.

Nach diesen Testphasen werden anschließend die Phasen $\phi_i = \phi_1, \phi_2, ...$ der Einzelantennen i=1,2,... jeweils mit Hilfe der Phasenstellglieder $\phi1, \phi2, ...$ der Phase des Überlagerungssignals $\phi_{norm}$ angeglichen. Antennen, welche einen schwachen Empfang haben und aufgrund ihres Verstärkerrauschens keinen positiven Beitrag zum Signal/Rauschverhältnis des Überlagerungssignals beitragen können dabei weggeschaltet werden. Die in der Phase einander angeglichenen Antennensignale aller übrigen Antennen werden dann wieder überlagert und bilden auf diese Weise ein neues Überlagerungssignal, welches in der Phase nicht wesentlich von der des alten Überlagerungssignals abweicht und diesem gegenüber eine größere Amplitude bzw. ein verbessertes Signal/Rauschverhältnis besitzt.

Die erfindungsgemäße Anordnung nach Fig.1 eröffnet eine Vielzahl möglicher Testphasen und sinnvoller Antennenkombinationen, mit denen Überlagerungssignale zur Ermittlung der Phasenunterschiede gebildet werden können.

Im Folgenden werden einige Verfahren beschrieben, wie die Phasenabweichung $\alpha_i = \phi_i - \phi_{norm}$ zwischen der Phase der Antenne i und der Phase des Überlagerungssignals $E_{norm}$ ermittelt werden kann.

Verfahren 1:

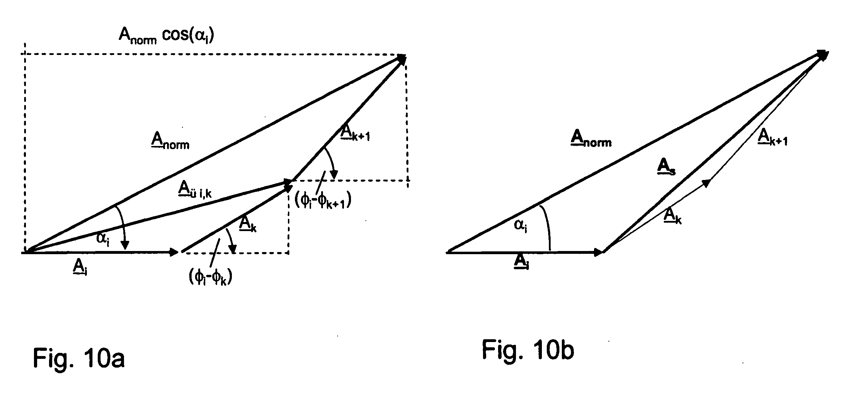

In einer Testphase 1 wird nur Antenne i aufgeschaltet und deren Signalpegel $A_i$ am Detektor ermittelt. In Testphase 2 wird nur Antenne k aufgeschaltet und deren Signalpegel $A_k$ am Detektor ermittelt. In Testphase 3 werden nur die Antennen i und k aufgeschaltet, wodurch am Detektor der Pegel $A_{ü\,i,k}$ des Überlagerungssignals dieser beiden Antennen ermittelt werden kann. In Fig. 10a sind die komplexen Amplituden in einem Beispiel dargestellt.

Aus den Amplituden $A_i$ und $A_k$ und der Amplitude $A_{ü\,i,k}$ ergeben sich dann die Werte für $\cos(\phi_i - \phi_k)$ gemäß dem Cosinussatz wie folgt:

$$\cos(\phi_i - \phi_k) = \frac{A_{ü i,k}^2 - A_i^2 - A_k^2}{2 A_i A_k} \qquad (2a)$$

bzw. aus den am Detektor gemessenen Leistungen $P_i$ und $P_k$ der Einzelantennen und der Leistung $P_{ü\,i,k}$ des Überlagerungssignals dieser zwei Antennensignale mit

$$\cos(\phi_i - \phi_k) = \frac{P_{ü i,k} - P_i - P_k}{2\sqrt{P_i P_k}} \qquad (2b)$$

Um die Pegel/Leistungen der Einzelantennen bzw. Antennenkombinationen am Detektor zu messen, können diese Werte über die Zeitdauer $T_p$ der jeweiligen Testphase hinweg gemittelt werden. Während der Zeit $T_p$ kann die Phase $\phi_c$ im Rahmen der Datenübertragung variieren, ohne dass sich an den in Gln. (2a) und (2b) betrachteten Verhältnissen etwas ändert. Z.B. im Fall einer Übertragung digitaler Daten darf $T_p$ daher größer als die Symboldauer $T_{sp}$ gewählt werden, da sich alle betrachteten Beziehungen unabhängig von der aktuellen Phasenstellung der Symbole ergeben. Es kann somit über beliebig viele Symbollängen $T_{sp}$ hinweg gemittelt werden, sofern sich die Phase und die Amplitude der Signale während der Dauer der Mittelung nicht wesentlich ändert.

Einschränkend für die Länge $T_p$ der Testphasen ist also lediglich der Amplitudenverlauf über der Zeit sowie der Verlauf des Phasenunterschieds zwischen den Antennen.

Nun können nacheinander die Werte $\cos(\phi_i - \phi_k)$ für alle Antennenkombinationen i und k und damit $|\phi_i - \phi_k|$ ermittelt werden. Nach Kenntnis der Phasendifferenz $|\phi_i - \phi_k|$ können nun die Phasen der Antennensignale i und k mit Hilfe der ihnen zugeordneten Phasenstellglieder aneinander angeglichen werden. Da das Vorzeichen der Phasendifferenz vorerst nicht bekannt ist, wird der Angleich zuerst unter der Annahme eines positiven Vorzeichens vorgenommen. Wird dabei die Amplitude $A_{\ddot{u} i,k}$ des Überlagerungssignals nicht größer, ist anschließend die Angleichung mit einem negativen Vorzeichen vorzunehmen.

Fig.10a zeigt den Zusammenhang zwischen dem Phasenunterschied $\alpha_i$ und den Phasenunterschieden zwischen den Antennensignalen.

Erfindungsgemäß kann in einer ähnlich einfachen Form jeweils der Angleich von Antennensignal $E_i$ an das Überlagerungssignal $E_{norm}$ erzielt werden, indem in einer Testphase 1 wie zuvor Antenne i aufgeschaltet wird, während in Testphase 2 alle Antennen außer Antenne i aufgeschaltet werden und in Überlagerung ein Summensignal mit der Amplitude $A_s$ bilden (Fig.10b).

Aus den Amplituden $A_i$ und $A_s$, und der Amplitude $A_{norm}$ ergeben sich dann die Werte für $\cos(\alpha_i)$ gemäß dem Cosinussatz wie folgt:

$$\cos(\alpha_i) = \frac{A_i^2 + A_{norm}^2 - A_s^2}{2 A_i A_{norm}} \tag{2d}$$

bzw. aus den am Detektor gemessenen Leistungen $P_i$ und $P_k$ der Einzelantennen und der Leistung $P_{\ddot{u} i,k}$ des Überlagerungssignals dieser zwei Antennensignale mit

$$\cos(\alpha_i) = \frac{P_i + P_{norm} - P_s}{2 \sqrt{P_i P_{norm}}} \tag{2e}$$

Nach Kenntnis der Phasendifferenz $|\alpha_i|$ kann nun die Phase des Antennensignals $E_i$ an die Phase des Überlagerungssignals $E_{norm}$ mit Hilfe des der Antenne i zugeordneten Phasenstellgliedes aneinander angeglichen werden. Da das Vorzeichen der Phasendifferenz vorerst nicht bekannt ist, wird der Angleich zuerst unter der Annahme eines positiven Vorzeichens vorgenommen. Wird dabei die daraus resultierende neue Amplitude $A_{norm}$ des Überlagerungssignals nicht größer, ist anschließend der Angleich mit einem negativen Vorzeichen vorzunehmen.

Verfahren 2

In einem weiteren vorteilhaften Verfahren kann auf das Wegschalten von Antennen während der Testphasen teilweise oder auch ganz verzichtet werden. Dazu werden von Testphase zu Testphase nicht nur die Kombinationen zwischen Antennen variiert sondern vor allem deren Phasenstellungen. Diese Phasenstellungen können durch gezielte Phasenänderung über die Phasenstellglieder $\phi 1$, $\phi 2$, $\phi 3$, $\phi 4$ herbeigeführt werden. In jeder Testphase 1,2,3,... wird also eine andere Teststellung der Antennen bezüglich ihrer Phasen gewählt und die Amplitude des daraus entstehenden Überlagerungssignals $A_{t1}$, $A_{t2}$, $A_{t3}$,... am Detektor gemessen.

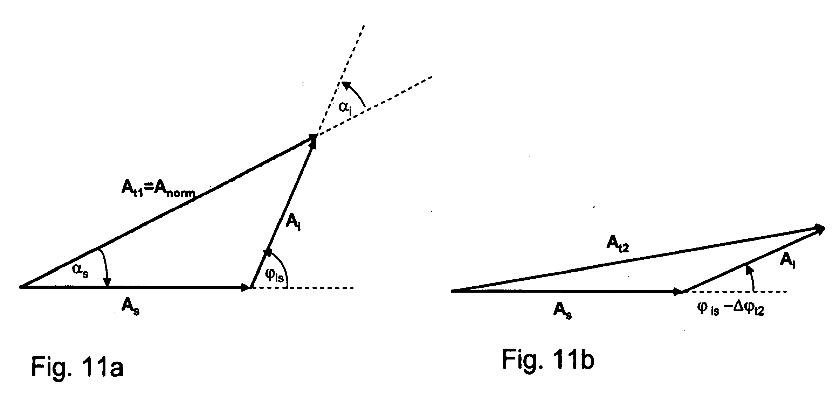

Teststellung 1 ist z.B. der Normalbetrieb des Empfangs (Fig.11a). Am Detektor wird die Amplitude $A_{t1} = A_{norm}$ bzw. die Leistung $P_{t1}$ abgelesen. Es ist nun die Phasendifferenz $\alpha_i$ zwischen dem Antennensignal $E_i$ und dem Überlagerungssignal $E_{norm}$ zu ermitteln, damit sie in einem Korrekturvorgang durch die Phasendrehglieder kompensiert werden kann. Dazu werden zwei weitere Teststellungen mit Hilfe der Phasendrehglieder erzeugt:

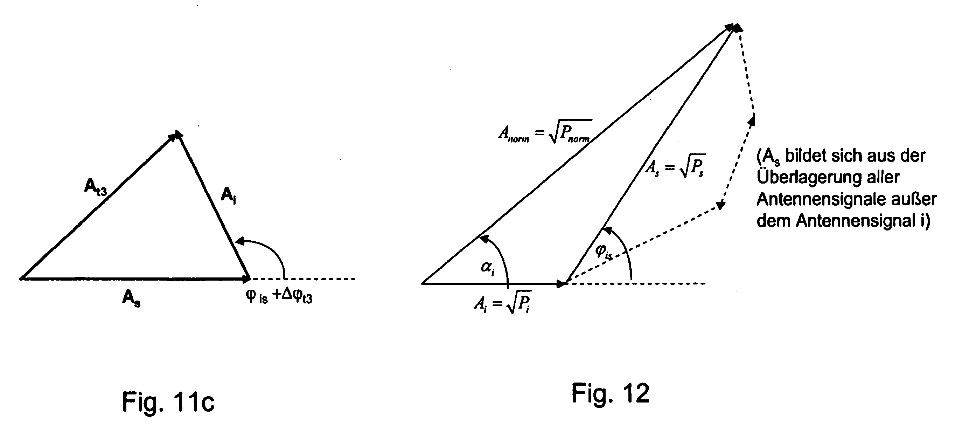

In Teststellung 2 wird die Phase des Antennensignals i um einen dem System bekannten Winkel $-\Delta\varphi_{t2}$ gedreht und am Detektor die Amplitude $A_{t2}$ bzw. die Leistung $P_{t2}$ abgelesen (Fig.11 b).
In Teststellung 3 wird die Phase des Antennensignals i um einen dem System bekannten Phasenwinkel $\Delta\varphi_{t3}$ gedreht und am Detektor die Amplitude $A_{t3}$ bzw. die Leistung $P_{t3}$ abgelesen (Fig.11c).

Um den Rechenaufwand zur Bestimmung von $\alpha_i$ gering zu halten und um eine einfach realisierbare grobe Winkelauflösung der Phasenstellglieder wählen zu können, bietet sich für die Phasendrehungen der Teststellungen 2 und 3 (s. Fig.11b und c) vorteilhaft an:

$$\Delta\varphi_{t2} = \Delta\varphi_{t3} = \Delta\varphi_t$$

In der folgenden Ableitung wird von solch einer vorteilhaften Ausführungsform ausgegangen.

Es gilt dann für die drei Teststellungen die Amplitudenbeziehung (nach dem Cosinus-Satz):

$$A_{t1}^2 = A_i^2 + A_s^2 + 2A_i\,A_s\,\cos(\varphi_{is})$$

$$A_{t2}^2 = A_i^2 + A_s^2 + 2A_i\,A_s\,\cos(\varphi_{is} - \Delta\varphi_t)$$

$$A_{t3}^2 = A_i^2 + A_s^2 + 2A_i\,A_s\,\cos(\varphi_{is} + \Delta\varphi_t)$$

bzw. die entsprechenden Leistungsbeziehungen:

$$P_{t1} = P_{norm}$$

$$P_{t1} = P_i + P_s + 2\sqrt{P_i P_s}\,\cos(\varphi_{is}) \tag{3a}$$

$$P_{t2} = P_i + P_s + 2\sqrt{P_i P_s}\,\cos(\varphi_{is} - \Delta\varphi_t) \tag{3b}$$

$$P_{t3} = P_i + P_s + 2\sqrt{P_i P_s}\,\cos(\varphi_{is} + \Delta\varphi_t) \tag{3c}$$

wir führen die Hilfsfunktion $P_x$ ein: $-2\sqrt{P_i P_s}\,\cos(\varphi_{is}) = P_x$ welche sich bestimmen läßt aus

$$P_x = \frac{P_{t2} + P_{t3} - 2P_{t1}}{2 - 2\cos(\Delta\varphi_t)} \tag{4}$$

Weiterhin führen wir die Hilfsfunktion Py ein: $-2\sqrt{P_i P_s}\,\sin(\varphi_{is}) = P_y$ welche sich bestimmen läßt aus

$$P_y = \frac{P_{t3} - P_{t2}}{2\sin(\Delta\varphi_t)} \tag{5}$$

Es ergibt sich aus den Gleichungen (3-5):

$$P_i = \frac{1}{2}\left[ P_{t1} + P_x \pm \sqrt{P_{t1}^2 + 2P_{t1}P_x - P_y^2} \right] \tag{6}$$

sowie

$$P_s = \frac{1}{2}\left[ P_{t1} + P_x \mp \sqrt{P_{t1}^2 + 2P_{t1}P_x - P_y^2} \right] \tag{7}$$

Es ergeben sich somit zwei Lösungen, wobei die eine Lösung die tatsächliche Leistung an der Antenne darstellt, während die andere Lösung die Leistung der überlagerten weiteren Antennen darstellt. Vorerst sind diese Lösungen nicht voneinander unterscheidbar. Jedoch sind aus den zwei Lösungen die Winkel $\alpha_i$ und $\alpha_s$ bestimmbar, wobei auch hier vorerst nicht bekannt ist, welche der beiden Winkellösungen der Winkel $\alpha_i$ und welcher der Winkel $\alpha_s$ ist. Für den Phasendifferenzwinkel $\alpha_i$ zwischen der Antenne i und dem Überlagerungssignal ergibt sich die Berechnungsformel:

$$\cos(\alpha_i) = \frac{2P_i - P_x}{2\sqrt{P_{i1}P_i}} \qquad (8)$$

und

$$\sin(\alpha_i) = \frac{-P_y}{2\sqrt{P_{i1}P_i}} \qquad (9)$$

bzw.

$$\tan(\alpha_i) = \frac{-P_y}{2P_i - P_x} = \frac{-P_y}{P_{i1} \pm \sqrt{P_{i1}^2 + 2P_{i1}P_x - P_y^2}} \qquad (10)$$

Aus einem Größenvergleich lässt sich leicht auf den Quadranten des Winkels $\alpha_i$ schließen:

Gilt $2P_i > P_x$, so liegt $\alpha_i$ im ersten oder vierten Quadranten, sonst in den zwei anderen Quadranten. Gilt $P_y < 0$, so liegt $\alpha_i$ im ersten oder zweiten Quadranten, sonst in den zwei anderen Quadranten.

Auch gilt für $\alpha_s$:

$$\cos(\alpha_s) = \frac{2P_s - P_x}{2\sqrt{P_{i1}P_s}} \qquad (11)$$

und

$$\sin(\alpha_s) = \frac{-P_y}{2\sqrt{P_{i1}P_s}} \qquad (12)$$

bzw.

$$\tan(\alpha_s) = \frac{-P_y}{2P_s - P_x} = \frac{-P_y}{P_{i1} \mp \sqrt{P_{i1}^2 + 2P_{i1}P_x - P_y^2}} \qquad (13)$$

Ohne vorherige Kenntnis der Leistungen $P_i$ und $P_s$ ergeben sich nach Gln. 10 bzw. 13 somit zwei Lösungen für $\alpha$, wobei die eine Lösung die tatsächliche Phasendifferenz $\alpha_i$ darstellt, während die andere Lösung die Phasenstellung $\alpha_s$ darstellt.

Im nachfolgenden Korrekturgang wird probeweise eine der beiden Lösungen von $\alpha_i$ für den Phasenangleich der Antenne i verwendet, welche sich aus Gl. 10 ergibt.

Da die Winkel $\alpha_i$ und $\alpha_s$ grundsätzlich einander entgegengerichtet sind, wird sich bei Wahl der falschen Lösung eine Verringerung der Leistung des Überlagerungssignals einstellen. Dies kann schnell erkannt werden und durch Wahl der anderen, also der richtigen Lösung korrigiert werden. Daraufhin stellt sich die optimierte höhere Leistung des neuen Überlagerungssignals ein.

Alternativ können die beiden Lösungen grundsätzlich nacheinander durchgetestet werden, wobei die Lösung letztendlich verwendet wird, deren Überlagerungssignal die höhere Leistung hat.

Anmerkung: Um eine fehlerhafte Phasenänderung von Antennensignalen im Diversityprozess grundsätzlich ausschließen zu können, kann die Vergrößerung der Leistung des Überlagerungssignals, welche sich durch die Korrektur einstellt, als Plausibilitätskriterium für die Güte der Korrektur verwendet werden. Die Korrektur wird grundsätzlich nur dann beibehalten, wenn das daraus resultierende Überlagerungssignal größer als vor Anwendung der Korrektur ist.

Man kann dann auch davon ausgehen, dass die Phase der Einzelantennen entsprechend an die Phase des bereits vor der Korrektur vorgefundenen Überlagerungssignals angeglichen wurde.

Nun kann es passieren, dass (wenn auch kurzzeitig) Datenverluste entstehen, wenn in dem Korrekturvorgang zuerst die falsche der zwei Winkellösungen verwendet wird. Es entsteht kurzzeitig ein Phasenfehler, der im Empfänger z.B. im Fall einer M-PSK-Übertragung als Datenfehler erscheint. Um dieses zu vermeiden, kann wie folgt vorgegangen werden:

Mit geringen Winkelschritten $\Delta\varphi_{t2} = \Delta\varphi_{t3} = \Delta\varphi_t$ <<90° werden die Teststellungen 1,2 und 3 solange durchlaufen, bis jeweils genau messbare Pegel am Leistungsdetektor für jeden Fall gemessen werden können. (In dieser Zeit darf jedoch nur eine natürliche Phasenänderung entstehen, welche deutlich kleiner als die Winkelschritte $\Delta\varphi_{t2} = \Delta\varphi_{t3} = \Delta\varphi_t$ ist.

Um ohne nachträglichen Test eine eindeutige Lösung zu bekommen, kann von vorne herein eine weitere Teststellung 4 eingeführt werden, worin die Antenne i über ein Dämpfungsglied gezielt mit dem Wert a bedämpft wird und dann der Pegel $P_{t4}$ gemessen wird, wobei die Dämpfung gering genug zu wählen ist, damit auch während dieser Testphase nur eine natürliche Phasenänderung entsteht, welche deutlich kleiner als die Winkelschritte $\Delta\varphi_{t2} = \Delta\varphi_{t3} = \Delta\varphi_t$ ist.

Zusätzlich zu den Gln. (1-3) ergibt sich die Teststellung 4 mit:

$$P_{t4} = aP_i + P_s + 2\sqrt{aP_iP_s}\cos(\varphi_{is}) \qquad (14)$$

Nach sequentieller Durchführung der Teststellungen 1-4 kann aus den Gleichungen (1-3) und (14) nun sofort eine eindeutige Lösung für die Phasendifferenz $\alpha_i$ gewonnen werden:

Es ergibt sich nun eine Lösung für die Leistung an Antenne i mit

$$P_i = \frac{P_{t1} - P_{t4}}{1 - a} + \frac{P_x}{1 + \sqrt{a}} \qquad (15)$$

woraus sich unter Verwendung von Gln. (8) und (9) die Phasendifferenz $\alpha_i$ eindeutig bestimmen lässt. In einer nachfolgenden Korrektur kann somit das Antennensignal $E_i$ in seiner Phase um den soeben berechneten Phasenunterschied $\alpha_i$ in die Phase des Überlagerungssignals hineingedreht werden. Nachdem alle jene Antennensignale, welche aufgrund ihres Pegels zu dem Signal-zu-Rauschabstand einen positiven Beitrag leisten können in der Phase dem Überlagerungssignal angeglichen wurden, ergibt sich für das daraus folgende neue Überlagerungssignal ein höherer Pegelwert. Diskrete Phasendrehglieder zur Korrektur der Phasen der Antennensignale werden mit ausreichend kleinen Winkelschritten gewählt, so daß die Phase des neuen Überlagerungssignals gegenüber der Phase des vorigen Überlagerungssignals keinen Phasensprung der Größe bewirken kann, dass im Fall einer MPSK-Modulation ein Bitfehler entstehen könnte.

Wichtig ist, dass die Testphasen schnell genug ablaufen, so dass sich während der Testphasen die Phasen und Amplituden der Antennensignale nicht wesentlich ändern. Dies ist jedoch in den meisten Übertragungssystemen gegeben, da die Datenraten zwangsläufig um viele Größenordnungen höher sind als die Phasenänderungen in Umläufen pro Zeiteinheit, da sonst keine empfängerseitige Interpretation der Daten möglich wäre. Um die Daten empfangen zu können, müssen Empfänger in der Lage sein, während einer Symboldauer die Phasenstellung und die Amplitude zu bestimmen.

Es ist also mit der erfindungsgemäßen Diversityschaltung immer möglich, in einer Zeitdauer von wenigen Symboldauern in Folge die Phasenunterschiede zwischen den Antennensignalen und dem Überlagerungssignal zu bestimmen, ohne dass sich in dieser verhältnismäßig kurzen Zeit eine störende Phasendrehung durch äußere Umstände einstellt.

**Verfahren 3** (nicht beansprucht):

In einer besonders einfach realisierbaren Variante werden diskrete Phasendrehglieder gewählt, welche jeweils nur diskrete Phasendrehungen mit der Schrittweite $\Delta\varphi$ bewerkstelligen können. Es bietet sich hier im Sinne eines möglichst einfachen Rechenaufwandes und einer einfachen Hardware-Realisierung an, die Test-Winkeldrehung mit $\Delta\varphi_t$=90° zu wählen und für die diskreten Phasendrehglieder im Fall MPSK modulierter Signale eine Winkelschrittweite von $\Delta\varphi$=360°/(M*A) mit A=1, 2, 3... zu realisieren. Insbesondere eine Winkelschrittweite von 90° oder 45° bietet sich z.B. im Fall von QPSK an.

Nun wird als Teststellung 1 wieder die Überlagerung aller Antennensignale im normalen Empfangsfall gewählt:

$$P_{t1} = P_{norm} \tag{16}$$

$$P_{t1} = P_i + P_s + 2\sqrt{P_i P_s}\cos(\varphi_{is}) \tag{17}$$

in Teststellung 2 wird das Antennensignal i einzeln vermessen (d.h. Antennensignal $P_s$ wird unendlich bedämpft):

$$P_{t2} = P_i \tag{18}$$

An dieser Stelle kann für jedes Antennensignal $E_i$ entschieden werden, ob dessen Pegel hoch genug ist, um weiter in die Betrachtung aufgenommen zu werden. Es können hier frühzeitig jene Antennensignale weggeschaltet werden und bis zum nächsten Testdurchgang aus der Betrachtung gezogen werden, welche bei geringem Signalpegel über deren Verstärkerrauschen einen Negativbeitrag zum Signal/Störverhältnis liefern würden. Wird ein oder mehrere Antennensignale weggeschaltet, ist Teststellung 1 noch einmal für die neue reduzierte Kombination von Antennensignalen vorzunehmen. Alternativ kann grundsätzlich die Reihenfolge aller Teststellungen getauscht werden. Es bietet sich demzufolge an, Teststellung 2 im zeitlichen Ablauf an den Beginn der Testphase zu stellen, um für die nachfolgenden Teststellungen bereits Antennensignale bei Bedarf aus der Betrachtung herauszunehmen.

In Teststellung 3 wird die Überlagerung aller Antennensignale nach Abschaltung des Antennensignals i vermessen (d.h. Antennensignal $E_i$ wird unendlich bedämpft):

$$P_{t3} = P_s \tag{19}$$

In Teststellung 4 wird die Überlagerung aller Antennensignale vermessen, nachdem Antennensignal $E_i$ um $\Delta\varphi_t$=90° gedreht wurde. Aus G1. 2 ergibt sich damit:

$$P_{t4} = P_i + P_s + 2\sqrt{P_i P_s}\sin(\varphi_{is}) \tag{20}$$

Gemäß Fig.12 ergibt sich

$$\sqrt{P_{norm}}\sin(\alpha_i) = \sqrt{P_s}\sin(\varphi_{is}) \tag{21}$$

sowie

$$\sqrt{P_{norm}}\cos(\alpha_i) = \sqrt{P_s}\cos(\varphi_{is}) + \sqrt{P_i} \tag{22}$$

Aus (21) und (22) ergibt sich

$$\tan(\alpha_i) = \frac{2\sqrt{P_i P_s}\sin(\varphi_{is})}{2\sqrt{P_i P_s}\cos(\varphi_{is}) + 2P_i} \tag{23}$$

14

Aus (17) erhalten wir:

$$2\sqrt{P_i P_s}\cos(\varphi_{is}) = P_{t1} - P_i - P_s \tag{24}$$

Aus (20) erhalten wir:

$$2\sqrt{P_i P_s}\sin(\varphi_{is}) = P_{t4} - P_i - P_s \tag{25}$$

mit (23) bis (25) ergibt sich:

$$\tan(\alpha_i) = \frac{P_{t4} - P_i - P_s}{P_{t1} + P_i - P_s} \tag{26}$$

Somit erhalten wir mit (18) und (19) aus den gemessenen Leistungswerten der Testphasen 1,2,3 und 4:

$$\tan(\alpha_i) = \frac{P_{t4} - P_{t2} - P_{t3}}{P_{t1} + P_{t2} - P_{t3}} \tag{27}$$

damit ergibt sich für den auszugleichenden Phasenunterschied $\alpha_i$ zwischen dem Signal $E_i$ und dem Überlagerungssignal $E_{norm}$:

$$\alpha_i = \arctan\left(\frac{P_{t4} - P_{t2} - P_{t3}}{P_{t1} + P_{t2} - P_{t3}}\right) + n \cdot 180° \quad \text{mit } n\begin{cases} 0 & \text{für } P_{t1} + P_{t2} > P_{t3} \\ 1 & \text{für } P_{t1} + P_{t2} < P_{t3} \end{cases} \tag{28}$$

wobei durch den Multiplikator n eindeutig bestimmt werden kann, in welchem Quadranten der Phasenunterschied liegt.
Um den Rechenaufwand weiter zu reduzieren kann die Funktion Arcus-Tangens (Abk. arctan) (wie auch andere möglicherweise für die Berechnung des Winkels verwendbare Funktionen) in Teilbereichen durch Stufenapproximation, lineare Approximation oder parabel-Approximation sowie allgemein durch eine Polynom-Approximation angenähert werden. Auch kann eine Kombination der hier erwähnten Approximationen derart gewählt werden, daß jeweils in einem anderen Teilbereich eine dafür besonders passende Approximation angewendet wird.
Wir führen dazu zwei Hilfsgrößen ein:

$$\begin{aligned} P_{z\ddot{a}hler} &= P_{t4} - P_{t2} - P_{t3} \\ P_{nenner} &= P_{t1} + P_{t2} - P_{t3} \end{aligned} \tag{32}$$

Dann wird ein Wert n gebildet mit

$$n\begin{cases} 0 & \text{für } P_{nenner} > 0 \\ 1 & \text{für } P_{nenner} < 0 \end{cases} \tag{33}$$

Dann ist der Quotient Q zu bilden mit

$$Q = \frac{P_{z\ddot{a}hler}}{P_{nenner}} \tag{34}$$

Gemäß Gleichung 27 ist für die Bestimmung des Winkels der Arcus-Tangens des Quotienten Q zu bilden. In sehr guter Näherung kann dieser auch durch eine Kombination von Linear-Approximation und Stufenapproximation für die arctan-Funktion gebildet werden. Es ergibt sich zum Beispiel:

$$\alpha_i = n \cdot \pi + \begin{cases} Q & \text{für} & |Q| < 0,7 \\ 0,25Q + 0,525 & \text{für} & 0,7 < |Q| < 3,25 \\ -1,35 & \text{für} & -7 < Q < -3,25 \\ 1,35 & \text{für} & 3,25 < Q < 7 \\ -1,5 & \text{für} & Q < -7 \\ 1,5 & \text{für} & Q > 7 \end{cases} \quad (35)$$

für erlaubte Abweichungen um bis zu 5° in der Bestimmung des Winkels bzw. mit

$$\alpha_i = n \cdot \pi + \begin{cases} Q & \text{für} & |Q| < 0,66 \\ 0,25Q + 0,5 & \text{für} & 0,66 < |Q| < 3,8 \\ -1,445 & \text{für} & Q < -3,8 \\ 1,445 & \text{für} & Q > 3,8 \end{cases} \quad (36)$$

für erlaubte Winkelabweichungen um bis zu 8°.

**Verfahren 4**:

Eine weitere Alternative mit geringem Rechenaufwand besteht darin, eine andere vorteilhafte Kombination von Teststellungen wie folgt zu wählen:

Wie zuvor wird in Teststellung 1 die Leistung $P_{t1}=P_{norm}$ des Überlagerungssignals $E_{norm}$ gemäß Gln. (16) und (17) gemessen. Ebenfalls wie zuvor wird in Teststellung 2 für jedes einzelne Antennensignal $E_i$ die Leistung $P_{t2}=P_i$ gemäß Gl.(18) gemessen. In Teststellung 3 wird die Überlagerung aller Antennensignale vermessen, nachdem Antennensignal $E_i$ mit Hilfe des Phasenstellglieds $\Phi i$ um $\Delta\varphi_t$=-90° gedreht wurde. Aus Gl. (2) ergibt sich damit:

$$P_{t3} = P_i + P_s - 2\sqrt{P_i P_s} \sin(\varphi_{is}) \quad (37)$$

In Teststellung 4 wird wie zuvor die Überlagerung aller Antennensignale vermessen, nachdem Antennensignal $E_i$ um $\Delta\varphi_t$=90° gedreht wurde. Identisch zu Gl. 20 ergibt sich damit:

$$P_{t4} = P_i + P_s + 2\sqrt{P_i P_s} \sin(\varphi_{is}) \quad (38)$$

Wie zuvor ergibt sich die Gl.(23) gemäß Fig12 für die Bestimmung des Phasenunterschiedes $\alpha_i$ zwischen Antennensignal $E_i$ und dem Überlagerungssignal $E_{norm}$. Weiterhin gilt auch hier die Gl. (24). Anstelle der in Verfahren 3 geltenden Gl. (25) erhalten wir aber nun in Verfahren 4 aus den Gln. (37) und (38):

$$2\sqrt{P_i P_s} \sin(\varphi_{is}) = \frac{1}{2}(P_{t4} - P_{t3}) \quad (39)$$

und ebenfalls

$$P_i + P_s = \frac{1}{2}(P_{t3} + P_{t4}) \quad (40)$$

mit Gl. (40) und Gl.(24) erhalten wir:

$$2\sqrt{P_i P_s}\cos(\varphi_{is}) = P_{i1} - \frac{1}{2}(P_{i3} + P_{i4}) \tag{41}$$

Aus G1. (23) erhalten wir mit Verwendung der Gln. (39) und (41) sowie der G1. (18), welche für Teststellung 2 auch hier gilt:

$$\tan(\alpha_i) = \frac{P_{i4} - P_{i3}}{2P_{i1} - P_{i3} - P_{i4} + 4P_{i2}} \tag{42}$$

Es kann nun analog zu der oben beschriebenen Vorgehensweise vorgegangen werden, indem analog zu G1. (32) gebildet wird

$$\begin{aligned} P_{z\ddot{a}hler} &= P_{i4} - P_{i3} \\ P_{nenner} &= 2P_{i1} - P_{i3} - P_{i4} + 4P_{i2} \end{aligned} \tag{43 a,b}$$

um anschließend gemäß den Gln.(33)-(36) den jeweiligen Phasenunterschied $\alpha_i$ zu bestimmen.

Die Phasendrehglieder $\Phi 1, \Phi 2,..$ werden anschließend, soweit es ihre Winkelauflösung zuläßt jeweils möglichst nahe auf eine Phasendrehung um $\Delta\Phi_1, \Delta\Phi_2,..$ so gestellt, dass für alle Antennen in größter Näherung gilt

$$\cos(\phi_i + \Delta\phi_i - \phi_{norm}) = 0 \quad \text{bzw.} \quad \Delta\phi_i = -\alpha_i \qquad i=1,2,...N$$

und somit alle Antennensignale auf die Normphase des Überlagerungssignals $E_{norm}$ gebracht werden. Dadurch erhöht sich die Amplitude des Überlagerungssignals, während dessen Phase gleich bleibt.

Insbesondere beim Empfang in einem von Mehrwegeausbreitung gestörten Empfang ist es erfindungsgemäß notwendig die Gleichphasung der Antennensignale in hinreichend kleinen Abschnitten der zurückgelegten Wegstrecke zu aktualisieren. Die Notwendigkeit hierfür geht anschaulich sowohl aus dem Verlauf der Amplituden der Empfangssignale der Antennen in Fig. 2b mit tiefen Einbrüchen der Signalpegel als auch aus dem Verlauf der Phasen der Empfangssignale in Fig. 2a hervor. Beide Verläufe zeigen an Hand des in Fig. 2b unten angegebenen Rasters, dass der Funkübertragungskanal nur über kurze Strecken von $\lambda/20$ als konstant anzusehen ist. Die Zeitabstände zur Aktualisierung der Gleichphasung der Signale sind somit derart einzustellen, dass auch bei höchster Fahrgeschwindigkeit der in der Zwischenzeit zurückgelegte Weg nicht wesentlich größer ist als $\lambda/20$, um die volle, durch Gleichphasung bewirkte Diversity-Wirkung zu erhalten. Zu diesem Zweck ist erfindungsgemäß ein Pegelprüfzyklus-Generator 11 zur Erzeugung eines Pegelprüfzyklus-Signals 10 in Pegelprüfzyklus- Zeitabständen $T_z$ vorhanden. Der Pegelprüfzyklus- Zeitabstand $T_z$ ist somit in der Weise zu wählen, dass bei größter Fahrgeschwindigkeit der zurückgelegte Weg kleiner ist als $\lambda/5$ und in zweckmäßiger Weise etwa $\lambda/20$ beträgt.

Bei digitaler Phasenmodulation, wie zum Beispiel beim QPSK Verfahren wechselt die Phase des in der Amplitude konstanten Hochfrequenzträgers in der Folge der gesendeten Symbole sprunghaft zwischen den Quadranten der komplexen Ebene. Aufgrund des vernachlässigbaren Laufzeitunterschieds zwischen den Empfangssignalen der auf einem Fahrzeug angebrachten Antennen Ant1, Ant2... erfolgen die Phasensprünge in den Empfangssignalen E1, E2.. praktisch gleichzeitig, bezogen auf die QPSK-Symboldauer $T_{sp}$. Damit bleibt der Unterschied der Phasenwinkel zwischen den Empfangssignalen E1, E2.. der einzelnen Antennen auch dann erhalten, wenn während des Pegelprüfzyklus, bestehend aus R Pegelprüfungen, mehrere unterschiedliche QPSK-Symbole gesendet werden. Unabhängig vom gesendeten Symbol ist die Amplitude des Hochfrequenzträgers konstant. Somit kann erfindungsgemäß die Phase zwischen den einzelnen Empfangssignalen der Antennen nach dem angegebenen Verfahren richtig ermittelt und die Gleichphasung herbeigeführt werden.

Bei der Realisierung eines erfindungsgemäßen Systems ist es häufig notwendig, die notwendigen Phaseneinstellungen in möglichst kurzer Zeit und mithilfe möglichst wenig technisch aufwändiger Phasenstellglieder und Mikroprozessoren zu bewerkstelligen. Dabei ist die erfindungsgemäß ausschließliche Verwendung von diskreten Phasenstellgliedern zur Darstellung diskreter Winkelwerte zwischen 0° und 360° - wie sie unter Verfahren 3 bereits geschildert wurde - aufgrund deren einfacher Realisierbarkeit und guter Kombinierbarkeit sehr hilfreich.

Unter Verfahren 3 wurde bereits ein diskretes Phasendrehglied mit den Festeinstellungen 0° und 90° für die Realisierung von Teststellung 4 eingeführt. Bei Kombination mit einem weiteren diskreten Phasendrehglied mit den fest einstellbaren Winkelwerten 0° und 180° können somit z.B. alle Winkel mit einer Schrittweite von 90° dargestellt werden.

Naturgemäß können ebenso Phasendrehglieder eingesetzt werden, deren Winkeldifferenz der fest eingestellten Phase 90° beträgt, wie es zum Beispiel für die Festeinstellungen -45° und +45° zutrifft. Dies trifft auf analoge Weise ebenso auf das kombinierte Phasendrehglied zu, dessen Winkeldifferenz der fest eingestellten Phase 180° beträgt, wie es zum Beispiel für die Festeinstellungen -90° und +90° zutrifft.

Naturgemäß geht bei einer MPSK-Modulation bei A = 1 mit der sich daraus ergebenden begrenzten Auflösung von 360°/(M*A) ( z.B. Auflösung 90° bei QPSK) für die Winkeldifferenz der fest eingestellten Phasen der Phasendrehglieder die Fähigkeit der Empfangsanlage nach der vorliegenden Erfindung verloren, den Winkel $\alpha i$ jeweils exakt zu Null einzustellen und damit mit der Kombination der Antennensignale das theoretisch maximale Summensignal zu erzeugen. Wie weiter unten gezeigt wird, ist der damit einhergehende Pegelverlust nicht zu groß, sodass auch mit dieser groben Auflösung von 360°/M-Winkelschritten (also 90° im Fall von QPSK) die mit der vorliegenden Erfindung einhergehenden Vorteile erreicht werden. Naturgemäß können diese Vorteile mit einer besseren Auflösung von 360°/(2M)-Winkelschritten (also 45°-Winkelschritte im Fall von QPSK) besser erreicht werden. Wie unten gezeigt wird, ist diese Auflösung bereits so gut, dass sie für die in einem MPSK System geforderte Winkeltoleranz technisch voll ausreicht und dass die Amplitude des resultierenden Empfangssignals sich kaum noch von der maximal erreichbaren Amplitude im Fall unendlich kleiner Winkelschritte unterscheidet. Die damit erreichbaren Ergebnisse rechtfertigen somit in der Regel keinesfalls die Anwendungen komplexer kontinuierlich einstellbarer Phasendrehglieder.

Mit dem Ziel den Rechenaufwand zur der Ermittlung des Winkels $\alpha i$ zu minimieren werden in einer besonders vorteilhaften Ausgestaltung der Erfindung im Folgenden einige Algorithmen angegeben, die es erlauben, den Winkel-bereich für den Winkel $\alpha i$ jeweils mit besonders geringem Rechenaufwand zu ermitteln.

Systembedingt ist im Rahmen des MPSK-Verfahrens die Vielzahl M*A der möglichen Winkelbereiche mit jeweils einer Winkelbreite von 360°/(M*A) für $\alpha i$ festgelegt und somit bekannt. Der Algorithmus baut auf den unter Verfahren 3 angegebenen Vorgehensweisen auf und unterscheidet sich insbesondere darin, dass ein Schwellenwert eingeführt wird und nur die Winkelbereiche für $\alpha$ abgefragt werden, die systembedingt auftreten können.

Hierzu wird als eine der Möglichkeiten der Quotient Q nach Gleichung 34 auf seine betragsmäßige Größe untersucht. Bei Auflösung A=1 können die zutreffenden möglichen 90° 360°/(4*1) Winkelbereiche für $\alpha i$ können dann für ein QPSK-System z.B. wie folgt angegeben werden:

$$
\begin{aligned}
-45° < \alpha_i < 45°: \quad & \text{trifft zu bei Wertebereich } |Q|<1 \text{ und } P_{Nenner}>0; \text{ Bereich } w = 0 \\
45° < \alpha_i < 135°: \quad & \text{trifft zu bei Wertebereich } |Q|>1 \text{ und } P_{Zähler}>0; \text{ Bereich } w = 1 \\
135° < \alpha_i < 225°: \quad & \text{trifft zu bei Wertebereich } |Q|<1 \text{ und } P_{Nenner}<0; \text{ Bereich } w = 2 \\
225° < \alpha_i < 315°: \quad & \text{trifft zu bei Wertebereich } |Q|>1 \text{ und } P_{Zähler}<0; \text{ Bereich } w = 3
\end{aligned}
$$

$$(44)$$

Bezeichnet man wie oben angegeben die Winkelbereiche aufsteigend mit w = 0, 1, 2,...M-1, so wird nach Ermittlungen des Winkelbereichs für $\alpha i$ durch Einschalten eines entsprechenden Phasendrehglieds mit dem Winkelwert $\Phi i = -w*360°/(M*1)$ das Signal der i-ten Antenne in die Nähe der Phasenlage des Signals Anorm zur Gleichphasung im Sinne des vorliegenden Patents gedreht. In einer weiteren vorteilhaften Ausgestaltung des Algorithmus wird die rechnerisch aufwändige und Zeit raubende Bildung des Quotient Q nach Gleichung 34 vermieden und der zutreffende Winkelbereich anhand der Leistungen $P_{Zähler}$ und $P_{Nenner}$ gemäß Gleichung 32 ermittelt. Dabei gelten folgende Zusammenhänge, mit deren Hilfe und mit einfachen Logikschaltungen der zutreffende Winkelbereich in extrem kurzer Zeit ermittelt werden kann.

$-45° < \alpha_i < 45°$: trifft zu bei Wertebereich $(P_{Zähler} < P_{Nenner}$ und $P_{Nenner} > 0$ und $P_{Zähler} > 0)$

oder bei Wertebereich $(-P_{Zähler} < P_{Nenner}$ und $P_{Nenner} > 0$ und $P_{Zähler} < 0)$

einzustellender Winkelwert des Phasendrehglieds: $\Phi i = 0°$

$45° < \alpha_i < 135°$: trifft zu bei Wertebereich $(P_{Zähler} > P_{Nenner}$ und $P_{Zähler} > 0$ und $P_{Nenner} > 0)$

oder bei Wertebereich $(P_{Zähler} > - P_{Nenner}$ und $P_{Zähler} > 0$ und $P_{Nenner} < 0)$

einzustellender Winkelwert des Phasendrehglieds: $\Phi i = -90°$

$135° < \alpha_i < 225°$: trifft zu bei Wertebereich $(P_{Zähler} < - P_{Nenner}$ und $P_{Nenner} < 0$ und $P_{Zähler} > 0)$

oder bei Wertebereich $(-P_{Zähler} < - P_{Nenner}$ und $P_{Nenner} < 0$ und $P_{Zähler} < 0)$

einzustellender Winkelwert des Phasendrehglieds: $\Phi i = -180°$

$225° < \alpha_i < 315°$: trifft zu bei Wertebereich $(-P_{Zähler} > - P_{Nenner}$ und $P_{Zähler} < 0$ und $P_{Nenner} < 0)$

oder bei Wertebereich $(-P_{Zähler} > P_{Nenner}$ und $P_{Zähler} < 0$ und $P_{Nenner} > 0)$

einzustellender Winkelwert des Phasendrehglieds: $\Phi i = -270°$

(45)

Bei einer weiteren besonders effektiven Methode zur Ermittlung des Winkelbereichs werden zunächst auf einfache Weise die Summe aus Zähler und Nenner $P_{Zähler} + P_{Nenner}$) und die Differenz aus Zähler und Nenner ($P_{Zähler} - P_{Nenner}$) bestimmt. Mithilfe der einfachen logischen Zusammenhänge lässt sich daraus der jeweils zutreffende Winkelbereich bestimmen.

$-45° < \alpha_i < 45°$: trifft zu bei Wertebereich $($Differenz $< 0$ und $P_{Nenner} > 0$ und $P_{Zähler} > 0)$

oder bei Wertebereich $($Summe $> 0$ und $P_{Nenner} > 0$ und $P_{Zähler} < 0)$

einzustellender Winkelwert des Phasendrehglieds: $\Phi i = 0°$

$45° < \alpha_i < 135°$: trifft zu bei Wertebereich $($Differenz $> 0$ und $P_{Zähler} > 0$ und $P_{Nenner} > 0)$

oder bei Wertebereich $($Summe $> 0$ und $P_{Zähler} > 0$ und $P_{Nenner} < 0)$

einzustellender Winkelwert des Phasendrehglieds: $\Phi i = -90°$

$135° < \alpha_i < 225°$: trifft zu bei Wertebereich$($Summe $< 0$ und $P_{Nenner} < 0$ und $P_{Zähler} > 0)$

oder bei Wertebereich$($Differenz $> 0$ und $P_{Nenner} < 0$ und $P_{Zähler} < 0)$

einzustellender Winkelwert des Phasendrehglieds: $\Phi i = -180°$

$225° < \alpha_i < 315°$: trifft zu bei Wertebereich$($Differenz $< 0$ und $P_{Zähler} < 0$ und $P_{Nenner} < 0)$

oder bei Wertebereich$($Summe $< 0$ und $P_{Zähler} < 0$ und $P_{Nenner} > 0$

einzustellender Winkelwert des Phasendrehglieds: $\Phi i = -270°$

(46)

Der Vollständigkeit halber wird noch eine Darstellung ohne vorhergehende Subtraktion der Leistungen angegeben. Dabei werden die Vorzeichen von Summe, Zähler, Nenner und Differenz an Hand der folgenden Gleichungen ermittelt.
Zum Beispiel gilt für das vorteilhafte Verfahren 3 entsprechend Gl. 32:

$$P_{Nenner} < 0 \text{ wenn Pt3} > (Pt1+Pt2), \qquad P_{Nenner} > 0 \text{ wenn Pt3} < (Pt1+Pt2)$$

$$P_{Zähler} < 0 \text{ wenn Pt4} < (Pt2+Pt3), \qquad P_{Zähler} > 0 \text{ wenn Pt4} > (Pt2+Pt3)$$

$$Summe < 0 \text{ wenn 2Pt3} > (Pt4+Pt1), \qquad Summe > 0 \text{ wenn 2Pt3} < (Pt4+Pt1)$$

$$Differenz > 0 \text{ wenn Pt4} > (Pt1+2Pt2), \qquad Differenz < 0 \text{ wenn Pt4} < (Pt1+2Pt2)$$

(47)

Für den Fall, dass für M = 4 eine größere Auflösung, z.B. A = 2 des Winkelbereichs notwendig ist, können auf analoge Weise die gleichen Schemata, wie sie in den Gleichungssätzen (45) -(47) dargestellt sind, zur Anwendung kommen. Die Winkelbreite der Phasendrehglieder ist demnach 360°/(M*A) = 360°/(4*2) = 360° zu wählen. Zum Beispiel ergibt sich in Analogie zum Gleichungssatz (45) für eine Auflösung von 360°/(M*A) = 360°/(4*2) = 45° folgender Zusammenhang:

-22,5° < $\alpha_i$ < 22,5°: trifft zu bei Wertebereich |Q| < 0.4142 (=tan22,5°) und $P_{Nenner}$ > 0 einzustellender Winkelwert des Phasendrehglieds: $\Phi i = 0°$
bzw.

-22,5° < $\alpha_i$ < 22,5°: trifft zu bei (($P_{Zähler}$ < 0.4142 $P_{Nenner}$) und ($P_{Nenner}$ > 0) und ($P_{Zähler}$ > 0)) oder bei ((-$P_{Zähler}$ < 0.4142 $P_{Nenner}$) und ($P_{Nenner}$ > 0) und ($P_{Zähler}$ < 0)) einzustellender Winkelwert des Phasendrehglieds: $\Phi i = 0°$

Auch die übrigen Winkelbereiche für 22,5° < $\alpha i$ < 67,5° usw... können wie oben für diese Auflösung definiert werden.

Bezeichnet man wie oben angegeben die Winkelbereiche aufsteigend mit
w = 0, 1, 2,..(M*A)-1, also w = 0,1,2,..8-1 so wird nach Ermittlungen des Winkelbereichs für $\alpha i$ durch Einschalten eines entsprechenden Phasendrehglieds mit dem Winkelwert
$\Phi_i$ = -w*360°/(4*2) das Signal der i-ten Antenne in die Nähe der Phasenlage des Signals $A_{norm}$ zur Gleichphasung im Sinne des vorliegenden Patents gedreht.

In einer vorteilhaften Ausgestaltung der Erfindungen werden nur solche Antennensignale zur Bildung des kombinierten Signals 14 herangezogen, deren aktueller Pegel in Bezug auf das Eigenrauschen des Systems und in Bezug auf die Signale der anderen Antennen einen positiven Beitrag zum Signal-Rauschverhältnis des kombinierten Signals 14 leisten. Der Ausschluss solcher Antennensignale kann vorteilhaft über entsprechende, in der Rechnereinrichtung 7 erzeugte Schalterstellsignale 15 erfolgen.

Weitere besonders wirtschaftliche Ausführungsformen einer Empfangsanlage nach der Erfindung

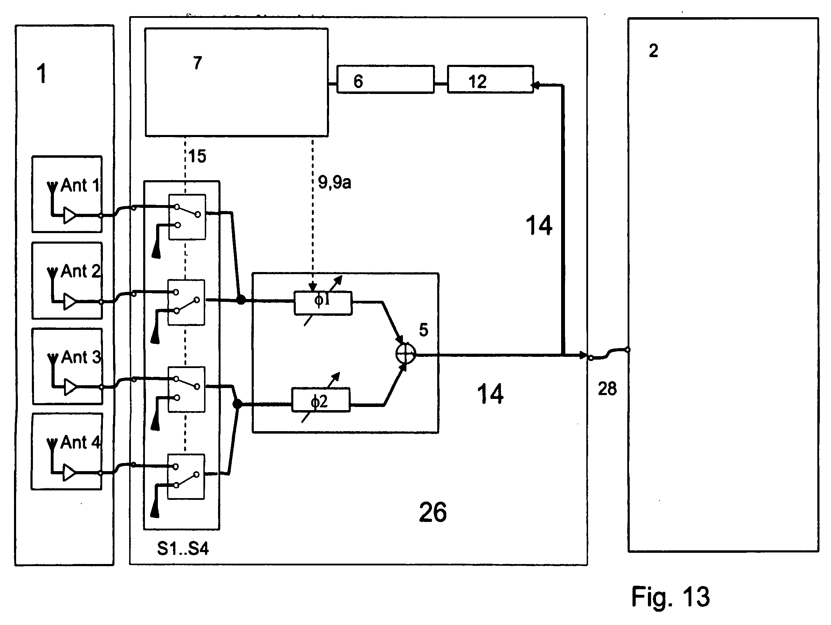

Fig. 13 zeigt eine Empfangsanlage wie Fig. 5a mit vier Antennen A1..A4, jedoch mit Vorauswahl kombinierbarer Antennen mit dem Ziel der Einsparung von Phasendrehgliedern. Aus den dargestellten vier Antennensignalen werden jeweils zwei Antennen über Schalter zu einem Phrasendrehglied $\Phi$1 bzw. $\Phi$2 alternativ durchgeschaltet. Damit ist es möglich, das kombinierte Signal 14 aus den Antennensignalen mit den größeren Empfangspegeln jeweils aus den Paaren 1-2 und 3-4 zu bilden.

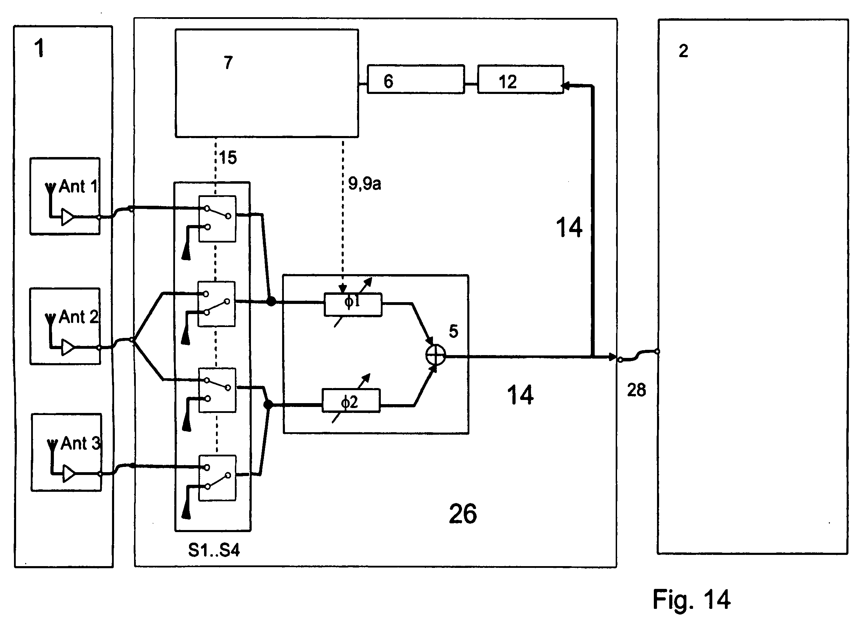

In Fig. 14 ist eine Empfangsanlage wie Fig. 5a mit drei Antennen A1...A3 dargestellt, in welcher ebenfalls nur zwei Phasendrehglieder $\Phi$1 und $\Phi$2 eingesetzt werden. Mit Hilfe der vier Schalter S1..S4 können alle drei verschiedenen Kombinationsmöglichkeiten der Antennensignale getestet und das kombinierte Signal 14 aus den beiden größten mit gleicher Phase überlagerten Antennensignalen gebildet werden.

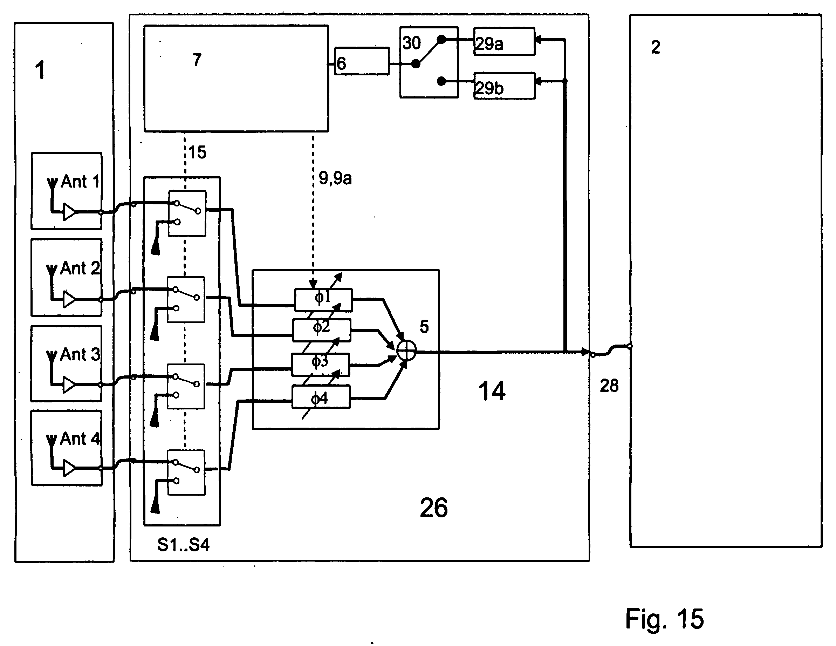

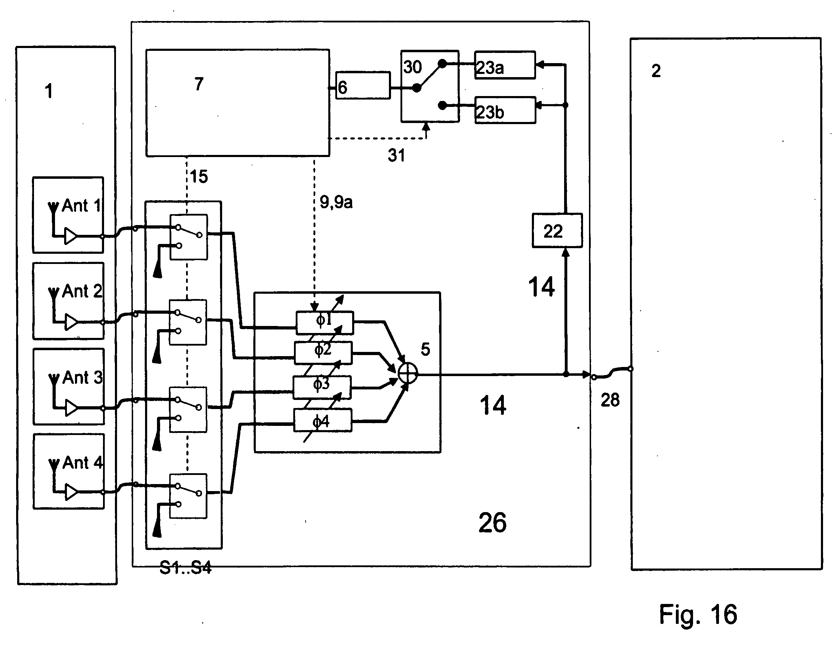

In kombinierten Empfangsanlagen mit mehreren Empfangskanälen, wie in Fig. 5b, deren Frequenzlage jedoch so gestaltet ist, dass eine in der Frequenz scharfe Trennung nicht erforderlich ist, können aufwändigerer HF-ZF-Teil 12 a, b entfallen und im Interesse der Wirtschaftlichkeit zur Trennung der Kanäle einfachere HF-Bandpass-Filter 29 eingesetzt werden. Ebenso kann in einer weiteren vorteilhaften Ausgestaltung der Erfindung für beide Kanäle ein gemeinsamer Pegeldetektor 6 eingesetzt werden, welcher entsprechend mit einem Kanalwahl-Schalter 30 angewählt wird, wie es in Fig. 15 für HF-Signale und in Fig. 16 für in der Frequenz in eine niedrigere Frequenzebene umgesetzte Signale dargestellt ist. Der Kanalwahlschalter 30 wird mit Kanalwahlsignalen 31 gesteuert, welche in der Rechnereinrichtung 7 generiert werden.

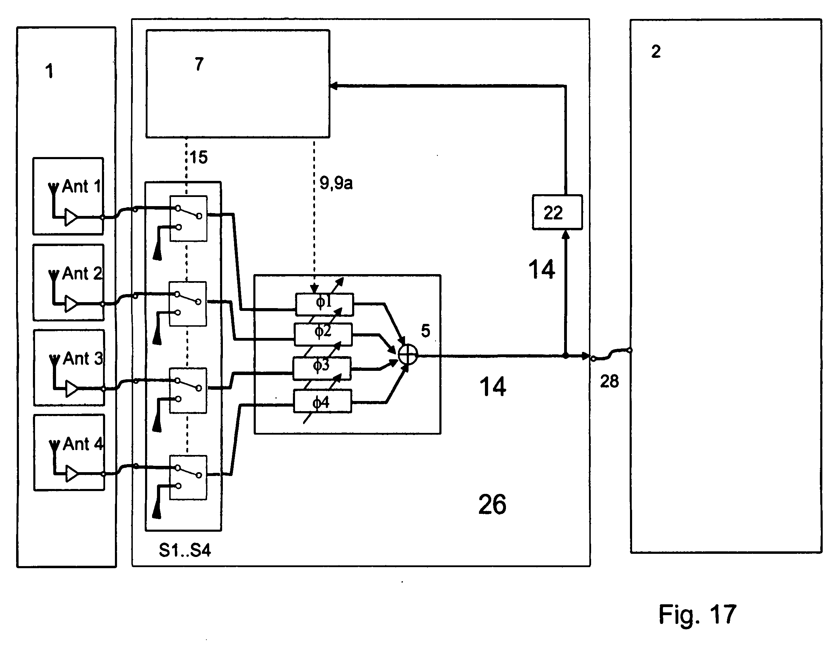

In einer weiteren besonders vorteilhaften Ausführungsform einer Empfangsanlage nach der Erfindung wird die digitale Rechnereinrichtung 7 in Fig. 6 mit eingangsseitigem AD-Wandler zur digitalen ZF-Signalverarbeitung und Pegelbewertung versehen. Diese Anlage ist beispielhaft in Figur 17 dargestellt.

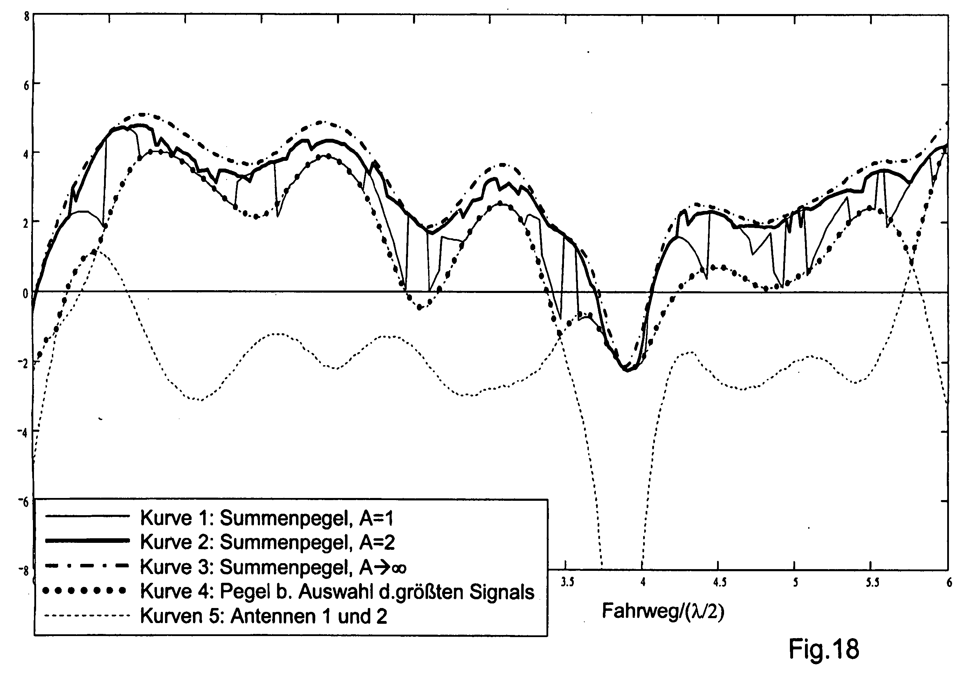

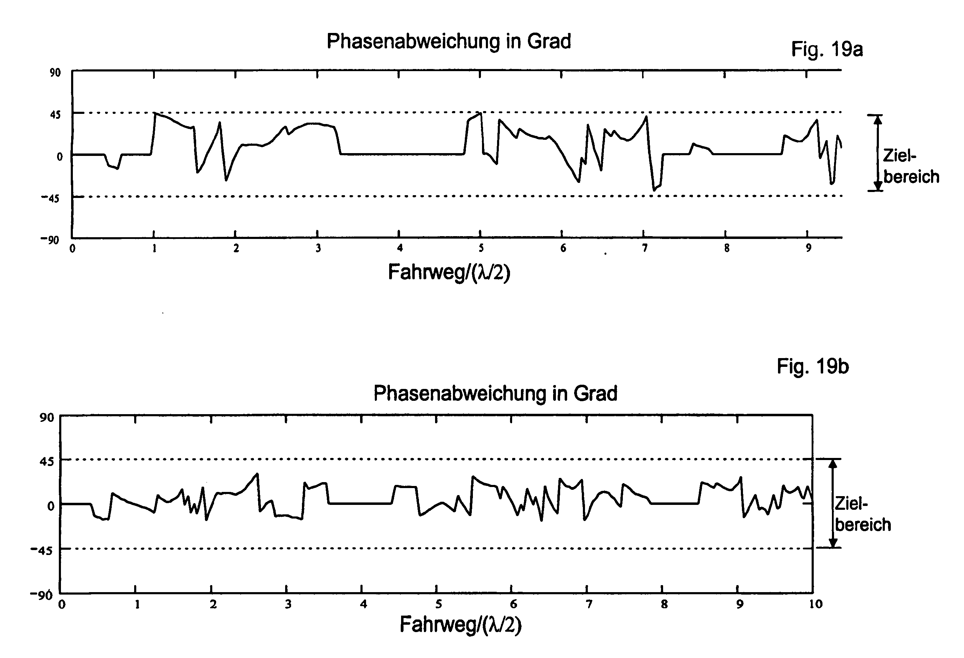

Die folgenden Betrachtungen dienen dem Nachweis darüber, dass bei einem MPSK System die Anwendung von einfach zu realisierenden Phasendrehgliedern mit diskreter Winkeleinstellung gerechtfertigt ist. Hierfür ist in Fig. 18 der Verlauf der Amplituden der QPSK-Empfangssignale am Empfängereingang über der Fahrstrecke bei Verwendung von zwei Antennen in dem vorteilhaften Verfahren 3 in verschiedenen Szenarien vergleichend dargestellt. Es zeigt sich, dass Kurve 2, welche auf die Empfangsanlage nach der Erfindung bei Verwendung von Phasendrehgliedern mit diskreten Phasendrehwinkeln von 45° (Auflösung A=2) zutrifft von Kurve 3 für eine Empfangsanlage nach der Erfindung bei idealer Gleichphasung der beiden Antennensignale (A = unendlich) praktisch nicht unterscheidet. Werden Phasendrehglieder mit diskreten Phasendrehwinkeln von 90° (Auflösung A=1) verwendet,wie in Kurve 1 zu sehen, so ist der Amplitudenverlauf sprunghaft was dem Empfang der QPSK-Signale jedoch nicht schadet. Auch in diesem Fall liegt der Amplitudenverlauf immer noch höher oder auf gleicher Höhe wie die Amplitude der jeweils besten Antenne. Kurve 4 zeigt zum Vergleich den Pegelverlauf im Falle der Auswahl der jeweils besten Antenne bzw. einer Empfangsanlage mit Schaltdiversity, wobei jeweils das aktuelle größere Antennensignal ohne Summenbildung zum Empfänger geschaltet ist. Im Fall von Schaltdiversity ohne die erfindungsgemäße Winkelkorrektur hätte dieses Signal jedoch ohne weitere technische Maßnahmen den entscheidenden Nachteil, dass beim Wechsel des Antennensignals jeweils die Referenzphase im Empfänger verloren geht und die QPSK-Symbole im Empfänger nicht mehr den zutreffenden Winkelbereichen zugeordnet werden können. Es ist einer der wesentlichen Vorteile der vorliegenden Erfindung, ohne solche Maßnahmen auszukommen. Weiterhin ist sichtbar, dass der Amplitudenverlauf der vorliegenden Erfindungen unabhängig von der Wahl der diskreten Phasendrehwinkel gegenüber Schaltdiversity meist höhere Werte erzielt. Schließlich ist in Figur 19a der Verlauf der Abweichung der Phase des zugehörigen kombinierten Signals 14 bei Anwendung von Phasendrehgliedern mit der Winkelauflösung von 90° (A = 1) über der Fahrstrecke aufgetragen. Über die gesamte Fahrstrecke bleibt der Absolutwert der Abweichung innerhalb des tolerierbaren Winkelbereiches von -45° bis +45°. Im Interesse einer größeren Detektionssicherheit der empfangenen QPSK-Symbole ist jedoch eine größere Winkelauflösung von 45° (A = 2) zu empfehlen, welche zu kleineren Winkelabweichungen führt, wie es aus Fig.19b hervorgeht. Der Begriff "Gleichphasung" im Sinne der vorliegenden Erfindung ist somit nicht auf kontinuierliche Gleichphasung der Antennensignale im strengen idealisierten Sinne eingeengt. "Gleichphasung" im Sinne der vorliegenden Erfindung ist vielmehr auch dann gegeben, wenn die verbleibende Phasenabweichung der Antennensignale untereinander stets hinreichend klein ist, so dass diese sich bei Überlagerung gegenseitig unterstützen und die verbleibenden Winkelabweichungen im kombinierten Signal 14 klein genug sind, damit beim jeweils vorliegenden MPSK System Fehldetektionen vermieden werden.

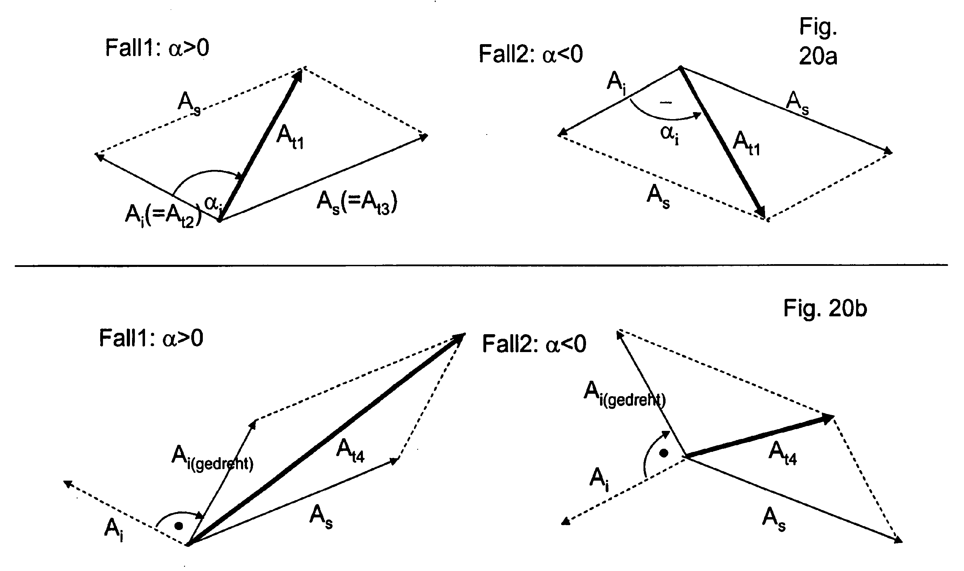

In Ergänzung zu den obigen Ausführungen zu dem besonders vorteilhaften Verfahren 3 wird anhand der Figuren 20a und 20b erläutert, auf welche Weise der für die Einstellung der Phasendrehglieder notwendige Phasendrehwinkel $\alpha_i$ nach Betrag und Vorzeichen ermittelt werden kann. Hierfür werden bei verschiedenen Teststellungen t1..t4 Pegel verschiedener Signale gemessen. Wie in Figur 10b dargestellt, beschreibt As die komplexe Summe der bereits gleichphasig überlagerten Signale.

In den Teststellungen t2 und t3 werden die Pegel der Signale Ai und As im Pegelindikator 6 festgestellt. In der Teststellung t1 wird der Pegel des Summensignals At1 dieser beiden Signale ermittelt. Aus diesen drei Pegelwerten ergeben sich die in Figur 20a dargestellten beiden Möglichkeiten des Vorzeichens für den Winkels $\alpha_i$, welcher nunmehr seinem Betragen nach bekannt ist. Zur Unterscheidungen der beiden möglichen Fälle wird in einer weiteren Teststellung t4 das Summensignal aus dem um den positiven Winkel von 90° gedrehten Signal Ai und dem Signal As gebildet und dessen Pegel gemessen. Aus den geometrischen Beziehungen der beiden Parallelogramme in Fig. 20b kann rechnerisch das wahre Vorzeichen des Winkels $\alpha_i$ angegeben werden.

In einer vorteilhaften Ausgestaltung der Erfindung sind bei Fahrt in einem durch Mehrwegeausbreitung gestörten Empfangsfeld (Rayleighfeld) die Zeitabstände Tz zwischen den Pegelprüfzyklus-Signalen (10) so kurz gewählt, dass der in diesem Zeitabstand Tz zurückgelegte Fahrweg nicht größer ist als 1/20 der Länge λ der hochfrequenten Trägerwelle beträgt. Für Anwendungen zum Beispiel bei Frequenzen um 2,3 GHz erfordert dies einen Zeitabstand von Tz = 230μs Tz zwischen den Pegelprüfzyklus-Signalen 10 bei einer Fahrgeschwindigkeit von etwa 100 km/h. Über den Fahrweg von 1/20 λ ändert sich die Phase eines Antennensignals beim Empfang im Rayleighfeld typisch um etwa 20°. Dieser Wert kann jedoch beim Auftreten starker Signaleinbrüche überschritten werden. Solche Antennensignale sind jedoch gemäß den obigen Ausführungen zu diesem Zeitpunkt von der Bildung des kombinierten Signals 14 über das Pegelkriterium auszuschließen. Damit ist sichergestellt, dass sich ein Antennensignal, welches nicht gerade von einem Pegeleinbruch betroffen ist, über den Zeitabstand von Tz nur wenig sowohl in der Phase als auch in der Amplitude ändert. Dieser Sachverhalt kann in einer vorteilhaften Ausgestaltung der Erfindung zur Prüfung der Plausibilität bei der Ermittlung des für die Gleichphasung notwendigen Winkels $\alpha_i$ herangezogen werden. Ergibt sich bei der Ermittlung des Winkels $\alpha_i$ nach einem der oben aufgeführten Verfahren in aufeinander folgenden Prüfzyklen für ein Antennensignal ein zu großer Winkelunterschied, so wird der ermittelte Wert von $\alpha_i$ als falsch erkannt und kann durch eine unmittelbare Wiederholung des Prüfvorgangs korrigiert werden. Andererseits wird in einer vorteilhaften Ausgestaltung der Erfindungen die erneute Gleichphasung der Antennensignale dann unterlassen, wenn der Pegel des kombinierten Signals 14 für eine sichere Detektion der empfangenen Symbole im Empfänger hinreichend groß ist. Dabei ist es lediglich notwendig, in Zeitabständen Tz ausschließlich den Pegel des kombinierten Signals 14 in der Teststellung t1 zu erfassen. Die weiteren Messungen zur Feststellung des Winkels $\alpha_i$ der Antennensignale sowie die anschließende Neueinstellung der Phasendrehglieder Φ1, Φ2..kann in diesen Situationen entfallen. Nur nach Unterschreitung des für die sichere Detektion notwendigen Minimalpegels für das kombinierte Signal 14 wird eine Gleichphasung aller Antennen über die notwendigen Teststellungen t1..t4 gemäß den obigen Ausführungen wieder herbeigeführt. Damit ist der Vorteil eines minimalen Verlustes an Information, bedingt durch Testvorgänge, verbunden. Diese Vorgehensweise ist vorteilhaft als Programme in der Rechnereinrichtung 7 abgelegt und wird zur Steuerung der Empfangsanlage an Hand des Pegelkriteriums für das kombinierte Signal 14 während der Fahrt herangezogen.

Empfangsanlage mit Gleichphasung von Antennensignalen

Mehrantennenanlage 1
Empfängerschaltung 2
Pegelsignal 4
Kombinationsschaltung 5
Pegelindikator 6
Rechnereinrichtung 7
Pegelmessproben 8
Phaseneinstellsignal 9
Pegelprüfzyklus-Signal 10
Pegelprüfzyklus-Generator 11
HF-ZF-Teil 12a,b
Basisband-Signalverarbeitung 13
kombiniertes Signal 14
Schalterstellsignale 15
Algorithmus 16
Getakteter Pegelprüfumschalter 17
Mikroprozessor 18
Digitalsignal 19
einfache Schaltlogik 20
Frequenzweiche 21
Mehrkanal-Frequenzumsetzer 22
Bandpässe 23a,b,c
Steuerbarer Monokanal-Frequenzumsetzer 24
Kanalwahlsignale 25a, b
Getrennte Diversityeinheit 26
Taktsignale 27
Empfängerleitung 28
HF-Bandpass-Filter 29
Kanalwahl-Schalter 30
Kanalwahlsignale 31

Antennen Ant1, Ant2...AntN,
Schaltelemente S1, S2..
Pegelprüfzyklus- Zeitabstand $T_z$
Anzahl der Pegelprüfungen R
MPSK-Symboldauer $T_{sp}$
Empfangssignale E1, E2...EN
Phasendrehglieder Φ1, Φ2..
Pegelprüfzeit $T_p$
Kanalbandbreite B
unterschiedliche Frequenzbänder a,b,c
Signal $E_{norm}$ vor der Initiierung des Pegelprüfzyklus
Phase $\Phi_{norm}$ des Signals $E_{norm}$ vor der Initiierung des Pegelprüfzyklus
Phasen $\Phi_i$ der Empfangssignale E1, E2...EN
Phasendifferenz $\alpha_i$
vorgegebener Phasenveränderungswert $\Delta\Phi_t$
Den Empfangssignalen $E_i$=E1, E2,...EN zugeordnete Ordnungszahl i

**Patentansprüche**

**1.** Verfahren zur rechnerischen Ermittlung von Phasenunterschieden zwischen aktuellen komplexen Amplituden von unterschiedlichen, frequenz- oder phasenmodulierten Hochfrequenzsignalen nur aus deren Amplitudenbeträgen und der anschließenden Gleichphasung und positiven Überlagerung von Antennensignalen in einer Empfangsanlage für Fahrzeuge mit einer Mehrantennenanlage (1) mit mindestens zwei Antennen (Ant1, Ant2, ...), einer Einrichtung ($\Phi$1, $\Phi$2, ...) zur Gleichphasung und einer nachgeschalteten Empfängerschaltung (2), umfassend die folgenden Schritte:

- Messen der Amplitude $A_i$ eines ersten Empfangssignals $E_i$ der Antenne i;
- Messen der Amplitude $A_{norm}$ eines Überlagerungssignals $E_{norm}$, das die Summe aller Empfangssignale E1, E2, ... einschließlich des ersten Empfangssignals $E_i$ darstellt;
- Messen der Amplitude $A_s$ eines Überlagerungssignals, das die Summe aller Empfangssignale E1, E2, ... ohne das erste Empfangssignal $E_i$ darstellt;
- rechnerisches Ermitteln des Phasenunterschieds $\alpha_i$ zwischen der komplexen Amplitude $A_i$ des ersten Empfangssignals $E_i$ und der komplexen Amplitude $\underline{A}_{norm}$ des Überlagerungssignals $E_{norm}$ aus den Amplituden $A_i$, $A_{norm}$ und $A_s$;
- Angleichen der Phase des Empfangssignals $E_i$ an die Phase des Überlagerungssignals $E_{norm}$ unter Verwendung des ermittelten Phasenunterschieds $\alpha_i$ derart, dass der Empfängerschaltung (2) die maximale Amplitude der Überlagerung der Empfangssignale zugeführt wird.

**2.** Verfahren zur rechnerischen Ermittlung von Phasenunterschieden zwischen aktuellen komplexen Amplituden von unterschiedlichen, frequenz- oder phasenmodulierten Hochfrequenzsignalen nur aus deren Amplitudenbeträgen und der anschließenden Gleichphasung und positiven Überlagerung von Antennensignalen in einer Empfangsanlage für Fahrzeuge mit einer Mehrantennenanlage (1) mit mindestens zwei Antennen (Ant1, Ant2, ...), einer Einrichtung ($\Phi$1, $\Phi$2, ...) zur Gleichphasung und einer nachgeschalteten Empfängerschaltung (2), umfassend die folgenden Schritte:

- Messen der Amplitude $A_{norm}$ eines Überlagerungssignals $E_{norm}$ aller Antennen, das die Summe mehrerer Empfangssignale E1, E2, ... einschließlich eines ersten Empfangssignals $E_i$ der Antenne i darstellt;
- Ermitteln des Phasenunterschieds $\alpha_i$ zwischen dem ersten Empfangssignal $E_i$ und dem kombinierten Signal $E_{norm}$ durch folgende Schritte:

a) Drehen der Phase des ersten Empfangssignals $E_i$ um einen bekannten Winkel $-\Delta\Phi_{t2}$,
b) anschließendes Messen der Amplitude $A_{t2}$ des daraus entstehenden Überlagerungssignals,
c) Drehen der Phase des ersten Empfangssignals $E_i$ um einen anderen bekannten Winkel $\Delta\Phi_{t3}$,
d) anschließende Messung der Amplitude $A_{t3}$ des daraus entstehenden Überlagerungssignals;

- rechnerisches Ermitteln des Phasenunterschieds $\alpha_i$ aus den Amplituden $A_{norm}$, $A_{t2}$ und $A_{t3}$ und den bekannten Phasenwinkeln $-\Delta\Phi_{t2}$ und -; und
- Angleichen der Phase des Empfangssignals $E_i$ an die Phase des Überlagerungssignals $E_{norm}$ unter Verwendung des ermittelten Phasenunterschieds $\alpha_i$ derart, dass einer Empfängerschaltung (2) die maximale Amplitude der Überlagerung der Empfangssignale zugeführt wird.

**3.** Verfahren zur rechnerischen Ermittlung von Phasenunterschieden zwischen aktuellen komplexen Amplituden von unterschiedlichen, frequenz- oder phasenmodulierten Hochfrequenzsignalen nur aus deren Amplitudenbeträgen und der anschließenden Gleichphasung und positiven Überlagerung der Antennensignale, umfassend die folgenden Schritte:

- Messen der Amplitude $A_{t2}$ eines ersten Empfangssignals $E_i$ der Antenne i;
- Messen der Amplitude $A_{norm}$ eines Überlagerungssignals $E_{norm}$ aller Antennen, das die Summe mehrerer Empfangssignale E1, E2, ... einschließlich des ersten Empfangssignals $E_i$ darstellt;
- Ermitteln des Phasenunterschieds $\alpha_i$ zwischen dem ersten Empfangssignal $E_i$ und dem kombinierten Signal $E_{norm}$ durch folgende Schritte:

a) Drehen der Phase des ersten Empfangssignals $E_i$ um den Winkel $\Delta\Phi_t$ = -90°,
b) anschließendes Messen der Amplitude $A_{t3}$ des daraus entstehenden Überlagerungssignals,
c) Drehen der Phase des ersten Empfangssignals $E_i$ um den Winkel $\Delta\Phi_t$ = +90°,

d) anschließendes Messen der Amplitude $A_{t4}$ des daraus entstehenden Überlagerungssignals;

- rechnerisches Ermitteln des Phasenunterschieds $\alpha_i$ aus den Amplituden $A_{norm}$, $A_{t2}$, $A_{t3}$ und $A_{t4}$ und den bekannten Phasenwinkeln $\Delta\Phi_t = -90°$ und $\Delta\Phi_t = +90$; und
- Angleichen der Phase des Empfangssignals $E_i$ an die Phase des Überlagerungssignals $E_{norm}$ unter Verwendung des ermittelten Phasenunterschieds $\alpha_i$ derart, dass einer Empfängerschaltung (2) die maximale Amplitude der Überlagerung der Empfangssignale zugeführt wird.

4.  Empfangsanlage für frequenzmodulierte, bzw. in der Phase modulierte Hochfrequenzsignale für Fahrzeuge mit einer Mehrantennenanlage (1) mit mindestens zwei Antennen (Ant1, Ant2, ...), jeweils einem, im Empfangspfad der entsprechenden Antenne befindlichen, individuell einstellbaren Phasendrehglied ($\Phi$1, $\Phi$2, ...) und einer nachgeschalteten Empfängerschaltung (2), zur Durchführung des Verfahrens nach einem der Ansprüche 1 - 3, umfassend:

    ein individuell einstellbares Schaltelement (S1, S2, ...) im Empfangspfad jeder Antenne (Ant1, Ant2, ...) zur Durchschaltung bzw. Unterbrechung des Signalflusses, wobei

    - die über die Phasendrehglieder ($\Phi$1, $\Phi$2, ...) und die einstellbaren Schaltelemente (S1,S2, ...) geleiteten Empfangssignale (E1, E2, ...) einer linearen Kombinationsschaltung (5) zugeführt sind und das kombinierte Signal der Empfängerschaltung (2) zugeführt ist,
    - ein Pegelindikator (6) zur Anzeige des Pegels des kombinierten Signals (14) in Form eines Pegelsignals (4) und eine Rechnereinrichtung (7), der dieses Pegelsignal (4) zugeführt ist, vorhanden sind,
    - in der Rechnereinrichtung (7) ein Algorithmus (16) zur rechnerischen Ermittlung der Phasenunterschiede der bei gegebener Einstellung der Phasendrehglieder ($\Phi$1, $\Phi$2, ...) am Eingang der Kombinationsschaltung (5) befindlichen Empfangssignale (E1, E2, ...) aus deren Pegelverhältnissen in der Weise abgelegt ist, dass die rechnerische Ermittlung dieser Phasenunterschiede anhand von zeitlich auf einander folgend durchgeführten, über durch die Rechnereinrichtung (7) bewirkte Schalterstellsignale (15) und Phasenstellsignale (9) bei unterschiedlichen definierten Einstellungen der Schaltelemente (S1, S2, ...) bzw. der Phasendrehglieder ($\Phi$1, $\Phi$2, ...) gewonnenen Pegelmessproben (8) des Pegelsignals (4) gegeben ist, und
    - anhand der rechnerisch ermittelten Phasenunterschiede Phasenstellsignale (9) generiert sind für die darauf folgende Einstellung der Phasendrehglieder ($\Phi$1, $\Phi$2, ...) zur Gleichphasung der bei Durchschaltung der einstellbaren Schaltelemente (S1, S2, ...) am Eingang der Kombinationsschaltung (5) befindlichen Empfangssignale (E1, E2, ...).

5.  Empfangsanlage nach Anspruch 4,
    **dadurch gekennzeichnet, dass**
    ein Pegelprüfzyklus-Generator (11) ein Pegelprüfzyklus-Signal (10) generiert, das der Rechnereinrichtung (7) zugeführt ist für die zyklische Erfassung von bei unterschiedlichen Einstellungen der Schaltelemente (4) bzw. der Phasendrehglieder ($\Phi$1, $\Phi$2, ...) ermittelten Pegelmessproben (8) von jeweils einer für die Pegelindikation notwendigen kurzen Pegelmessdauer (Tp), während dieser jeweils die Einstellung der Schaltelemente (S1, S2, ...) bzw. der Phasendrehglieder ($\Phi$1, $\Phi$2, ...) fest gehalten ist und nach Ablauf des Pegelprüfzyklus-Signals (10) Phasenstellsignale (9) zur Einstellung der Phasendrehglieder ($\Phi$1, $\Phi$2, ...) zur Gleichphasung der am Eingang der Kombinationsschaltung (5) befindlichen Empfangssignale (E1, E2, ...) initiiert sind.

6.  Empfangsanlage nach Anspruch 4 und 5,
    **dadurch gekennzeichnet, dass**
    die Gleichphasung der am Eingang der Kombinationsschaltung (5) befindlichen Empfangssignale (E1, E2, ...) durch wiederholtes Auftreten von Pegelprüfzyklus-Signalen (10) in Pegelprüfzyklus- Zeitabständen (Tz) laufend aktualisiert wird und diese Zeitabstände (Tz) in der Weise an die zeitlichen Änderung der Empfangsbedingungen angepasst sind, dass die durch die zeitliche Änderung des Funkübertragungskanals bedingten Phasenänderungen der Empfangssignale (E1, E2, ...) während des Pegelprüfzyklus- Zeitabstands (Tz) hinsichtlich Empfangsstörungen tolerierbar klein sind.

7.  Empfangsanlage nach Anspruch 6,
    **dadurch gekennzeichnet, dass**
    die Zeitabstände (Tz) zwischen den Pegelprüfzyklus-Signalen (10) hinreichend kurz gewählt sind, dass ein in diesem Zeitabstand (Tz) zurückgelegter Fahrweg nicht mehr als 1/5 der Länge der hochfrequenten Trägerwelle beträgt.

8.  Empfangsanlage nach Anspruch 7 für digital modulierte Hochfrequenzsignale nach dem MPSK-Verfahren,

**dadurch gekennzeichnet, dass**
die Aktualisierung der Gleichphasung zeitlich unabhängig von den Symboltakt- und Rahmensignalen der MPSK-Modulation gegeben ist.

9. Empfangsanlage nach Anspruch 4 bis 8,
**dadurch gekennzeichnet, dass**
in der Mehrantennenanlage (1) N Antennen (Ant1, Ant2...AntN) und Schaltelemente (S1, S2..SN) vorhanden sind und mit dem in der Rechnereinrichtung (7) abgelegten Algorithmus zur rechnerischen Ermittlung der Phasenunterschiede der am Eingang der Kombinationsschaltung (5) befindlichen Empfangssignale (E1, E2..) ein Pegelprüfzyklus-Signal (10) in der Weise gestaltet ist, dass beginnend zwei Pegelmessproben (8) bei alternativem Schließen zweier Schaltelemente (S1, S2) einer ersten und einer zweiten Antenne (Ant1, Ant2) und eine Pegelmessprobe (8) bei gleichzeitigem Schließen der beiden diesen Antennen (Ant1, Ant2) zugehörigen Schaltelemente (S1, S2) gewonnen sind bei jeweils geöffnetem Zustand aller übrigen Schaltelemente (S3, ..SN) und aus diesen drei Pegelmessproben (8) der Phasenunterschied zwischen den zugehörigen, am Eingang der Kombinationsschaltung (5) befindlichen Empfangssignalen (E1, E2) errechnet ist und durch Einstellung des Phasendrehglieds $\Phi2$) Gleichphasung der beiden Empfangssignale (E1, E2) gegeben ist und dass ggf. zur sukzessiven Gleichphasung des Empfangssignals einer weiteren Antenne (Ant3) die Schaltelemente (S1, S2) der bereits für Gleichphasung eingestellten Phasendrehglieder ($\Phi1$, $\Phi2$) der Antennen (Ant1, Ant2) - unter Beibehaltung der Einstellung der Phasendrehglieder ($\Phi1$, $\Phi2$) - gleichsinnig geschaltet sind und die derart kombinierten beiden ersten Antennen (Ant1, Ant2) hinsichtlich des Ablaufs der Gleichphasung an die Stelle der vormals ersten Antenne (Ant1) treten und das Schaltelement (S3) der weiteren Antenne (Ant3) entsprechend der vormals zweiten Antenne (Ant2) zur Ermittlung entsprechender Pegelmessproben (8) eingestellt sind und durch Einstellung des Phasendrehglieds ($\Phi3$) der weiteren Antenne (Ant3) anhand der ermittelten Phasendifferenz Gleichphasung der Empfangssignale (E1, E2, E3) am Eingang der Kombinationsschaltung (5) erreicht ist, und so fort, bis durch Wiederholung des Vorgangs Gleichphasung für alle N Empfangssignale (E1, E2, E3,..EN) hergestellt ist.

10. Empfangsanlage nach Anspruch 4 bis 9,
**dadurch gekennzeichnet, dass**
die Empfangsanlage für den Empfang von mehreren unterschiedlichen Frequenzbändern (a, b, c) mit auf diese Frequenzbänder abgestimmten HF-ZF-Teilen (12a, 12b, 12) in der Weise ergänzt ist, dass jedem der Schaltelemente (S1, S2, S2, S3, S4) eine den Frequenzbändern entsprechende Vielzahl von Phasendrehgliedern ($\Phi1a$, $\Phi1b$, $\Phi1c$, bzw. $\Phi2a$, $\Phi2b$, $\Phi2c$ bzw. $\Phi3a$, $\Phi3b$, $\Phi3c$, bzw. $\Phi4a$, $\Phi4b$, $\Phi4c$) nachgeschaltet ist, wobei deren, den jeweiligen Frequenzbändern a, b, c zugeordnete Empfangssignale (E1a, E2a, E3a, E4a bzw. E1b, E2b, E3b, E4b bzw. E1c, E2c, E3c, E4c) in der jeweils zugeordneten Kombinationsschaltung (5a, 5b, 5c) zu einem kombinierten Signal (14a, 14b, 14c) zusammengefasst und dem entsprechenden HF-ZF-Teil (12a, 12b, 12c) zugeführt sind und die Gleichphasigkeit der in den Kombinationsschaltungen (5a, 5b, 5c) überlagerten Empfangssignale (E1a, E2a, E3a, E4a bzw. E1b, E2b, E3b, E4b bzw. E1c, E2c, E3c, E4c) für alle Frequenzbänder (a, b, c) in Pegelprüfzyklus- Zeitabständen (Tz) aktualisiert ist.

11. Empfangsanlage nach Anspruch 4 bis 9,
**dadurch gekennzeichnet, dass**
die Empfängerschaltung (2) durch einen serienmäßig hergestellten Empfänger mit einem Eingang zum Empfang eines Funkkanals gestaltet ist und eine davon getrennte Diversityeinheit (26) vorhanden ist, welche eingangsseitig mit den Antennen (A1, A2...AN) und ausgangsseitig über eine Empfängerleitung (28) mit der Empfängerschaltung (2) verbunden ist, und in der Diversityeinheit (26) der Pegelindikator (6), die Rechnereinrichtung (7), die Schaltelemente (S1, S2,..) die Phasendrehglieder ($\Phi1$, $\Phi2$,..) die Kombinationsschaltung (5) und ein HF-ZF-Teil (12) vorhanden ist, dem eingangsseitig das kombinierte Signal (14) zugeführt ist und dessen Ausgangssignal an den Pegelindikator (6) weitergegeben wird und das kombinierte Signal (14) über die Empfängerleitung (28) an die Empfängerschaltung (2) weitergeleitet ist.

12. Empfangsanlage nach Anspruch 10 und 11,
**dadurch gekennzeichnet, dass**
jedoch die Empfängerschaltung (2) durch einen serienmäßig hergestellten Empfänger mit einem Eingang zum Empfang von mindestens zwei in der Frequenz unterschiedlichen Satellitenfunkkanälen gestaltet ist und in der davon getrennten Diversityeinheit (26) jeweils ein, einem der Satellitenfunkanäle zugeordneter HF-ZF-Teil (12 a, b) vorhanden ist, dem eingangsseitig das kombinierte Signal (14) zugeführt ist und dessen Ausgangssignal jeweils an den zugeordneten Pegelindikator (6a, b) weitergegeben ist und das kombinierte Signal (14) zum Empfang der Satellitensignale über die Empfängerleitung (28) an die Empfängerschaltung (2) weitergeleitet ist.

**13.** Empfangsanlage nach Anspruch 12,
**dadurch gekennzeichnet, dass**
an Stelle der getrennten HF-ZF-Teile (12a, b) ein Mehrkanal-Frequenzumsetzer (22) zur gemeinsamen Frequenzumsetzung der verschiedenen hochfrequenten Satellitensignale in voneinander verschiedene Frequenzen in einer niedrigen Frequenzebene (Zwischenfrequenzebene) eingesetzt ist, welchem Bandpässe (23a, b) zur Trennung dieser in der Frequenz unterschiedlichen Signale am Ausgang nachgeschaltet sind und die Pegel dieser Signale mit getrennten Pegelindikatoren (6a, b) gesondert festgestellt und der Rechnereinrichtung (7) zugeführt sind.

**14.** Empfangsanlage nach Anspruch 13,
**dadurch gekennzeichnet, dass**
an Stelle des Mehrkanal-Frequenzumsetzers (22) ein steuerbarer Monokanal-Frequenzumsetzer (24) zur alternativen Einstellung auf die Frequenz des jeweils primärseitig vorhandenen hochfrequenten Satelliten Empfangssignals in der Weise eingesetzt ist, dass an seinem Ausgang ein Signal in der niedrigen Frequenzebene entsteht, welches über den Bandpass (23) dem einzigen Pegelindikator (6) zugeführt ist und in der Rechnereinrichtung (7) Kanalwahlsignale (25a bzw. 25b) erzeugt sind, welche sowohl den Takt entsprechend den Pegelprüfzyklus- Zeitabständen (Tz) als auch die Auswahl des jeweils zu prüfenden Signals für die beiden Satellitenkanäle vorgeben.

**15.** Empfangsanlage nach Anspruch 14,
**dadurch gekennzeichnet, dass**
jedoch in der durch den serienmäßig hergestellten Empfänger gebildeten Empfängerschaltung (2) eine Vorrüstung zur nachträglichen Erweiterung der Empfangsanlage in der Weise gebildet ist, dass die in der niedrigen Frequenzebene befindlichen Ausgangssignale den dort vorhandenen HF-ZF-Teilen (12a,b,c) einem getakteten Pegelprüfumschalter (17) zugeführt sind, welcher die in ihrem Pegel zu prüfenden Satelliten Empfangssignale alternativ zum einzigen Pegelindikator (6) durchschaltet, welcher vom Mikroprozessor (18) über Taktsignale (27) zur Erzeugung der Prüfzyklen angesteuert ist und die vom Pegelindikator (6) an den Mikroprozessor (18) abgegebenen Pegelsignale (4) dort verarbeitet und in Form von Digitalsignalen (19) über Frequenzweichen (21) und die Empfängerleitung (28) einer in der getrennten Diversityeinheit (26) befindlichen einfachen Schaltlogik (20) zugeführt sind, in welcher die Phaseneinstellsignale (9) zur Einstellung der Phasendrehglieder (Φ1, Φ2..) und die Schalterstellsignale (15) zur Einstellung der Schaltelemente (S1, S2..) erzeugt sind.

**16.** Empfangsanlage nach Anspruch 4 bis 14,
**dadurch gekennzeichnet, dass**
ein Algorithmus (16) mit der Eigenschaft vorhanden ist, dass die Phasendifferenzen ($\alpha$i) zwischen der Phase (Φnorm) des vor Auftreten des Pegelprüfzyklus-Signals (10) am Ausgang der Kombinationsschaltung (5) vorliegenden kombinierten Signals (Enorm) und den Phasen (Φi) der Empfangssignale (E1, E2...) der einzelnen Antennen (Ant1, Ant2...) rechnerisch ermittelt sind und dass an Hand dieser Phasendifferenzen ($\alpha$i) durch Einstellung der Phasendrehglieder (Φ1, Φ2..) die Phasen der Empfangssignale (Φi) jeweils in die Phasenlage (Φnorm) des vor Auftreten des Pegelprüfzyklus-Signals (10) am Ausgang der Kombinationsschaltung (5) vorliegenden kombinierten Signals ($E_{norm}$) gedreht sind.

**17.** Empfangsanlage nach Anspruch 4 bis 16,
**dadurch gekennzeichnet, dass**
zur Vermeidung von Mehrdeutigkeiten bezüglich der rechnerisch zu ermittelnden Phasendifferenzen ($\alpha$i) im Rahmen eines Pegelprüfzyklus die Phase (Φi) mindestens eines der Empfangssignale (E1, E2...) um einen vorgegebenen Phasenveränderungswert (Φt) verändert eingestellt ist und aus den dabei festgestellten Pegelmessproben (8) die tatsächlich zutreffenden Phasendifferenzen ($\alpha$i) rechnerisch ermittelt sind.

**18.** Empfangsanlage nach Anspruch 4 bis 16,
**dadurch gekennzeichnet, dass**
Phasendrehglieder (Φ1, Φ2, ..) verwendet sind, deren Phasendrehwinkel fest eingestellte, diskrete Werte besitzen, wobei insbesondere ausschließlich Phasendrehglieder (Φ1, Φ2, ..) verwendet sind, deren Phasendrehwinkel fest eingestellte, diskrete Werte besitzen, so dass für das betreffende im MPSK System alle Phasenwinkel des Winkelraums von 360° mit einer vorgegebenen Schrittweite von 360°/(M*A) diskret einstellbar sind, und die Winkelauflösung A zur Vermeidung von Detektionsfehlern der Symbole hinreichend groß gewählt ist, insbesondere nicht kleiner gewählt ist als A = 1.

**19.** Empfangsanlage nach Anspruch 18,
**dadurch gekennzeichnet, dass**

für ein MPSK System zur Einstellung aller Winkel in 360°/(M*A) Schritten über einen Winkelraum von 360° Phasendrehglieder (Φ1, Φ2, ..) verwendet sind, deren Winkeldifferenz der fest eingestellten Phasen 360°/(M*A) beträgt mit einer Auflösung A von mindestens A = 1, vorzugsweise jedoch mit A = 2.

20. Empfangsanlage nach Anspruch 18 und 19,
**dadurch gekennzeichnet, dass**
bei Vorhandensein von vier Antennen (A1..A4) jeweils zwei der Antennensignale als Paar über zwei Schaltelemente (S1,. S2..) zu einem gemeinsamen Knotenpunkt zum Zwecke des Pegeltests wechselweise durchgeschaltet werden und jedem der beiden Signalknotenpunkte ein Phasendrehglied (Φ1, Φ2, ..) nachgeschaltet ist, dessen Ausgangssignal jeweils der Kombinationsschaltung (5) zugeführt ist und die beiden Ausgangssignale im kombinierten Signal (14) gleichphasig überlagert sind, wobei von jedem Antennenpaar das Signal mit dem größeren Pegel durchgeschaltet ist.

21. Empfangsanlage nach Anspruch 4 bis 20,
**dadurch gekennzeichnet, dass**
bei Vorhandensein von drei Antennen (A1..A3) die Antennensignale Schaltelementen (S1, S2, ..) in der Weise zugeführt sind und deren Ausgänge mit zwei Phasendrehgliedern (Φ1, Φ2) in der Weise verbunden sind, dass bei den gewählten Schaltstellungen der Schaltelemente (S1, S2, ..) für jede mögliche Paarbildung aus den vorhandenen Antennensignalen deren Pegel aus Pegeltests ermittelt sind und das kombinierte Signal (14) aus der gleichphasigen Überlagerung der beiden Antennensignale mit dem größten Pegel gebildet ist.

22. Empfangsanlage nach Anspruch 12,
**dadurch gekennzeichnet, dass**
bei hinreichendem Frequenzabstand der Funkkanäle an Stelle des jeweils einem der Satellitenfunkkanäle zugeordneten HF-ZF-Teils (12 a, b) jeweils ein HF-Filter (29a, b) zur Trennung der beiden Kanäle vorhanden ist.

23. Empfangsanlage nach Ansprüchen 12, 13, 14 und 22,
**dadurch gekennzeichnet, dass**
die Ausgangssignale der beiden HF-ZF-Teile (12 a, b) bzw. der beiden HF-Filter (29a,b) bzw. der beiden Bandpässe (23a,23b) einem Kanalwahl-Schalter (30) zugeführt sind, an dessen Ausgang jeweils das Signal des betreffenden Frequenzkanals dem einzigen Pegelindikator (6) zugeführt ist und der Kanalwahl-Schalter (30) durch die in der Rechnereinrichtung (7) generierten Kanalwahlsignale (31) entsprechend gesteuert ist.

24. Empfangsanlage nach Ansprüchen 4 bis 23,
**dadurch gekennzeichnet, dass**
zur Ermittlung des Phasendrehwinkels (αi) zwischen dem Summensignal Enorm der bereits gleichphasig überlagerten Antennensignale vor Beginn des Testzyklus und dem mit diesem gleichzuphasenden Antennensignal Ei nach Betrag und Vorzeichen bei vier verschiedenen Teststellungen t1..t4 Pegel verschiedener Signale erfasst werden, wobei in der Teststellung t2 der Pegel At2=Ai des gleichzuphasenden Antennensignals Ei und in der Teststellung t3 der Pegel At3=As des Summensignals Es aller übrigen Antennensignale im Pegelindikator (6) festgestellt sind und in der Teststellung t1 der Pegel At1=Anorm des Summensignals Enorm dieser beiden Signale Ei und Es ermittelt ist und aus diesen drei Pegelwerten At1, At2 und At3 der Betrag des Winkels (αi) ermittelt ist und zur Unterscheidung der beiden möglichen Vorzeichen des Winkels (αi) in einer weiteren Teststellung t4 das Summensignal aus dem um den positiven Winkel von z.B. 90° gedrehten Signal Ei und dem Signal Es gebildet und der Pegel At4 dieses Summensignals gemessen ist und aus dem geometrischen Zusammenhang daraus rechnerisch das wahre Vorzeichen des Winkels (αi) ermittelt ist.

25. Empfangsanlage nach Ansprüchen 4 bis 24,
**dadurch gekennzeichnet, dass**
zur Überprüfung der Plausibilität des ermittelten Wertes des Phasenwinkels (αi) des i-ten Antennensignals der Unterschied dieses Winkels zwischen in aufeinander folgenden Zeitabständen Tz gemessenen Werten ermittelt ist und bei Überschreitung eines für die Plausibilität geforderten Winkelunterschieds durch wiederholte Ermittlungen des Phasenwinkels (αi) der plausible Wert ermittelt ist und die Zeitabstände Tz derart gewählt sind, dass der in einem Zeitabstand Tz zurückgelegten Fahrweg nicht grösser als 1/20 der Länge der hochfrequenten Trägerwelle ist.

26. Empfangsanlage nach Ansprüchen 2 bis 25,
**dadurch gekennzeichnet, dass**
zur Feststellung der Notwendigkeit der Gleichphasung der Antennensignale in aufeinander folgenden Zeitabständen Tz der Pegel des kombinierten Signals (14) gemessen ist und nur bei Unterschreitung des für die sichere Detektion im Empfänger notwendigen Minimalpegels dieses Signals (14) der Zyklus zur Gleichphasung der Antennen durchgeführt ist, anderenfalls die aktuelle Einstellung der Phasendrehglieder ($\Phi1$, $\Phi2$, ..) unverändert bleibt.

**Claims**

1. A method for the determination by means of calculation of phase differences between current complex amplitudes of different frequency-modulates or phase-modulated high-frequency signals only from their amplitude magnitudes and from the subsequent phase matching and positive superposition of antenna signals in a reception system for vehicles comprising a multi-antenna system (1) having at least two antennas (Ant1, Ant2, ...), having a device ($\Phi1$, $\Phi2$, ...) for the phase matching, and having a downstream receiver circuit (2), comprising the following steps:

   - measuring the amplitude $A_i$ of a first reception signal $E_i$ of the antenna i;
   - measuring the amplitude $A_{norm}$ of a superposed signal $E_{norm}$ that represents the sum of all reception signals E1, E2, ... including the first reception signal $E_i$;
   - measuring the amplitude $A_s$ of a superposed signal that represents the sum of all reception signals E1, E2, ... excluding the first reception signal $E_i$;
   - determining by means of calculation the phase differences $\alpha_i$ between the complex amplitude $\underline{A}_i$ of the first reception signal $E_i$ and the complex amplitude $\underline{A}_{norm}$ of the superposed signal $E_{norm}$ from the amplitudes $A_i$, $A_{norm}$ and $A_s$;
   - matching the phase of the reception signal $E_i$ to the phase of the superposed signal $E_{norm}$ using the determined phase difference $\alpha_i$ such that the maximum amplitude of the superposition of the reception signals is supplied to the receiver circuit (2).

2. A method for the determination by means of calculation of phase differences between current complex amplitudes of different frequency-modulated or phase-modulated high-frequency signals only from their amplitude magnitudes and from the subsequent phase matching and positive superposition of antenna signals in a reception system for vehicles comprising a multi-antenna system (1) having at least two antennas (Ant1, Ant2, ...), having a device ($\Phi1$, $\Phi2$, ...) for the phase matching, and having a downstream receiver circuit (2), comprising the following steps:

   - measuring the amplitude $A_{norm}$ of a superposed signal $E_{norm}$ of all antennas that represents the sum of a plurality of reception signals E1, E2, ..., including a first reception signal $E_i$ of the antenna i;
   - determining the phase difference $\alpha_i$ between the first reception signal $E_i$ and the combined signal $E_{norm}$ by the following steps:

      a) rotating the phase of the first reception signal $E_i$ by a known angle $-\Delta\Phi_{t2}$;
      b) subsequent measurement of the amplitude $A_{t2}$ of the superposed signal arising therefrom;
      c) rotating the phase of the first reception signal $E_i$ by another known angle $\Delta\Phi_{t3}$;
      d) subsequent measurement of the amplitude $A_{t3}$ of the superposed signal arising therefrom;

   - determining by means of calculation the phase difference $\alpha_i$ from the amplitudes $A_{norm}$, $A_{t2}$ and $A_{t3}$ and from the known phase angles $-\Delta\Phi_{t2}$ and -; and
   - matching the phase of the reception signal $E_i$ to the phase of the superposed signal $E_{norm}$ using the determined phase difference $\alpha_i$ such that the maximum amplitude of the superposition of the reception signals is supplied to the receiver circuit (2).

3. A method for the determination by means of calculation of phase differences between current complex amplitudes of different frequency-modulated or phase-modulated high-frequency signals only from their amplitude magnitudes and from the subsequent phase matching and positive superposition of antenna signals, comprising the following steps:

   - measuring the amplitude $A_{t2}$ of a first reception signal $E_i$ of the antenna i;
   - measuring the amplitude $A_{norm}$ of a superposed signal $E_{norm}$ of all antennas that represents the sum of a plurality of reception signals E1, E2, ... including the first reception signal $E_i$;
   - determining the phase difference $\alpha_i$ between the first reception signal $E_i$ and the combined signal $E_{norm}$ by the following steps:

a) rotating the phase of the first reception signal $E_i$ by the angle $\Delta\Phi_t = -90°$;
b) subsequent measurement of the amplitude $A_{t3}$ of the superposed signal arising therefrom;
c) rotating the phase of the first reception signal $E_i$ by the angle $\Delta\Phi_t = +90°$;
d) subsequent measurement of the amplitude $A_{t4}$ of the superposed signal arising therefrom;

- determining by means of calculation the phase difference $\alpha_i$ from the amplitudes $A_{norm}$, $A_{t2}$, $A_{t3}$ and $A_{t4}$ and from the known phase angles $\Delta\Phi_t = -90°$ and $\Delta\Phi_t = +90°$; and
- matching the phase of the reception signal $E_i$ to the phase of the superposed signal $E_{norm}$ using the determined phase difference $\alpha_i$ such that the maximum amplitude of the superposition of the reception signals is supplied to the receiver circuit (2).

4. A reception system for frequency-modulated high-frequency signals or for high-frequency signals modulated in phases for vehicles comprising a multi-antenna system (1) having at least two antennas (Ant1, Ant2, ...), having a respective one individually adjustable phase rotation element ($\Phi1$, $\Phi2$, ...) located in the reception path of the corresponding antenna and having a downstream receiver circuit (2) for carrying out the method in accordance with any one of the claims 1 to 3, comprising:

an individually adjustable switching element (S1, S2, ...) in the reception path of each antenna (Ant1, An2t2, ...) for switching through or interrupting a signal flow, wherein

- the reception signals (E1, E2) conducted via the phase rotation elements ($\Phi1$, $\Phi2$, ...) and the adjustable switching elements (S1, S2, ...) are supplied to a linear combination circuit (5) and the combined signal is supplied to the receiver circuit (2);
- a level indicator (6) for indicating the level of the combined signal (14) in the form of a level signal (4) and a calculation unit (7) to which this level signal (4) is supplied are present;
- an algorithm (16) is stored in the calculation unit (7) for determining by means of calculation the phase differences of the reception signals (E1, E2, ...) that are present at the input of the combination circuit (5) at a given setting of the phase rotation elements ($\Phi1$, $\Phi2$, ...) from their level conditions in a manner such that the determination of these phase differences by means of calculation is given on a basis of level measurement samples (8) of the level signal (4) that are performed one after the other in time and are obtained by way of switch setting signals (15) and phase setting signals (9) brought about by the calculation unit (7) in the case of differently defined settings of the switching elements (S1, S2, ...) or of the phase rotation elements ($\Phi1$, $\Phi2$, ...) respectively, and
- phase setting signals (9) are generated on the basis of the phase differences determined by means of calculation for the subsequent setting of the phase rotation elements ($\Phi1$, $\Phi2$, ...) for the phase matching of the reception signals (E1, E2, ...) that are present at the input of the combination circuit (5).

5. A reception system in accordance with claim 4,
**characterized in that**
a level test cycle generator (11) generates a level test cycle signal (10) that is supplied to the calculation unit (7) for the cyclical determination of level measurement samples (8) determined at different settings of the switching elements (4) or of the phase rotation elements ($\Phi1$, $\Phi2$, ...), said level measurement samples having a respective short level measurement duration (Tp) which is required for the level indication, and during which the setting of the switching elements (S1, S2) or of the phase rotation elements ($\Phi1$, $\Phi2$, ...) is respectively recorded and after an expiration of the level test cycle signal (10), phase setting signals (9) for setting the phase rotation elements ($\Phi1$, $\Phi2$, ...) for phase matching the reception signals (E1, E2, ...) located at an input of the combination circuit (5) are initiated.

6. A reception system in accordance with claim 4 and claim 5,
**characterized in that**
the phase matching of the reception signals (E1, E2, ...) located at the input of the combination circuit (5) by means of a repeated occurrence of level test cycle signals (10) at level test cycle time intervals (Tz) is continuously updated and these time intervals (Tz) are adapted to the time change in the reception conditions such that the phase changes of the reception signals (E1, E2, ...) caused by the change over time of the radio transmission channel during the test cycle time interval (Tz) are small enough to be tolerated with regard to reception interference.

7. A reception system in accordance with claim 6,
**characterized in that**
the time intervals (Tz) between the level test cycle signals (10) are selected to be sufficiently short such that a driving distance traveled during this time interval (Tz) is not more than 1/5 of the length of the high-frequency carrier wave.

8. A reception system in accordance with claim 7 for digitally modulated high-frequency signals according to the MPSK method,
**characterized in that**
the updating of the phase matching is given independent in time of the symbol cycle signals and frame signals of the MPSK modulation.

9. A reception system in accordance with claim 4 to claim 8,
**characterized in that**
N antennas (Ant1, Ant2, ..., AntN) and switching elements (S1, S2, ..., SN) are present in the multi-antenna system (1) and a level test cycle (10) is configured using the algorithm stored in the calculation unit (7) for the determination of the phase differences by means of calculation of the reception signals (E1, E2, ...) located at the input of the combination circuit (5) such that initially two level measurement samples (8) are obtained with alternative closing of two switching elements (S1, S2) of a first and a second antenna (Ant1, Ant2) and one level measurement sample (8) is obtained with a simultaneous closing of the switching elements (S1, S2) associated with these two antennas (Ant1, Ant2) with all other switching elements (S3, ..., SN) being switched open and the phase difference between the associated reception signals (E1, E2) located at the input of the combination circuit (5) is calculated from these three level measurement samples (8) and a phase matching of the two reception signals (E1, E2) is given by setting the phase rotation element ($\Phi2$); and **in that**, optionally, for the successive phase adaptation of the reception signal of a further antenna (Ant3), the switching elements (S1, S2) of the phase rotation elements ($\Phi1$, $\Phi2$) of the antennas (Ant1, Ant2) already set for the phase matching are switched in the same direction - while maintaining the setting of the phase rotation elements ($\Phi1$, $\Phi2$), and the two first antennas combined in this manner are set so that they enter into the place of the previous first antenna (Ant1) with regard to the sequence of the phase matching, and the switching element (S3) of the further antenna (Ant3) is set in accordance with the previous second antenna (Ant2) for determining corresponding level measurement samples (8) and phase matching the reception signals (E1, E2, E3) is achieved at the input of the combination circuit (5) by setting the phase rotation element ($\Phi3$) of the further antenna (Ant3) using the determined phase difference, and so on, until phase matching for all N reception signals (E1, E2, E3, ..., EN) is established by repetition of the procedure.

10. A reception system in accordance with claim 4 to claim 9,
**characterized in that**
the reception system is complemented for the reception of a plurality of different frequency bands (a, b, c) having HF-IF parts (12a, 12b, 12) tuned to these frequency bands such that each of the switching elements (S1, S2, S2, S3, S4) has a number of phase rotation elements ($\Phi1a$, $\Phi1b$, $\Phi1c$ or $\Phi2a$, $\Phi2b$, $\Phi2c$ or $\Phi3a$, $\Phi3b$, $\Phi3c$ or $\Phi4a$, $\Phi4b$, $\Phi4c$) corresponding to the frequency bands downstream of it, wherein their reception signals (E1a, E2a, E3a, E4a or E1b, E2b, E3b, E4b or E1c, E2c, E3c, E4c) associated with the respective frequency bands a, b, c are combined into a combined signal (14a, 14b, 14c) in the respective associated combination circuit (5a, 5b, 5c) and are supplied to the corresponding HF-IF part (12a, 12b, 12c), and wherein the magnitude of the phase matching of the reception signals (E1a, E2a, E3a, E4a or E1b, E2b, E3b, E4b or E1c, E2c, E3c, E4c) superposed in the combination circuits (5a, 5b, 5c) is updated for all the frequency bands (a, b, c) at level test cycle time intervals (Tz).

11. A reception system in accordance with claim 4 to claim 9,
**characterized in that**
the receiver circuit (2) is configured with a receiver manufactured in mass production and having an input for reception of a radio channel and a diversity unit (26) separate therefrom is provided which is connected with the antennas (A1, A2, ..., AN) on an input side and is connected with the receiver circuit (2) on the output side via a receiver line (28); and **in that** the level indicator (6), the calculation unit (7), the switching elements (S1, S2, ...), the phase rotation elements ($\Phi1$, $\Phi2$, ...), the combination circuit (5) and an HF-IF part (12) are present in the diversity unit (26), to which HF-IF part the combined signal (14) is supplied on the input side, and its output signal is forwarded to the level indicator (6); and **in that** the combined signal (14) is forwarded to the receiver circuit (2) via the receiver line (28).

12. A reception system in accordance with claim 10 and claim 11,
**characterized in that**
the receiver circuit (2) is, however, configured by a receiver manufactured in mass production and having an input for receiving at least two satellite radio channels differing in frequency; and **in that** a respective HF-IF part (12a, b) is present in the diversity unit (26) separate therefrom, to which HF-IF part the combined signal (14) is supplied at the input side and whose output signal is forwarded in each case to the associated level indicator (6a, b) and the combined signal (14) is forwarded to the receiver circuit (2) via the receiver line (28) for the reception of the satellite signals.

**13.** A reception system in accordance with claim 12,
**characterized in that**
in place of the separate HF-IF parts (12a, b) a multi-channel frequency converter (22) is used for a common frequency inversion of the different high-frequency satellite signals at mutually different frequencies in a low frequency level (intermediate frequency level), with band passes (23a, b) being provided downstream of said multi-channel frequency converter for separation of these signals having different frequencies at the output; and **in that** the level of these signals are determined separately using separate level indicators (6a, b) and are supplied to the calculation unit (7).

**14.** A reception system in accordance with claim 13,
**characterized in that**
in place of the multi-channel frequency converter (22) a controllable mono channel frequency converter (24) is used for an alternative setting to the frequency of the respective high-frequency satellite reception signal present at the primary side such that a signal in the low frequency level occurs which is supplied via the band pass (23) to the only level indicator (6); and **in that** channel selection signals (25a and 25b, respectively) are generated in the calculation unit (7) which determine both the cycle in accordance with the level test cycle time intervals (Tz) and the selection of the respective signal to be tested for the two satellite channels.

**15.** A reception system in accordance with claim 14,
**characterized in that**
a pre-equipping for a subsequent expansion of the reception system is, however, formed in the receiver circuit (2) formed by the receivers manufactured in mass production such that the output signals located in the low frequency level in the HF-IF parts (12a, b, c) present there are supplied to a clocked level test changeover switch (17) which alternatively switches through the receptions signals whose level is to be tested to the only level indicator (6) which is controlled by a microprocessor (18) via clock signals (27) and the level signals (4) output by the level indicator (6) to the microprocessor (18) are processed there and are supplied in the form of digital signals (19) via frequency switches (21) and the receiver line (28) to a simple switching logic (20) in which the phase setting signals (9) are generated for setting the phase rotation elements ($\Phi1$, $\Phi2$, ...) and the switch setting signals (15) are generated for setting the switch elements (S1, S2, ...), with the switching logic being present in the separate diversity unit (26).

**16.** A reception system in accordance with claim 4 to claim 14,
**characterized in that**
an algorithm (16) is present having the property that the phase differences ($\alpha i$) between the phase ($\Phi norm$) of the combined signal (Enorm) present at the output of the combination circuit (5) before the occurrence of the level test cycle signal (10) and the phases ($\Phi i$) of the reception signals (E1, E2, ...) of the individual antennas (Ant1, Ant2) are determined by means of calculation; and **in that** the phases of the reception signals ($\Phi i$) are each rotated into the phase position ($\Phi norm$) of the combined signal ($E_{norm}$) present at the output of the combination circuit (5) before the occurrence of the level test cycle signal (10), using these phase differences ($\alpha i$) by setting the phase rotation elements ($\Phi1$, $\Phi2$, ...).

**17.** A reception system in accordance with claim 4 to claim 16,
**characterized in that**,
to avoid ambiguities with respect to the phase differences ($\alpha i$) to be determined by means of calculation within the framework of a level test cycle, the phase ($\Phi i$) of at least one of the reception signals (E1, E2, ...) is set changed by a predefined phase change value ($\Phi t$) and the currently applicable phase differences ($\alpha i$) are determined by means of calculation from the level measurement samples (8) found in this respect.

**18.** A reception system in accordance with claim 4 to claim 16,
**characterized in that** phase rotation elements ($\Phi1$, $\Phi2$, ...) are used whose phase rotation angles have fixedly set, discrete values, with in particular only phase rotation elements ($\Phi1$, $\Phi2$, ...) being used whose phase rotation angles have fixedly set, discrete values such that, for the respective one in the MPSK system, all phase angles of the angle space of 360° can be set discretely with a predefined step width of 360°/(M*A); and **in that** the angle resolution A is selected sufficiently large to avoid detection errors of the symbols, and is in particular selected as not smaller than A = 1.

**19.** A reception system in accordance with claim 18,

**characterized in that**,
for an MPSK system, phase rotation elements ($\Phi 1$, $\Phi 2$...) are used for setting all angles in 360°/(M*A) steps over an angle space of 360° whose angle difference of the fixedly set phases amounts to 360°/(M*A) with a resolution A of at least A = 1, preferably, however, with A = 2.

20. A reception system in accordance with claim 18 and claim 19,
**characterized in that**,
on the presence of four antennas (A1 ... A4) two respective ones of the antenna signals are alternately switched through, as a pair via two switching elements (S1, S2, ...), to a common node point for the purpose of the level test and a phase rotation element ($\Phi 1$, $\Phi 2$, ...) is connected downstream of each of the two signal node points, with the output signal of the phase rotation element being supplied in each case to the combination circuit (5) and the two output signals being superposed in matched phase matching in the combined signal (14), with the signal having the larger level being switched through from each antenna pair.

21. A reception system in accordance with claim 4 to claim 20,
**characterized in that**,
on the presence of three antennas (A1 ... A3), the antenna signals are supplied to switching elements (S1, S2, ...) in a manner such, and their outputs are connected to two phase rotation members ($\Phi 1$, $\Phi 2$) in a manner such that, in the selected switch positions of the switching elements (S1, S2, ...) the level of each possible pair formation is determined from level tests for every possible pair formation from the present antenna signals; and **in that** the combined signal (14) is formed from the superposition of the phase matched two antenna signals having the largest level.

22. A reception system in accordance with claim 12,
**characterized in that**
a respective HF filter (29a, b) is present for separating the two channels in place of the respective HF-IF part (12a, b) associated with the satellite radio channels with a sufficient frequency distance of the radio channels.

23. A reception system in accordance with claim 12, claim 13, claim 14 and claim 22,
**characterized in that**
the output signals of the two HF-IF parts (12a, b) or of the two HF filters (29a, b) or of the two band passes (23a, 23b) are supplied to a channel selection switch (30) at whose output the respective signal of the respective frequency channel is supplied to the single level indicator (6); and **in that** the channel selection switch (30) is correspondingly controlled by the channel selection signals (31) generated in the calculation unit (7).

24. A reception system in accordance with claim 4 to claim 23,
**characterized in that**
levels of different signals are determined by amount and sign at four different test positions t1...4, for determining the phase rotation angle ($\alpha i$) between the sum signal Enorm of the antenna signals already superposed in phase matching before the start of the test cycle and the antenna signal Ei to be phased matched therewith, wherein, in the test position t2, the level At2=Ai of the antenna signal Ei to be matched in phase and, in the test position t3, the level At3=As of the sum signal Es of all remaining antenna signals are determined in the level indicator (6) and, in the test position t1, the level At1=Anorm of the sum signal Enorm of these two signals Ei and Es is determined and the amount of the angle ($\alpha i$) is determined from these three level values At1, At2 and At3 and, to distinguish the two possible signs of the angle ($\alpha i$), the sum signal is formed in a further test position t4 from the signal Ei rotated about the positive angle of e.g. 90° and from the signal Es and the level At4 of this sum signal is measured and the true sign of the angle ($\alpha i$) is determined by means of calculation from the geometrical relationship therefrom.

25. A reception system in accordance with claim 4 to claim 24,
**characterized in that**,
to check the plausibility of the determined value of the phase angle ($\alpha i$) of the ith antenna signal, the difference of this angle between values measured at consecutive time intervals Tz is determined and, on an exceeding of an angle difference required for the plausibility, the plausible value is determined by repeated determinations of the phase angle ($\alpha i$) and the time intervals Tz are selected such that the travel path traveled in a time interval Tz is not larger than 1/20 of the length of the high frequency carrier wave.

26. A reception system in accordance with claim 2 to claim 25,
**characterized in that**,

to determine the necessity of the phase matching of the antenna signals in consecutive time intervals Tz, the level of the combined signal (14) is measured and the cycle for the phase matching of the antennas is only carried out on a falling below of the minimal level of this signal (14) required for the safe detection in the receiver and otherwise the current setting of the phase rotation elements ($\Phi1$, $\Phi2$, ...) remains unchanged.

**Revendications**

1. Procédé pour la détermination par calcul de différences de phase entre des amplitudes complexes actuelles de différents signaux à haute fréquence qui sont modulés en fréquence ou en phase, uniquement à partir de leur valeurs d'amplitude, et pour la mise en phase successive et la superposition positive de signaux d'antenne dans une installation de réception pour véhicule avec une installation à antennes multiples (1) comprenant au moins deux antennes (Ant1, Ant2, ...), dans un système ($\Phi1$, $\Phi2$, ...) pour la mise en phase et un circuit récepteur (2) branché à la suite, comprenant les étapes suivantes :

   - on mesure l'amplitude $A_i$ d'un premier signal de réception $E_i$ de l'antenne i ;
   - on mesure l'amplitude $A_{norm}$ d'un signal de superposition $E_{norm}$, qui représente la somme de tous les signaux de réception E1, E2, ..., y compris le premier signal de réception $E_i$ ;
   - on mesure l'amplitude $A_s$ d'un signal de superposition, qui représente la somme de tous les signaux de réception E1, E2, ..., sans le premier signal de réception $E_i$ ;
   - on détermine par calcul la différence de phase $\alpha_i$ entre l'amplitude complexe $A_i$ du premier signal de réception $E_i$ et l'amplitude complexe $A_{norm}$ du signal de superposition $E_{norm}$ à partir des amplitudes $A_i$, $A_{norm}$ et $A_s$ ;
   - on égalise la phase du signal de réception $E_i$ à la phase du signal de superposition $E_{norm}$ en utilisant la différence de phase déterminée $\alpha_i$, de telle façon que l'on amène au circuit de réception (2) l'amplitude maximale de la superposition des signaux de réception.

2. Procédé pour la détermination par calcul de différences de phase entre des amplitudes complexes actuelles de différents signaux à haute fréquence qui sont modulés en fréquence ou en phase, uniquement à partir de leurs valeurs d'amplitude, et pour la mise en phase successive et la superposition positive de signaux d'antenne dans une installation de réception pour véhicule avec une installation à antennes multiples (1) comprenant au moins deux antennes (Ant1, Ant2, ...), dans un système ($\Phi1$, $\Phi2$, ...) pour la mise en phase et un circuit récepteur (2) branché à la suite, comprenant les étapes suivantes :

   - on mesure l'amplitude $A_{norm}$ d'un signal de superposition $E_{norm}$ de toutes les antennes, qui représente la somme de plusieurs signaux de réception E1, E2, ... y compris d'un premier signal de réception $E_i$ de l'antenne i ;
   - on détermine la différence de phase $\alpha_i$ entre le premier signal de réception $E_i$ et le signal combiné $E_{norm}$ par les étapes suivantes :

      a) on fait tourner la phase du premier signal de réception $E_i$ d'un angle connu $\Delta\Phi_{t2}$,
      b) on mesure ensuite l'amplitude $A_{t2}$ du signal de superposition qui en résulte,
      c) on fait tourner la phase du premier signal de réception $E_i$ d'un autre angle connu $\Delta\Phi_{t3}$,
      d) on mesure ensuite l'amplitude $A_{t3}$ du signal de superposition qui en résulte ;

   - on détermine par calcul la différence de phase $\alpha_i$ à partir des amplitudes $A_{norm}$, $A_{t2}$ et $A_{t3}$ et des angles de phase connus -$\Delta\Phi_{t2}$ et $\Delta\Phi_{t3}$ ; et
   - on égalise la phase du signal de réception $E_i$ à la phase du signal de superposition $E_{norm}$ en utilisant la différence de phase déterminée $\alpha_i$, de telle façon que l'on amène à un circuit récepteur (2) l'amplitude maximale de la superposition des signaux de réception.

3. Procédé pour la détermination par calcul de différences de phase entre des amplitudes complexes actuelles de différents signaux à haute fréquence qui sont modulés en fréquence ou en phase, uniquement à partir de leurs valeurs d'amplitude, et pour la mise en phase successive et la superposition positive des signaux d'antenne, incluant les étapes suivantes :

   - on mesure l'amplitude $A_{t2}$ d'un premier signal de réception $E_i$ de l'antenne i ;
   - on mesure l'amplitude $A_{norm}$ d'un signal de superposition $E_{norm}$ de toutes les antennes, qui représente la somme de plusieurs signaux de réception E1, E2, ..., y compris le premier signal de réception $E_i$ ;
   - on détermine la différence de phase $\alpha_i$ entre le premier signal de réception $E_i$ et le signal combiné $E_{norm}$ par

les étapes suivantes :

    a) on fait tourner la phase du premier signal de réception $E_i$ de l'angle $\Delta\Phi_t$ = -90°,
    b) on mesure ensuite l'amplitude $A_{t3}$ du signal de superposition qui en résulte,
    c) on fait tourner la phase du premier signal de réception $E_i$ de l'angle $\Delta\Phi_t$ = +90°,
    d) on mesure ensuite l'amplitude $A_{t4}$ du signal de superposition qui en résulte ;

- on détermine par calcul la différence de phase $\alpha_i$ à partir des amplitudes $A_{norm}$, $A_{t2}$, $A_{t3}$ et $A_{t4}$, et des angles de phase connus $\Delta\Phi_t$ = -90° et $\Delta\Phi_t$ = +90° ; et
- on égalise la phase du signal de réception $E_i$ à la phase du signal de superposition $E_{norm}$ en utilisant la différence de phase déterminée $\alpha_i$ de telle façon que l'on amène à un circuit récepteur (2) l'amplitude maximale de la superposition des signaux de réception.

**4.** Installation de réception pour des signaux à haute fréquence qui sont modulés en fréquence ou qui sont modulés en phase pour des véhicules comprenant une installation à plusieurs antennes (1) avec au moins deux antennes (Ant1, Ant2, ...), comprenant respectivement un organe de rotation de phase ($\Phi$1, $\Phi$2, ...) situé dans le trajet de réception de l'antenne correspondante et réglable individuellement, et comprenant un circuit récepteur (2) branché à la suite, pour la mise en oeuvre du procédé selon l'une des revendications 1 à 3, comprenant :

un élément de commutation individuellement réglable (S1, S2, ...) dans le trajet de réception de chaque antenne (Ant1, Ant2, ...) pour laisser passer ou pour interrompre l'écoulement des signaux, dans laquelle

- les signaux de réception (E1, E2, ...) menés via les organes de rotation de phase ($\Phi$1, $\Phi$2, ...) et les éléments de commutation réglables (S1, S2, ...) sont amenés à un circuit de combinaison linéaire (5), et le signal combiné est amené au circuit récepteur (2),
- il est prévu un indicateur de niveau (6) pour indiquer le niveau du signal combiné (14) sous la forme d'un signal de niveau (4), et un système de calcul (7) auquel ce signal de niveau (4) est amené,
- dans le système de calcul (7) il est prévu un algorithme (16) pour la détermination par calcul des différences de phase des signaux de réception (E1, E2, ...) qui se présentent, pour un réglage donné des organes de rotation de phase ($\Phi$1, $\Phi$2, ...), à l'entrée du circuit de combinaison (5), à partir des rapports de leur niveau, de telle manière que la détermination par calcul de ces différences de phase est donnée au moyen d'échantillons de mesure de niveau (8) du signal de niveau (4) effectués temporellement les uns après les autres et récupérés via des signaux de commande de commutation (15) et des signaux de commande de phase (9) entraînés par le système de calcul (7) pour des réglages définis différents des éléments de commutation (S1, S2, ...) ou des organes de rotation de phase ($\Phi$1, $\Phi$2, ...), et
- au moyen des différences de phase déterminées par calcul, des signaux de commande de phase (9) sont générés pour le réglage successif des organes de rotation de phase ($\Phi$1, $\Phi$2), ...) pour la mise en phase des signaux de réception (E1, E2, ...) qui se présentent à l'entrée du circuit de combinaison (5) lors de la mise en situation passante des éléments de commutation réglables (S1, S2, ...).

**5.** Installation de réception selon la revendication 4,
**caractérisée en ce qu'**un générateur de cycle de contrôle de niveau (11) génère un signal de cycle de contrôle de niveau (10) qui est amené au système de calcul (7) pour la détermination cyclique d'échantillons de mesure de niveau (8), déterminés pour des réglages différents des éléments de commutation (4) ou respectivement des organes de rotation de phase ($\Phi$1, $\Phi$2, ...), échantillons qui sont respectivement d'une courte durée de mesure de niveau (Tp) nécessaire pour l'indication du niveau, pendant laquelle le réglage des éléments de commutation (S1, S2, ...) ou des organes de rotation de phase ($\Phi$1, $\Phi$2, ...) est respectivement maintenu de manière fixe et, après écoulement du signal de cycle de contrôle de niveau (10) des signaux de commande de phase (9) destinés au réglage des organes de rotation de phase ($\Phi$1, $\Phi$2, ...) destinés à la mise en phase des signaux de réception (E1, E2, ...) qui se présentent à l'entrée du circuit de combinaison (5) sont démarrés.

**6.** Installation de réception selon la revendication 4 et 5,
**caractérisée en ce que** la mise en phase des signaux de réception (E1, E2, ...) qui se présentent à l'entrée du circuit de combinaison (5) est actualisée en permanence par apparitions répétées de signaux de cycle de contrôle de niveau (10) à des écarts temporels de cycle de contrôle de niveau (Tz), et ces écarts temporels (Tz) sont adaptés à la variation temporelle des conditions de réception de telle façon que les variations de phase, provoquées par la variation temporelle du canal de transmission radio, des signaux de réception (E1, E2, ...) soient faibles et tolérables à l'égard des perturbations de réception pendant l'écart temporel (Tz) du cycle de contrôle de niveau.

**7.** Installation de réception selon la revendication 6,
**caractérisée en ce que** les écarts temporels (Tz) entre les signaux de cycle de contrôle de niveau (10) sont choisis suffisamment courts pour qu'un trajet de déplacement parcouru dans cet écart temporel (Tz) ne s'élève pas à plus de 1/5 de la longueur de l'onde porteuse à haute fréquence.

**8.** Installation de réception selon la revendication 7, pour des signaux à haute fréquence modulés par voie numérique selon la procédure MPSK,
**caractérisée en ce que** l'actualisation de la mise en phase est effectuée temporellement indépendamment des signaux de cadence symbolique et des signaux cadres de la modulation MPSK.

**9.** Installation de réception selon la revendication 4 à 8,
**caractérisé en ce que** N antennes (Ant1, Ant2...AntN) et N éléments de commutation (S1, S2... SN) sont présents dans l'installation à plusieurs antennes (1) et, au moyen de l'algorithme déposé dans le système de calcul (7) pour la détermination par calcul des différences de phase des signaux de réception (E1, E2, ...) qui se présentent à l'entrée du circuit de combinaison (5), un signal de cycle de contrôle de niveau (10) est conçu de telle manière que pour commencer deux échantillons de mesure de niveau (8) sont récupérés en fermant alternativement deux éléments de commutation (S1, S2) d'une première et d'une seconde antenne (Ant1, Ant2), et un échantillon de mesure de niveau (8) est récupéré en fermant simultanément les deux éléments de commutation (S1, S2) associés à ces antennes (Ant1, Ant2), alors que tous les autres éléments de commutation (S3, ..., SN) sont respectivement à l'état ouvert, et à partir de ces trois échantillons de mesure de niveau (8) la différence de phase entre les signaux de réception associés (E1, E2) qui se présentent à l'entrée du circuit de combinaison (5) est calculée et, par réglage de l'organe de rotation de phase Φ2) une mise en phase des deux signaux de réception (E1, E2) est donnée et **en ce que** le cas échéant pour la mise en phase successive du signal de réception d'une autre antenne (Ant3) les éléments de commutation (S1, S2) des organes de rotation de phase (Φ1, Φ2), déjà réglés pour la mise en phase, des antennes (Ant1, Ant2) sont commutées dans le même sens, en conservant le réglage des organes de rotation de phase (Φ1, Φ2), et les deux premières antennes (Ant1, Ant2) combinées de cette manière, pour ce qui concerne le déroulement de la mise en phase, prennent la place de celle qui était auparavant la première antenne (Ant1) et l'élément de commutation (S3) de l'autre antenne (Ant3) est réglé en correspondance de celle qui était auparavant la seconde antenne (Ant2) pour la détermination d'échantillons de mesure de niveau (8) correspondants et, par réglage de l'organe de rotation de phase Φ3) de l'autre antenne (Ant3) au moyen de la différence de phase déterminée, l'égalisation de phase des signaux de réception (E1, E2, E3) à l'entrée du circuit de combinaison (5) est atteinte, et ainsi de suite, jusqu'à ce que, par répétition de la procédure, l'égalisation de phase est établie pour tous les N signaux de réception (E1, E2, E3, ...EN).

**10.** Installation de réception selon la revendication 4 à 9,
**caractérisée en ce que** l'installation de réception est complétée, pour la réception de plusieurs gammes de fréquences différentes (a, b, c), avec des parties HF-ZF (12a, 12b, 12) accordées à ces gammes de fréquences, de telle manière qu'une pluralité, correspondante aux gammes de fréquences, d'organes de rotation de phase (Φ1a, Φ1b, Φ1c, ou Φ2a, Φ2b, Φ2c ou Φ3a, Φ3b, Φ3c, ou Φ4a, Φ4b, Φ4c) sont branchés à la suite de chacun des éléments de commutation (S1, S2, S3, S4), et leurs signaux de réception (E1a, E2a, E3a, E4a, ou E1b, E2b, E3b, E4b, ou E1c, E2c, E3c, E4c), associés aux gammes de fréquences respectives a, b, c) sont regroupés dans le circuit de combinaison respectivement associé (5a, 5b, 5c) en un signal combiné (14a, 14b, 14c) et sont amenés à la partie HF-ZF correspondante (12a, 12b, 12c), et la mise en phase des signaux de réception (E1a, E2a, E3a, E4a, ou E1b, E2b, E3b, E4b, ou E1c, E2c, E3c, E4c), superposés dans les circuits de combinaison (5a, 5b, 5c) est actualisée pour toutes les gammes de fréquences (a, b, c) dans les écarts temporels de cycle de contrôle de niveau (Tz).

**11.** Installation de réception selon la revendication 4 à 9,
**caractérisée en ce que** le circuit de réception (2) est réalisé par un récepteur produit en série avec une entrée pour la réception d'un canal radio, et il est prévu une unité à diversité (26) séparée de celui-ci, celle-ci étant reliée du côté entrée avec les antennes (A1, A2... AN) et du côté sortie avec le circuit récepteur (2) via une ligne de réception (28) et dans l'unité à diversité (26) sont prévus l'indicateur de niveau (6), le système de calcul (7), les éléments de commutation (S1, S2, ...), les organes de rotation de phase (Φ1, Φ2, ...), le circuit de combinaison (5) et une partie HF-ZF (12) à laquelle le signal combiné (14) est amené du côté entrée, et dont le signal de sortie est transféré à l'indicateur de niveau (6), et le signal combiné (14) est transféré via la ligne de réception (28) au circuit récepteur (2).

**12.** Installation de réception selon la revendication 10 et 11,
**caractérisée en ce que** le circuit récepteur (2) est cependant conçu par un récepteur produit en série avec une entrée pour la réception d'au moins deux canaux radio par satellite avec des fréquences différentes et dans l'unité à diversité (26) séparée de celui-ci il est prévu respectivement une partie HF-ZF (12a, 12b) associée à l'un des canaux radio par satellite, auxquelles est amené le signal combiné (14) du côté entrée, et dont le signal de sortie est respectivement transféré à l'indicateur de niveau associé (6a, 6b), et le signal combiné (14) est transféré au circuit récepteur (2) pour la réception des signaux satellites via la ligne de réception (28).

**13.** Installation de réception selon la revendication 12,
**caractérisée en ce qu'**à la place des parties HF-ZF (12a, 12b) séparées, il est prévu un convertisseur de fréquence à plusieurs canaux (22) pour la conversion de fréquence commune des différences signaux satellites à haute fréquence vers des fréquences différentes les unes des autres dans un plan de fréquences inférieures (plan de fréquence intermédiaire), convertisseur à la suite duquel sont branchés des passe-bandes (23a, 23b) pour la séparation de ces signaux de fréquences différentes à la sortie, et les niveaux de ces signaux sont constatés de manière particulière avec des indicateurs de niveau séparés (6a, 6b) et sont amenés au système de calcul (7).

**14.** Installation de réception selon la revendication 13,
**caractérisée en ce qu'**à la place du convertisseur de fréquence à plusieurs canaux (22) il est prévu un convertisseur de fréquence monocanal susceptible d'être commandé (24) pour le réglage alternatif à la fréquence du signal de réception satellite à haute fréquence respectif présent du côté primaire, de telle manière qu'il apparaît à sa sortie un signal dans le plan de fréquences inférieures, signal qui est amené à l'unique indicateur de niveau (6) via le passe-bande (23), et des signaux de sélection de canaux (25a ou 25b) sont engendrés dans le système de calcul (7), qui imposent aussi bien la cadence en correspondance des écarts temporels de cycle de contrôle de niveau (Tz) que la sélection du signal à contrôler pour les deux canaux satellites.

**15.** Installation de réception selon la revendication 14,
**caractérisée en ce que** dans le circuit récepteur (2) réalisé sous la forme d'un récepteur produit en série, il est réalisé un pré-équipement pour une extension postérieure de l'installation de réception, de telle manière que les signaux de sortie, qui se trouvent dans le plan de fréquences inférieures, des parties HF-ZF (12a, 12b, 12c) prévues à cet emplacement, sont amenés à un inverseur de contrôle de niveau cadencé (17) lequel laisse passer les signaux de réception satellite à contrôler quant à leur niveau, alternativement à l'unique indicateur de niveau (6), celui-ci étant piloté par le microprocesseur (18) via des signaux d'horloge (27) pour engendrer les cycles de contrôle et les signaux de niveau (4) fournis par l'indicateur de niveau (6) au microprocesseur (18) sont traités dans celui-ci et sont amenés, sous forme de signaux numériques (19) via des filtres de fréquence (21) et via la ligne de réception (28), à une logique de commutation (20) simple qui se trouve dans l'unité à diversité séparée (26), logique dans laquelle sont engendrés les signaux de réglage de phase (9) pour le réglage des organes de rotation de phase ($\Phi 1$, $\Phi 2$, ...) et les signaux de réglage de commutation (15) pour le réglage des éléments de commutation (S1, S2, ...).

**16.** Installation de réception selon la revendication 4 à 14,
**caractérisée en ce qu'**il est prévu un algorithme (16) avec pour propriété que les différences de phase ($\alpha_i$) entre la phase ($\Phi_{norm}$) du signal combiné ($E_{norm}$) qui se présente avant l'apparition du signal de cycle de contrôle de niveau (10) à la sortie du circuit de combinaison (5) et les phases ($\Phi_i$) des signaux de réception (E1, E2, ...) des antennes individuelles (Ant1, Ant2) sont déterminées par calcul et **en ce que**, au moyen de ces différences de phase ($\alpha_i$), par réglage des organes de rotation de phase ($\Phi_1$, $\Phi_2$,...), les phases des signaux de réception ($\Phi_i$) sont respectivement tournées jusque dans la position en phase ($\Phi_{norm}$) du signal combiné ($E_{norm}$) qui se présente avant l'apparition du signal de cycle de contrôle de niveau (10) à la sortie du circuit de combinaison (5).

**17.** Installation de réception selon la revendication 4 à 16,
**caractérisée en ce que** pour éviter des ambiguïtés pour ce qui concerne les différences de phase ($\alpha_i$) à déterminer par calcul, dans le cadre d'un cycle de contrôle de niveau, on règle de façon modifiée la phase ($\Phi_i$) de l'un au moins des signaux de réception (E1, E2,...) d'une valeur de modification de phase prédéterminée ($\Phi_t$) et les différences de phase ($\alpha_i$) effectivement pertinentes sont déterminées par calcul à partir des échantillons de mesure de niveau (8) ici constatés.

**18.** Installation de réception selon la revendication 4 à 16,
**caractérisé en ce que** l'on utilise des organes de rotation de phase ($\Phi_1$, $\Phi_2$, ...) dont l'angle de rotation de phase possède des valeurs discrètes fermement réglées et l'on utilise en particulier exclusivement des organes de rotation de phase ($\Phi_1$, $\Phi_2$), dont l'angle de rotation de phase possède des valeurs discrètes fermement réglées, de sorte que pour le système concerné MPSK tous les angles de phase de l'espace angulaire de 360° peuvent être réglés de façon discrète avec un pas prédéterminé de 360°/(M*A) et la résolution angulaire A, pour éviter des erreurs de détection des symboles, est choisie suffisamment élevée, et en particulier choisie pas plus petite que A = 1.

19. Installation de réception selon la revendication 18,
**caractérisée en ce que** pour un système MPSK, pour régler tous les angles par pas de 360°/(M*A) sur un espace angulaire de 360°, on utilise des organes de rotation de phase ($\Phi_1$, $\Phi2$, ...) dont la différence angulaire des phases fermement réglées s'élève à 360°/(M*A), avec une résolution A d'au moins A = 1, mais de préférence avec A = 2.

20. Installation de réception selon les revendications 18 et 19,
**caractérisée en ce qu'**en présence de quatre antennes (A1...A4) deux des signaux d'antennes respectifs sont mis alternativement en situation passante à titre de paires via deux éléments de commutation (S1, S2,...) pour donner un noeud commun dans le but du test de niveau, et à la suite de chacun des deux noeuds de signaux est branché un organe de rotation de phase ($\Phi_1$, $\Phi_2$, ...), dont le signal de sortie est respectivement amené au circuit de combinaison (5), et les deux signaux de sortie dans le signal combiné (14) sont superposés avec la même phase, et le signal présentant le niveau le plus élevé provenant de chaque paire d'antennes est transféré.

21. Installation de réception selon la revendication 4 à 20,
**caractérisée en ce qu'**en présence de trois antennes (A1...A3), les signaux d'antennes sont amenés à des éléments de commutation (S1, S2, ...) de telle manière, et dont les sorties sont reliées aux deux organes de rotation de phase ($\Phi1$, $\Phi2$) de telle façon que pour les deux positions de commutation choisies des éléments de commutation (S1, S2, ...), pour la formation de chaque paire possible, on détermine à partir des signaux d'antennes présents leur niveau à partir de tests de niveau, et le signal combiné (4) est formé par superposition avec la même phase des deux signaux d'antennes présentant le niveau le plus élevé.

22. Installation de réception selon la revendication 12,
**caractérisée en ce que** pour un écart de fréquence suffisant des canaux radio il est prévu à la place de la partie HF-ZF (12a, 12b) associée respectivement à l'un des canaux radio satellite, un filtre HF respectif (29a, 29b) pour la séparation des deux canaux.

23. Installation de réception selon les revendications 12, 13, 14 et 22,
**caractérisée en ce que** les signaux de sortie des deux parties HF-ZF (12a, 12b) ou respectivement des deux filtres HF (29a, 29b) ou encore des deux passe-bandes (23 a, 23b) sont amenés à un sélecteur de canaux (30) à la sortie duquel le signal du canal de fréquence concerné est respectivement amené à l'unique indicateur de niveau (6) et le sélecteur de canaux (30) est commandé de façon correspondante par les signaux de sélection de canaux (31) générés dans le système de calcul (7).

24. Installation de réception selon les revendications 4 à 23,
**caractérisée en ce que**, pour déterminer l'angle de rotation de phase ($\alpha_i$) entre le signal de somme Enorm des signaux d'antenne déjà superposés en phase avant le commencement du cycle de test, et le signal d'antenne Ei à mettre en phase avec celui-ci, on détecte, en valeur et en signe pour quatre emplacements de tests différents t1... t4, les niveaux de divers signaux, de sorte que dans la position de test t2 on constate dans l'indicateur de niveau le niveau At2 = Ai du signal d'antenne Ei à mettre en phase et dans la position de test t3 on détecte le niveau At3 = As du signal de somme Es de tous les autres signaux d'antenne, et que dans la position de test t1, on détermine le niveau At1 = Anorm du signal de somme Enorm de ces deux signaux Ei et Es et l'on détermine à partir de ces trois valeurs de niveau At1, At2 et At3, la valeur de l'angle ($\alpha$i) et, pour distinguer les deux signes possibles de l'angle ($\alpha$i), on forme dans un autre emplacement de test t4 le signal de somme avec le signal Ei tourné de l'angle positif de par exemple 90° et avec le signal Es, et le niveau At4 de ce signal de somme est mesuré et on détermine par calcul au moyen des associations géométriques le véritable signe de l'angle ($\alpha$i).

25. Installation de réception selon les revendications 4 à 24, **caractérisée en ce que** pour vérifier la plausibilité de la valeur déterminée de l'angle de phase ($\alpha$i) du i-ième signal d'antenne, on détermine la différence de cet angle entre des valeurs mesurées à des écarts temporels Tz mutuellement successifs et, lors d'un dépassement d'une différence angulaire exigée pour la plausibilité, on détermine, par détermination répétée de l'angle de phase ($\alpha$i), la valeur plausible et les écarts temporels Tz sont choisis de telle façon que le trajet parcouru dans un écart temporel Tz n'est pas plus important que 1/20 de la longueur de l'onde porteuse à haute fréquence.

26. Installation de réception selon les revendications 2 à 25, **caractérisée en ce que** pour constater la nécessité de la mise en phase du signal d'antennes dans des écarts temporels mutuellement successifs Tz, on mesure le niveau du signal combiné (14) et, uniquement en cas de passage au-dessous du niveau minimum nécessaire pour une détection assurée dans le récepteur, ce signal (14) du cycle pour la mise en phase des antennes est effectué, et dans les autres cas le réglage actuel des organes de rotation de phase (Φ1, Φ2, ...) reste sans modification.

Fig. 1

Fig. 2

EP 1 798 870 B1

Fig. 3a

Fig.3b

EP 1 798 870 B1

Fig. 4

Fig. 5a

Fig. 5b

Fig.6

Fig. 7

Fig. 8

Fig. 9

Fig. 10b

Fig. 10a

Fig. 11b

Fig. 11a

$$A_{norm} = \sqrt{P_{norm}}$$

$$A_s = \sqrt{P_s}$$

$$A_i = \sqrt{P_i}$$

$\varphi_{is}$

$\alpha_i$

($A_s$ bildet sich aus der Überlagerung aller Antennensignale außer dem Antennensignal i)

**Fig. 12**

$A_{t3}$

$A_i$

$A_s$

$\varphi_{is} + \Delta\varphi_{t3}$

**Fig. 11c**

Fig. 13

Fig. 14

EP 1 798 870 B1

Fig. 15

Fig. 16

EP 1 798 870 B1

Fig. 17

Kurve 1: Summenpegel, A=1
Kurve 2: Summenpegel, A=2
Kurve 3: Summenpegel, A$\rightarrow\infty$
Kurve 4: Pegel b. Auswahl d.größten Signals
Kurven 5: Antennen 1 und 2

Fahrweg/($\lambda$/2)

Fig.18

EP 1 798 870 B1

Phasenabweichung in Grad

Fig. 19a

Zielbereich

Fahrweg/(λ/2)

EP 1 798 870 B1

Fig. 19b

Phasenabweichung in Grad

Zielbereich

Fahrweg/(λ/2)

Fall1: α>0

$A_s$

$A_{t1}$

$A_i(=A_{t2})$  α$_i$

$A_s(=A_{t3})$

Fall2: α<0

$A_i$

−

α$_i$

$A_{t1}$

$A_s$

$A_s$

Fig. 20a

Fall1: α>0

$A_{i(gedreht)}$

$A_{t4}$

$A_i$

•

$A_s$

Fall2: α<0

$A_{i(gedreht)}$

$A_{t4}$

$A_i$

•

$A_s$

Fig. 20b

EP 1 798 870 B1

**IN DER BESCHREIBUNG AUFGEFÜHRTE DOKUMENTE**

**In der Beschreibung aufgeführte Patentdokumente**

- US 5517686 A
- US 4079318 A
- DE 4326843
- EP 1045472 A2
- EP 1126631 A2
- US 2003186660 A1
- EP 1274210 A1
- DE 10206385